# EUROPÄISCHE PATENTANMELDUNG

(11) **EP 4 817 818 A1**
(43) Veröffentlichungstag der Anmeldung: **07.10.2026**
(21) Anmeldenummer: 26167052.5
(22) Anmeldetag: 24.03.2026
(51) Int. Cl.: B25J 15/00, B23D 47/00, B23Q 1/25, B25J 13/00, B65G 47/00

(54) **HANDHABUNGSAGGREGAT, FERTIGUNGSANLAGE UND VERFAHREN ZUM POSITIONIEREN BZW. AUSRICHTEN EINES WERKSTÜCKS AUF EINER GRUNDSTRUKTUR**

(30) Priorität: 25.03.2025 DE 102025111566
(71) Anmelder: Weinmann Holzbausystemtechnik GmbH, 72813 St. Johann (DE)
(72) Erfinder: Eigenthaler, Andreas, 70197 Stuttgart (DE); Hoss, Horst, 72539 Pfronstetten (DE); Schroth, Christoph, 72649 Wolfschlugen (DE)
(74) Vertreter: Kohler Schmid Möbus Patentanwälte

(57) **Zusammenfassung**

Die Erfindung betrifft ein Handhabungsaggregat (1) zum Positionieren bzw. Ausrichten eines Werkstücks (160, 170, 180, 190) auf einer Grundstruktur (100), insbesondere zum Befestigen einer mehrteiligen Struktur (150) aus Holzelementen und/oder Holzwerkstoffelementen auf einem Holzrahmenelement (100). Das Handhabungsaggregat (1) umfasst eine erste Anlegeeinrichtung (10), wobei die erste Anlegeeinrichtung (10) eingerichtet ist, zumindest an einer Längsseite (161, 171, 181) des Werkstücks (160, 170, 180, 190) in Anlage gebracht zu werden, um das Werkstück (160, 170, 180, 190) in einer Längsrichtung (X) auf der Grundstruktur (100) zu positionieren bzw. auszurichten , und/oder eine zweite Anlegeeinrichtung (20), wobei die zweite Anlegeeinrichtung (20) eingerichtet ist, an einer Oberseite (165, 175, 185) des Werkstücks (160, 170, 180, 190) in Anlage gebracht zu werden, um das Werkstück (160, 170, 180, 190) in einer Höhenrichtung (Z) auf der Grundstruktur (100) zu positionieren bzw. auszurichten, wobei die erste Anlegeeinrichtung (10) in einer Querrichtung (Y) anpassbar an eine vordefinierte Breite des Werkstücks (160, 170, 180, 190) ausgestaltet ist und/oder wobei in der Höhenrichtung (Z) die erste Anlegeeinrichtung (10) und/oder die zweite Anlegeeinrichtung (20) relativ zueinander verstellbar ausgestaltet ist bzw. sind. Die Erfindung betrifft ferner eine Fertigungsanlage mit einem solchen Handhabungsaggregat als auch ein Verfahren zum Positionieren bzw. Ausrichten eines Werkstücks (160, 170, 180, 190) auf einer Grundstruktur (100), insbesondere zum Befestigen einer mehrteiligen Struktur (150) aus Holzelementen und/oder Holzwerkstoffelementen auf einem Holzrahmenwandelement (100).

## Beschreibung

Die Erfindung betrifft ein Handhabungsaggregat zum Positionieren bzw. Ausrichten eines Werkstücks auf einer Grundstruktur, insbesondere zum Befestigen einer mehrteiligen Struktur aus Holzelementen und/oder Holzwerkstoffelementen auf einem Holzrahmenelement nach dem Oberbegriff von Anspruch 1. Demnach umfasst das Handhabungsaggregat eine erste Anlegeeinrichtung, die eingerichtet ist, zumindest an einer Längsseite des Werkstücks in Anlage gebracht zu werden, um das Werkstück in einer Längsrichtung auf der Grundstruktur zu positionieren bzw. auszurichten, und/oder eine zweite Anlegeeinrichtung, die eingerichtet ist, an einer Oberseite des Werkstücks in Anlage gebracht zu werden, um das Werkstück in einer Höhenrichtung auf der Grundstruktur zu positionieren bzw. auszurichten. Des Weiteren betrifft die Erfindung eine Fertigungsanlage zum Positionieren bzw. Ausrichten eines Werkstücks auf einer Grundstruktur, insbesondere zum Befestigen einer mehrteiligen Struktur aus Holzelementen und/oder Holzwerkstoffelementen auf einem Holzrahmenelement nach Anspruch 25 und ein Verfahren zum Positionieren bzw. Ausrichten eines Werkstücks auf einer Grundstruktur, insbesondere zum Befestigen einer mehrteiligen Struktur aus Holzelementen und/oder Holzwerkstoffelementen auf einem Holzrahmenelement nach Anspruch 36.

Handhabungsaggregate dieser Art werden insbesondere im industriellen Fertighausbau verwendet. Im industriellen Fertighausbau werden Werkstücksysteme, insbesondere Wand-, Dach- oder Deckenmodule, in einer Produktionshalle mittels einer Fertigungsanlage vorgefertigt. Mit den Wand-, Dach- oder Deckenmodulen werden anschließend auf der jeweiligen Baustelle Fertighäuser aufgebaut. Die Vorfertigung der Wand-, Dach- oder Deckenmodulen in der Produktionshalle hat neben einer Zeitersparnis auf der Baustelle auch qualitative Vorteile, weil die Wand-, Dach- oder Deckenmodule unter konstanten klimatischen Bedingungen in einer Montagehalle gefertigt werden können. Die Wand-, Dach- oder Deckenmodule sind bevorzugt plattenförmige Holzrahmenelementsysteme. Die Holzrahmenelementsysteme bestehen üblicherweise aus einem sogenannten Obergurt (einem ersten Holzbalken) und einem dem Obergurt in der Querausrichtung des Holzrahmenelementsystems gegenüberliegenden Untergurt (einem zweiten Holzbalken). An den Längsenden des Holzrahmenelementsystems zwischen dem Obergurt und dem Untergurt werden je ein Ständer oder Pfosten (in der Regel ein dritter und vierter Holzbalken) angeordnet. Je nach Länge des Holzrahmenelementsystems werden weitere Ständer bzw. Pfosten zwischen den außenliegenden Ständern und Pfosten angeordnet. In die großen Zwischenräume zwischen Obergurt und Untergurt und den Ständern bzw. Pfosten werden bevorzugt zur Verbesserung der Stabilität des Holzrahmenelementsystems weitere sogenannte Stiele angeordnet und befestigt. Die Zwischenräume zwischen den Gurten, Ständern bzw. Pfosten und Stielen werden anschließend bevorzugt mit einem Isoliermaterial verfüllt, insbesondere wenn das Holzrahmenelementsystem als Außenwand eines Gebäudes fungieren soll. Auf einem solchen Holzrahmenelementsystem werden danach üblicherweise Holzlatten mit einem rechteckigen Querschnitt und mit einem vordefinierten Abstand von in der Regel 200 mm bis 625 mm mittels eines sogenannten Lattenschuhs, der nur für eine bestimmte Breite der Holzlatten ausgelegt ist, positioniert, ausgerichtet und mittels eines Befestigungsaggregats befestigt. Auf diesen Holzlatten werden danach Gipsplatte für ein Deckenmodul befestigt oder Dachziegeln für ein Dachmodul aufgelegt. Auf der Baustelle wird später manuell das gewünschte Außenfassadenmaterial an Außenwandmodulen befestigt. Als ein solches Außenfassadenmaterial wird von den Endkunden immer häufiger Holz ausgewählt, weil ökologische Fassaden aus Holz bzw. Holzwerkstoffen im Aufwärtstrend sind. Die Knappheit an Arbeitskräften führt zu einem erhöhten Automatisierungsdrang bei komplexen und zeitaufwendigen Tätigkeiten. Eine Fassadenmontage ist normalerweise eine Tätigkeit auf der jeweiligen Baustelle. Jedoch ist eine solche Außenmontage teurer und vom Wetter abhängig.

Es ist daher eine Aufgabe der vorliegenden Erfindung, die Fertigung von Holzrahmenelementsystemen für Fertighäuser, die eine Holzaußenfassade erhalten sollen, weiter zu optimieren. Diese Aufgabe wird erfindungsgemäß gelöst durch ein Handhabungsaggregat gemäß Anspruch 1, eine Fertigungsanlage gemäß Anspruch 27 und ein Verfahren gemäß Anspruch 38.

Das erfindungsgemäße Handhabungsaggregat wird zum Positionieren bzw. Ausrichten eines Werkstücks auf einer Grundstruktur, insbesondere zum Befestigen einer mehrteiligen Struktur aus Holzelementen und/oder Holzwerkstoffelementen auf einem Holzrahmenelement eingesetzt. Bei dem Werkstück handelt es sich bevorzugt um ein Brett, eine Latte, eine Leiste oder einen Rahmenschenkel. Im Fall von Fassaden aus Holz oder holzbasierten Werkstoffen werden in der Regel lattenförmige Werkstücke sogenannte Schalungslatten bzw. Schaltungsbretter verwendet. Gängige Schalungsabstände beim Fassadenbau sind grundsätzlich deutlich geringer als bei der Erzeugung einer Lattung, beispielsweise einer Unterkonstruktions- oder Dachlattung. Mittels des erfindungsgemäßen Handhabungsaggregats können Fassaden unter Verwendung der bisher verfügbaren Fertigungsanlagen und/oder -aggregate halbautomatisiert oder auch automatisiert hergestellt werden.

Bretter haben nach der für Bauholz geltenden DIN 4074 eine Dickenabmessung, die kleiner oder gleich 44 mm ist, und eine Breitenabmessung, die gleich oder größer 80 mm ist.

Latten haben nach dieser DIN 4074 eine Dickenabmessung, die ebenfalls kleiner oder gleich 44 mm ist, und eine Breitenabmessung, die kleiner 80 mm ist.

Leisten sind in der DIN 4074 nicht definiert. Es gibt jedoch typische oder traditionelle Maße, um Leisten von Latten zu unterscheiden. Die typischen oder traditionellen Maße einer Latte liegen für die Dickenabmessung zwischen 18 und 40 mm und für die Breitenabmessung zwischen 48 und 60 mm. Hingegen liegen die typischen oder traditionellen Maße einer Leiste für die Dickenabmessung zwischen 3 und 16 mm und für die Breitenabmessung kleiner 80 mm.

Rahmenschenkel sind üblicherweise bis zu drei Zoll breite und bis zu drei Zoll dicke längliche Holzwerkstücke.

Abweichend von den Maßen nach der DIN 4074 oder den üblichen Maßen für Rahmenschenkel können auch Bretter, Latten, Leisten oder Rahmenschenkel verwendet werden, die eine Dickenabmessung von 80 mm und mehr haben können, um mit den Brettern, Latten, Leisten oder Rahmenschenkel eine dreidimensionale Holzschalung mit unterschiedlich dicken Brettern, Latten, Leisten oder Rahmenschenkel zu erstellen, bei denen ein Unterschied zwischen der kleinsten Dicke und der größten Dicke 40 mm und mehr betragen kann. Die Breite der Bretter, Latten, Leisten oder Rahmenschenkel beträgt bevorzugt zwischen 2 cm und 20 cm und weiter bevorzugt zwischen 4 cm und 6 cm.

Die sechs Seiten solcher Werkstücke werden im Folgenden als Oberseite, Unterseite, Längsseiten (d.h. bedingt durch die längste Abmessung) und Endseiten (d.h. bedingt durch kleinste Fläche) benannt, wobei die Oberseite bei der gefertigten mehrteiligen Struktur nach außen ragt und die Unterseite oder eine Kante der Unterseite genutzt wird, um einen mechanischen Kontakt mit der Grundstruktur herzustellen, und somit primär als Auflagefläche des jeweiligen Werkstücks bezüglich der Grundstruktur dient.

Das Handhabungsaggregat umfasst die folgenden Bestandteile und ist wie folgt ausgestaltet:
Das Handhabungsaggregat umfasst eine erste Anlegeeinrichtung. Die erste Anlegeeinrichtung ist eingerichtet, zumindest an einer Längsseite des Werkstücks in Anlage gebracht zu werden, um das Werkstück in einer Längsrichtung auf der Grundstruktur zu positionieren bzw. auszurichten. Die erste Anlegeeinrichtung umfasst ein erstes Führungselement mit einer ersten Führungsfläche und bevorzugt ein zweites Führungselement mit einer parallel zu der ersten Führungsfläche orientierten zweiten Führungsfläche, die einen vordefinierten Abstand zu der ersten Führungsfläche hat, der passend zur Breitenabmessung der Werkstücke gewählt wird, die an der Grundstruktur angeordnet werden sollen. Die erste Führungsfläche und die zweite Führungsfläche, falls eine solche zweite Führungsfläche vorhanden ist, führen das Werkstück an der Längsseite des Werkstücks bzw. ggf. an den zwei gegenüberliegenden Längsseiten des Werkstücks. Das erste Führungselement und das zweite Führungselement, falls vorhanden, ist bzw. sind ferner vorgesehen, das Werkstück auf der Grundstruktur an einer vordefinierten Position mit einer vordefinierten Orientierung zu positionieren, um das Werkstück bevorzugt nachfolgend mit dem Handhabungsaggregat oder einem weiteren Handhabungsaggregat befestigen zu können. Die vordefinierte Orientierung wird bevorzugt parallel zu einer Außenkante der Grundstruktur gewählt. Es ist aber auch möglich, dass die vordefinierte Orientierung schräg und somit eine Längsachse des Werkstücks, die parallel zur Längsseite des Werkstücks verläuft, mit einem Winkel größer 0° und kleiner 90° zu einer Außenkante der Grundstruktur gewählt wird.

Die erste Anlegeeinrichtung ist derart gestaltet, dass sowohl ein erstes Werkstück mit einer ersten vordefinierten Dickenabmessung und ein zweites Werkstück mit einer zweiten vordefinierten Dickenabmessung, die insbesondere unterschiedlich zu der ersten vordefinierten Dickenabmessung und insbesondere doppelt so groß wie die erste vordefinierte Dickenabmessung ist, zeitlich nacheinander geführt und positioniert werden können. Somit ist ein manueller Austausch der ersten Anlegeeinrichtung bzw. ein Umbau der ersten Anlegeeinrichtung für unterschiedlich dicke Werkstücke nicht notwendig.

Die erste Anlegeeinrichtung ist ferner in einer Querrichtung an eine vordefinierte Breite des Werkstücks anpassbar. Dazu umfasst in einer ersten Ausführungsform die erste Anlegeeinrichtung eine Grundplatte, an der das erste Führungselement lösbar und in der Querrichtung versetzbar angeordnet ist und/oder das zweite Führungselement lösbar und in der Querrichtung versetzbar angeordnet sind. Somit sind für verschieden breite Werkstücke nicht unterschiedliche erste Anlegeeinrichtungen notwendig, sondern die erste Anlegeeinrichtung kann in einfacher Art und Weise umkonfiguriert werden.

In einer zweiten Ausführungsform ist bzw. sind das erste Führungselement in der Querrichtung federnd gelagert und/oder das zweite Führungselement in der Querrichtung federnd gelagert. Somit ist ein manueller Austausch der ersten Anlegeeinrichtung bzw. ein Umbau der ersten Anlegeeinrichtung für unterschiedlich breite Werkstücke nicht notwendig bzw. ein manueller Austausch der ersten Anlegeeinrichtung bzw. ein Umbau der ersten Anlegeeinrichtung ist erst dann notwendig, wenn die tatsächliche Breite des nächsten zu positionierenden Werkstücks außerhalb eines Toleranzbereiches von beispielsweise +/-2 mm um eine zuvor vordefinierte Breite der zuvor positionierten Werkstücke liegt.

Das Handhabungsaggregat umfasst ferner eine zweite Anlegeeinrichtung. Die zweite Anlegeeinrichtung ist eingerichtet, an einer Oberseite des Werkstücks in Anlage gebracht zu werden, um das Werkstück in einer Höhenrichtung auf der Grundstruktur zu positionieren bzw. auszurichten. Die zweite Anlegeeinrichtung erlaubt es, das jeweilige Werkstück auf der Grundstruktur in einer Ebene parallel zur Grundstruktur auszurichten und zu positionieren und zwar derart, dass das jeweilige Werkstück mit der Unterseite möglichst vollflächig bzw. zumindest an den vorgesehenen Auflagestellen, die bevorzugt durch eine Konterlattung der Grundstruktur gebildet wird, möglichst vollflächig auf der Grundstruktur aufliegt, um das Werkstück nachfolgend bevorzugt mit dem Handhabungsaggregat und einer darin angeordneten Befestigungseinrichtung oder einem separaten Befestigungsaggregat mit einer vordefinierten Orientierung und vordefinierten Eindringtiefe von Befestigungsmitteln befestigen zu können.

Die erste Anlegeeinrichtung und/oder die zweite Anlegeeinrichtung ist bzw. sind in der Höhenrichtung relativ zueinander verstellbar ausgestaltet. Diese Verstellbarkeit ermöglicht quasi zwei bevorzugte Relativpositionen zwischen der ersten Anlegeeinrichtung und der zweiten Anlegeeinrichtung. In einer ersten Relativposition, die auch als Grundposition bezeichnet werden kann und bei der sich die zweite Anlegeeinrichtung gegenüber der ersten Anlegeeinrichtung näher am Zentrum des Handhabungsaggregats befindet, wird bzw. werden die Führungsfläche(n) der ersten Anlegeeinrichtung bevorzugt vollständig genutzt, um das Werkstück am Ort der ersten Anlegeeinrichtung vorzupositionieren. In einer zweiten Relativposition, die auch als Arbeitsstellung bezeichnet werden kann und bei der sich die zweite Anlegeeinrichtung neben der bzw. den Führungsfläche(n) der ersten Anlegeeinrichtung befindet, wird nur ein Teilbereich, bevorzugt der am weitesten vom Zentrum des Handhabungsaggregats entfernt liegende Teilbereich, der Führungsfläche(n) der ersten Anlegeeinrichtung genutzt, um das Werkstück entlang einer oberen Kante des Werkstücks in der Längsrichtung des Werkstücks abzufahren, auszurichten und final zu positionieren.

Ein derartiges Handhabungsaggregat erlaubt es zum einen automatisiert Werkstücke für eine Holzfassade auf einem Holzrahmenelement zu führen, auszurichten und zu positionieren. Zum anderen hat ein solches Handhabungsaggregat den Vorteil, eine mehrteilige Holzfassade zu erstellen, bei der die einzelnen Werkstücke unterschiedlich dick oder breit sein können, ohne das ein Bediener das Handhabungsaggregat für verschieden dicke Werkstücke oder verschieden breits jeweils umbauen müsste. Bei Werkstücken, die an der einen Längsseite eine Nut und an der anderen Längsseite eine Feder umfassen, um eine Nut-Feder-Verbindung zwischen den Werkstücken herzustellen, ist die erste Anlegeeinrichtung bevorzugt nur mit einem Führungselement ausgestattet, das an einer Längsseite des Werkstücks in Anlage gebracht wird. Dadurch können auch unterschiedlich breite Werkstücke mit Nut und Feder ausgerichtet und positioniert werden, ohne das die erste Anlegeeinrichtung ausgetauscht oder umgebaut werden müsste.

Dadurch wird die Fertigung der mehrteiligen Strukturen von der Baustelle in eine Fabrikhalle mit gleichbleibenden Bedingungen verlagert, was die Erstellung eines Fertighauses auf der Baustelle beschleunigt und durch die Effizienzsteigerung bei der Vorfertigung insgesamt die Herstellungskosten für ein Fertighaus reduzieren kann. Durch die Erfindung kann der Vorfertigungsgrad erhöht und die Arbeit ins Werk der Holzrahmenelemente verlagert werden ohne Qualitätseinbußen zu haben oder sich durch die Vorfertigung Probleme auf der Baustelle zu schaffen. Durch eine Halbautomatisierung oder Vollautomatisierung kann auf eine datensatzbasierte Fertigung insbesondere bei Holzfassaden zurückgegriffen werden. Somit kann nach einer Sichtprüfung der Oberflächen bereits in der Fabrikhalle sichergestellt werden, dass die Holzrahmenelemente mit den Holzfassaden korrekt gefertigt sind und auf der Baustelle übereinander oder nebeneinander mit einem vordefinierten Orientierungs- und Abstandsmuster zueinander passen.

In einer bevorzugten Ausführungsform umfasst die erste Anlegeeinrichtung mindestens eines der beiden zuvor genannten Führungselemente, um mit der mindestens einen Längsseite des Werkstücks in Anlage zu kommen. Ferner umfasst die zweite Anlegeeinrichtung einen Anlegeabschnitt, der bevorzugt als Rollkörper und/oder Gleitkörper ausgestaltet ist, um mit der Oberseite des Werkstücks in Anlage zu kommen. Dabei definiert der Anlegeabschnitt eine im Wesentlichen parallel zur Oberseite des Werkstücks verlaufende Anlegeebene. Die Anlegeebene definiert dabei mit Ausnahme des darüber hinausragenden Führungselements oder der darüber hinausragenden Führungselemente der ersten Anlegeeinrichtung eine erste Grenzfläche des Handhabungsaggregats. Eine der Führungsfläche gegenüberliegenden Gegenfläche des Führungselements oder eines der Führungselement definiert eine zweite Grenzfläche des Handhabungsaggregats, wobei die erste Grenzfläche und die zweite Grenzfläche einen Raumbereich begrenzen, in den ein bereits aus einem weiteren Werkstück gefertigter Teil der mehrteiligen Teilstruktur beim Positionieren des Werkstücks gelangen kann. Das Wort Grenzfläche hat dabei die Bedeutung, dass das Handhabungsaggregat jenseits der jeweiligen Grenzfläche bis auf die explizit genannte Ausnahme zum Führungselement oder zu den Führungselementen keine Bestandteile enthält. Eine derartige Ausgestaltung des Handhabungsaggregats hat den Vorteil, dass keine anderen Elemente bzw. Komponenten des Handhabungsaggregats eine Positionierung des Werkstücks benachbart zum weiteren bereits an der Teilstruktur befestigten Werkstücks behindern können.

Benachbart bedeutet hier entweder eine Positionierung auf Kontakt zwischen dem Werkstück und dem weiteren Werkstück oder eine Positionierung mit einem vordefinierten Abstand zwischen dem Werkstück und dem weiteren Werkstück bevorzugt im Bereich von 1 mm bis 20 cm bzw. weiter bevorzugt im Bereich von 5 mm bis 10 cm und noch weiter bevorzugt im Bereich von 1 cm bis 5 cm.

Die Führungsfläche des Führungselements kann dabei zusammenhängend sein oder durch einzelne unterbrochene Segmente des Führungselements gebildet werden. Beide Varianten sind auch bei der Verwendung des ersten Führungselements, das an der ersten Längsseite des Werkstücks angreift, und des zweiten Führungselements, das an der gegenüberliegenden zweiten Längsseite des Werkstücks angreift, möglich.

In einer weiter bevorzugten Ausführungsform umfasst der Anlegeabschnitt der zweiten Anlegeneinrichtung mindestens zwei beabstandete Teilabschnitte, um das Werkstück entlang einer Längsachse und/oder einer Querachse des Werkstücks mindestens in zwei Bereichen der Oberseite des Werkstücks zu kontaktieren. In der Querachse des Werkstücks sind die Bereiche dabei bevorzugt so gewählt, dass in einer ersten Variante ein erster Bereich der Oberseite des Werkstücks zwischen der Mittelachse des Werkstücks und der ersten Längsseite und ein zweiter Bereich der Oberseite des Werkstücks zwischen der Mittelachse des Werkstücks und der zweiten Längsseite kontaktiert werden kann. In einer zweiten Variante kann ein erster Bereich der Oberseite des Werkstücks im Bereich der Mittelachse des Werkstücks, ein zweiter Bereich der Oberseite des Werkstücks zwischen der Mittelachse des Werkstücks und der ersten Längsseite und ein dritter Bereich der Oberseite des Werkstücks zwischen der Mittelachse des Werkstücks und der zweiten Längsseite kontaktiert werden. Durch dies Ausgestaltung des Anlegeabschnitts wird insbesondere verhindert, dass das Werkstück um die Mittelachse verkantet auf der Grundstruktur aufliegt.

In der Längsachse des Werkstücks sind die Bereiche dabei bevorzugt so gewählt, dass ein erster Bereich der Oberseite des Werkstücks im Bereich der Mittelachse des Werkstücks und im Bereich einer ersten Hälfte der Längsausdehnung der ersten Anlegeeinrichtung und ein zweiter Bereich der Oberseite des Werkstücks im Bereich der Mittelachse des Werkstücks und im Bereich einer zweiten Hälfte der Längsausdehnung der ersten Anlegeeinrichtung liegt. Diese Anordnung erlaubt es, dass ein möglicherweise entlang der Längsachse des Werkstücks gebogenes Werkstück durch die Kontaktierung in diesen zwei Bereichen trotz der Biegung möglichst plan auf der Grundstruktur ausgerichtet werden kann.

In einer weiteren bevorzugten Ausführungsform hat die Führungsfläche des Führungselements bzw. der zwei Führungselemente in einer Höhenachse senkrecht zur Oberseite des Werkstücks eine Längenabmessung, die im Wesentlichen einer vordefinierten maximalen Dicke der mit der ersten Anlegeeinrichtung auszurichtenden und zu führenden Werkstücke entspricht und bevorzugt 5 bis 15 mm kleiner als die vordefinierte maximale Dicke der auszurichtenden und zu führenden Werkstücke ist und weiter bevorzugt 8 bis 12 mm kleiner als die vordefinierte maximalen Dicke der auszurichtenden und zu führenden Werkstücke ist. Eine solche Ausgestaltung der Führungsfläche reduziert zum einen den Verstellweg zwischen der oben beschriebenen Grundposition und der oben beschriebenen Arbeitsstellung auf eine Länge, die maximal der größten Dicke der auszurichtenden und zu führenden Werkstücke entspricht. Zum anderen wird die Führungsfläche in der Höhenachse auf das notwendige Maß begrenzt, um Material für das Führungselement oder die beiden Führungselemente einzusparen.

In einer weiteren bevorzugten Ausführungsform umfasst das Handhabungsaggregat ferner eine Verstelleinrichtung, die dazu eingerichtet ist, eine Relativposition der ersten Anlegeeinrichtung und der zweiten Anlegeeinrichtung zueinander in der Höhenrichtung einzustellen. Die Verstelleinrichtung des Handhabungsaggregats ermöglicht es, das die jeweilige Relativposition mit hoher Präzision eingenommen werden kann und es keinen ungeplanten seitlichen Versatz zwischen der ersten Anlegeeinrichtung und der zweiten Anlegeeinrichtung geben kann. Nachfolgend wird beschrieben, wie mittels der Verstelleinrichtung die zweite Anlegeeinrichtung bewegt wird, während die erste Anlegeeinrichtung ortsfest in der Höhenrichtung an dem Handhabungsaggregat angeordnet ist. Es ist aber auch denkbar, dass die erste Anlegeeinrichtung bewegt wird, während die zweite Anlegeeinrichtung ortsfest in der Höhenrichtung an dem Handhabungsaggregat angeordnet ist oder das sowohl die erste Anlegeeinrichtung als auch die zweite Anlegeeinrichtung in der Höhenrichtung verstellbar an bzw. in dem Handhabungsaggregat angeordnet sind.

In einer weiteren bevorzugten Ausführungsform ist die Verstelleinrichtung derart eingerichtet, eine erste Endlage und eine zweite Endlage einzunehmen. Bei der ersten Endlage ist die zweite Anlegeeinrichtung gegenüber der ersten Anlegeeinrichtung zu einem inneren Bereich des Handhabungsaggregats zurückversetzt ist, so dass bevorzugt die zweite Anlegeeinrichtung in der Höhenrichtung angrenzend zu der Führungsfläche des mindestens einen Führungselements der ersten Anlegeeinrichtung angeordnet ist. Bei der zweiten Endlage ist die zweite Anlegeeinrichtung zu einem äußeren Bereich des Handhabungsaggregats nach außen verschoben, so dass bevorzugt die zweite Anlegeeinrichtung in der Höhenrichtung neben der Führungsfläche des mindestens einen Führungselements der ersten Anlegeeinrichtung angeordnet ist. Die Verstelleinrichtung ermöglicht folglich einen vordefinierten Kurzhub innerhalb des Handhabungsaggregats mit zwei Endlagen, die für die folgenden zwei Betriebsstellungen genutzt werden können:
Grundstellung: Zuführen des Werkstücks zum Handhabungsaggregat und Einführen bzw. Anlegen bzw. Heranführen des Werkstücks in bzw. an die erste Anlegeeinrichtung und an in die zweite Anlegeeinrichtung.
Arbeitsstellung: Positionieren und Ausrichten des Werkstücks im Bereich einer Oberseite des Werkstücks.

Der vordefinierter Kurzhub ermöglicht eine lineare Verstellmöglichkeit im Bereich von wenigen Zentimetern insbesondere im Bereich von 1 cm bis 10 cm und weiter bevorzugt im Bereich von 4 bis 6 cm in Abhängigkeit von einer vordefinierten maximalen Dicke der Werkstücke, für die das Handhabungsaggregat zum Positionieren und Ausrichten von Werkstücken vorgesehen ist.

Ein vordefinierter maximale Hub der Verstelleinrichtung zwischen der ersten Endlage und der zweiten Endlage ergibt sich in einem ersten Ausführungsbeispiel aus einer Differenz zwischen der vordefinierten maximalen Dicke der zu positionierenden und auszurichtenden Werkstücke in der Höhenrichtung und einer vordefinierten Länge von 5 bis 15 mm weiter bevorzugt von 8 bis 12 mm und noch weiter bevorzugt von 9,5 bis 10,5 mm bestimmt wird. Damit wird gewährleistet, dass auch bei einem Werkstück mit der vordefinierten maximalen Dicke die Führungsfläche oder die Führungsflächen der ersten Anlegeeinrichtung im Bereich der Oberseite des Werkstücks an der Längsseite oder an den Längsseiten in der Höhenrichtung zumindest über eine Länge von ca. 10 mm angreift bzw. angreifen, so dass das Werkstück sicher geführt, ausgerichtet und positioniert werden kann.

Alternativ wird der vordefinierte maximale Hub der Verstelleinrichtung zwischen der ersten Endlage und der zweiten Endlage durch eine Differenz zwischen der vordefinierten maximalen Dicke der zu positionierenden und auszurichtenden Werkstücke in der Höhenrichtung und einer vordefinierten minimalen Dicke der zu positionierenden und auszurichtenden Werkstücke in der Höhenrichtung bestimmt. Diese Ausführungsform erlaubt es insbesondere in der Arbeitsstellung, dass das Handhabungsaggregat einen ausreichenden Abstand zu dem bereits gefertigten Abschnitt der mehrteiligen Struktur einhält, um diesen Abschnitt beim Verfahren des Handhabungsaggregats entlang des zu positionieren Werkstücks nicht zu beschädigen.

In einer bevorzugten Ausführungsform umfasst die Verstelleinrichtung eine Antriebseinrichtung, die weiter bevorzugt eingerichtet ist, von einer externen Steuereinrichtung - also einer außerhalb des Handhabungsaggregats vorhandenen Steuereinrichtung - angesteuert zu werden. Die Antriebseinrichtung kann beispielsweise einen oder mehrere pneumatisch oder hydraulisch betriebene Antriebszylinder oder mindestens einen elektrischen Stellmotor umfassen. Die externe Steuervorrichtung kann beispielsweise eine Steuervorrichtung einer externen Bewegungseinheit wie beispielsweise eines Portal- oder Knickarmroboters sein, an dem das Handhabungsaggregat bewegbar in Bezug auf die Grundstruktur angeordnet ist, oder eine Steuervorrichtung einer übergeordneten Fertigungsanlage sein, in der das Handhabungsaggregat angeordnet ist. Die Antriebseinrichtung erlaubt eine vollautomatische relative Verstellung der erste Anlegeeinrichtung und/oder der zweiten Anlegeeinrichtung in der Höhenrichtung zueinander, wobei bevorzugt die zweite Anlegeeinrichtung gegenüber der ersten Anlegeeinrichtung verstellbar eingerichtet ist.

In einer weiter bevorzugten Ausführungsform umfasst das Handhabungsaggregat ferner eine Tragstruktur und eine Kopplungseinrichtung bevorzugt an einem ersten Haltekörper der Tragstruktur zur Kopplung des Handhabungsaggregats mit einer externen Bewegungseinheit. Die Kopplungseinrichtung ist dazu an einem ersten endseitigen Abschnitt der Tragstruktur angeordnet und die erste Anlegeeinrichtung und die zweite Anlegeeinrichtung sind dazu an einem zweiten endseitigen Abschnitt der Tragstruktur angeordnet. Ferner ist die erste Anlegeeinrichtung an einem zweiten Haltekörper der Tragstruktur angeordnet. Eine solche Anordnung erlaubt es, dass es das Handhabungsaggregat vollautomatisiert zu bewegen und zu positionieren, ohne dass die Kopplung zur externen Bewegungseinheit und Komponenten der externen Bewegungseinheit die Ausrichtung und Positionierung der Werkstücke mit der ersten Anlegeeinrichtung und der zweiten Anlegeeinrichtung behindert. Die erste Haltekörper und der zweite Haltekörper begrenzen somit das Handhabungsaggregat in der Längsrichtung und gewährleisten zusammen mit der mindestens einen Stange der Tragstruktur, bevorzugt mit vier zumindest annähernd in einem Rechteck angeordneten Stangen der Tragstruktur eine gewisse Stabilität des Handhabungsaggregats.

In einer ersten bevorzugten Variante befinden sich der erste endseitige Abschnitt der Tragstruktur und der zweite endseitige Abschnitt der Tragstruktur an entgegengesetzten Enden einer Längsachse des Handhabungsaggregats. Ein solches Handhabungsaggregat kann bevorzugt bei Bewegungseinheiten eingesetzt werden, die als Portalroboter ausgestaltet sind, wobei der Portalroboter das Handhabungsaggregat bevorzugt in einer vertikalen Richtung hängend hält.

In einer zweiten bevorzugten Variante befinden sich der erste endseitige Abschnitt der Tragstruktur an einem Ende einer ersten Längsachse des Handhabungsaggregats und der zweite endseitige Abschnitt der Tragstruktur an einem Ende einer zweiten Längsachse des Handhabungsaggregats, wobei sich die erste Längsachse und die zweite Längsachse im Schnittpunkt einen Winkel zwischen 45° und 135°, weiter bevorzugt zwischen 80° und 100° und noch weiter bevorzugt zwischen 85° und 95° bilden. Ein solches Handhabungsaggregat kann bevorzugt bei Bewegungseinheiten eingesetzt werden, die als Knickarmroboter ausgestaltet sind, wobei der Knickarmroboter aufgrund der Arme fähig ist, das Handhabungsaggregat größtenteils in Richtungen zwischen der vertikalen Richtung und einer horizontalen Richtung zu halten.

In einer weiter bevorzugten Ausführungsform umfasst die Tragstruktur mindestens eine Stange, welche sich insbesondere entlang einer Längsachse des Handhabungsaggregats erstreckt und bevorzugt an dem ersten Haltekörper und dem zweiten Haltekörper angeordnet ist. Dabei ist die Verstelleinrichtung derart ausgestaltet, dass die zweite Anlegeeinrichtung entlang der mindestens einen Stange geführt und verstellt werden kann. Die Stange ist dabei bevorzugt ein länglicher Zylinder mit rundem oder eckigem Querschnitt. Die Stange ermöglicht hierbei eine möglichst präzise Führung im Raum, so dass die Anlageebene der zweiten Anlegeeinrichtung, mit der die zweite Anlegeeinrichtung mit der Oberseite des Werkstücks in Kontakt tritt, präzise geführt wird und nicht verkanten kann, und somit die Ausrichtung und Positionierung des Werkstücks ebenfalls präzise erfolgen kann. Weiter bevorzugt umfasst die Tragstruktur zwei oder mehr voneinander beabstandete Stangen für die Führung der zweiten Anlegeeinrichtung, so dass auch jegliches Verdrehen der zweiten Anlegeeinrichtung um die Längsachse des Handhabungsaggregats verhindert wird.

In einer weiteren bevorzugten Ausführungsform umfasst das Handhabungsaggregat ferner eine auswechselbare Bearbeitungseinrichtung zur Bearbeitung des Werkstücks. Dazu bildet die Tragstruktur einen vordefinierten bevorzugt in der Längsachse des Handhabungsaggregats verstellbaren Hohlraum innerhalb des Handhabungsaggregats für eine Anpassung an eine Längsausdehnung der Bearbeitungseinrichtung aus. Ferner umfasst die Verstelleinrichtung mindestens ein Abstandselement zur Überbrückung des vordefinierten Hohlraums. Die zweite Anlegeeinrichtung ist hierbei an dem mindestens einen Abstandselement angeordnet. Eine solche Tragstruktur und Anordnung innerhalb des Handhabungsaggregats erlaubt es einen größeren flexibel einstellbaren Raumbereich innerhalb des Handhabungsaggregats freizuhalten bzw. bereitzuhalten, in dem unterschiedlich große Einrichtungen zur Bearbeitung des Werkstücks von verschiedenen Hersteller platziert und angeordnet werden können.

In einer weiteren bevorzugten Ausführungsform ist die Befestigungseinrichtung an der Verstelleinrichtung angeordnet und die Bearbeitungseinrichtung ist bevorzugt eine Befestigungseinrichtung zum Befestigen des Werkstücks an der Grundstruktur. Diese Ausgestaltung hat zum einen den Vorteil, dass die Befestigungseinrichtung synchron mit der zweiten Anlegeeinrichtung verstellt werden kann. Ferner erlaubt diese Ausführungsform, dass die Werkstücke mit dem Handhabungsaggregat nicht nur ausgerichtet und positioniert sondern auch die ausgerichteten und positionierten Werkstücke befestigt werden können, ohne das ein Bedarf für ein separates Befestigungsaggregat neben dem Handhabungsaggregat besteht.

Alternativ kann die Bearbeitungseinrichtung zur Bearbeitung des Werkstücks eine Zerspanungseinrichtung, eine Reinigungseinrichtung, eine Markierungseinrichtung oder eine Vermessungseinrichtung sein.

In einer weiteren bevorzugten Ausführungsform umfasst die Tragstruktur einen dritten Haltekörper, der entlang der mindestens einen Stange verschiebbar ist und wobei der dritten Haltekörper an der mindestens einen Stange in einer vordefinierten Höhenposition verklemmbar ist. Dabei wird die vordefinierte Höhenposition durch die Längsausdehnung der jeweils ausgewählten Bearbeitungseinrichtung in der Höhenrichtung bestimmt. Dies ermöglicht den Einsatz verschiedener Bearbeitungseinrichtung in dem Handhabungsaggregat ohne jeweils speziell ein Handhabungsaggregat für eine bestimmte Bearbeitungseinrichtung vorhalten zu müssen.

In einer weiteren bevorzugten Ausführungsform umfasst die Tragstruktur einen vierten Haltekörper. Dabei ist die Antriebseinrichtung zwischen dem dritten Haltekörper und dem vierten Haltekörper angeordnet und die Antriebseinrichtung ist eingerichtet, durch eine Verschiebung des vierten Halteköpers entlang der mindestens einen Stange die zweite Anlegeeinrichtung und bevorzugt die Bearbeitungseinrichtung in der Höhenrichtung zu verschieben. Dies erlaubt zum einen eine geführte präzise Verstellung der zweiten Anlegeeinrichtung. Zum anderen erlaubt dies eine synchrone Verstellung der zweiten Anlegeeinrichtung und der Bearbeitungseinrichtung, so dass die Bearbeitungseinrichtung keine separate Verstelleinrichtung benötigt.

In einer weiteren bevorzugten Ausführungsform, umfasst die Tragstruktur ferner einen fünften Haltekörper und mindestens eine weitere Stange. Dabei ist die mindestens eine weitere Stange an dem vierten Haltekörper mit einem ersten vordefinierten Längsabschnitt und an dem fünften Haltekörper mit einem zweiten vordefinierten Längsabschnitt verklemmbar. Die Verstelleinrichtung umfasst ferner mindestens ein Abstandselement zur Überbrückung des vordefinierten Hohlraums. Dabei ist das mindestens eine Abstandselement mit einem oberen Ende an dem fünften Haltekörper angeordnet und die zweite Anlegeeinrichtung ist an einem unteren Ende des mindestens einen Abstandselements angeordnet. Die Kombination aus dem fünften Haltekörper, der mindestens einen weiteren Stange und dem mindestens einen Abstandselement erlaubt es, die zweite Anlegeeinrichtung passend zum Einwirkungsbereich der Bearbeitungseinrichtung auf das jeweilige Werkstück (z.B. die Ausgabemündung im Falle einer Befestigungseinrichtung) innerhalb des Handhabungsaggregats zu positionieren, ohne das irgendwelche Abstands- oder Überbrückungselemente ausgetauscht werden müssen. Zum anderen erlaubt der auf der mindestens einen Stange geführte fünfte Haltekörper, dass die Länge des frei im Raum bewegten Abstandselements verringert werden kann, so dass sich das Abstandselement beim Kontakt mit der Oberseite des Werkstücks durch die dabei auftretenden Kräfte weniger verformen kann und dadurch die Präzision bei der Ausrichtung und Positionierung des Werkstücks verbessert wird.

In einer weiteren bevorzugten Ausführungsform umfasst die Tragstruktur ferner mindestens eine weitere Stange und einen sechsten Haltekörper. Dabei ist der sechste Haltekörper mittels der mindestens einen weiteren Stange an dem zweiten Haltekörper angeordnet. Ferner ist die erste Anlegeeinrichtung insbesondere auswechselbar an dem sechsten Haltekörper angeordnet. Damit bilden die erste Anlegeeinrichtung, der sechste Haltekörper und die mindestens eine weitere Stange eine sogenannte Lattenschuhbaugruppe, die auswechselbar an dem zweiten Haltekörper angeordnet sind. Eine solche Anordnung hat den Vorteil, dass die Lattenschuhbaugruppe sehr einfach gegen eine andere Baugruppe wie beispielsweise eine Platte mit einer zentralen Öffnung und nach unten abstehenden Rädern ausgetauscht werden kann. Mit dieser anderen Baugruppe können beispielsweise Platten auf einem Holzrahmenwerk angedrückt und mittels der Befestigungseinrichtung des Handhabungsaggregats befestigt werden. Somit kann ein Großteil des Handhabungsaggregats auch für andere Zwecke wiederverwendet werden.

In einer bereits oben beschrieben Ausführungsform umfasst die erste Anlegeeinrichtung die Grundplatte, an der das mindestens eine Führungselement bevorzugt lösbar angeordnet ist und die Grundplatte umfasst eine bevorzugt zentrale Aussparung für einen Einwirkungsbereich der Bearbeitungseinrichtung mit dem Werkstück die Tragstruktur einen Haltekörper, an dem die Grundplatte auswechselbar angeordnet ist. In dem Einwirkungsbereich können beispielsweise Nägel oder Klammern mit einer Befestigungseinrichtung als die Bearbeitungseinrichtung in das Werkstück eingetrieben werden. Dies erlaubt eine besonders kompakte Ausgestaltung des Handhabungsaggregats, denn die Bearbeitungseinrichtung kann direkt oberhalb der ersten Anlegeeinrichtung innerhalb des Handhabungsaggregats angebracht sein.

In einer weiteren bevorzugten Ausführungsform hat die Aussparung mindestens die Größe des Anlegeabschnitts oder eines Anlegebereiches der zweiten Anlegeeinrichtung. Eine derartige Ausgestaltung hat den Vorteil, dass die zweite Anlegeeinrichtung je nach deren Verstellzustand die Grundplatte durchdringen kann, so dass die Ausrichtung und Positionierung des Werkstücks in der Vertikalen (d.h. senkrecht zur Oberseite der Grundstruktur) zur Grundstruktur und die Ausrichtung und Positionierung des Werkstücks in der Ebene der Grundstruktur (d.h. parallel zur Oberseite der Grundstruktur) im Wesentlichen an einem gleichen Längenabschnitts des Werkstücks erfolgen kann. Ferner greifen die erste Anlegeeinrichtung und die zweite Anlegeeinrichtung somit platzsparend ineinander, was die kompakte Ausgestaltung des Handhabungsaggregats weiter verbessert.

In einer weiteren Ausführungsform umfasst die Grundplatte eine erste Teilplatte und eine zweite Teilplatte, wobei die erste Teilplatte insbesondere auswechselbar an dem sechsten Haltekörper angeordnet ist und wobei die zweite Teilplatte schwenkbar an der ersten Teilplatte angeordnet ist. Hierbei sind das mindestens eine Führungselement der ersten Anlegeeinrichtung und der mindestens eine Anlegeabschnitt an der zweiten Teilplatte angeordnet. Ein derart gestaltetes Handhabungsaggregat gestattet es, auch ein Werkstück sicher auszurichten und zu positionieren, dessen Oberseite nicht parallel zu dessen Unterseite ist bzw. deren Oberseite nicht parallel zur Oberseite der Grundstruktur ist, wenn das Werkstück auf der Grundstruktur zur Positionierung aufliegt.

In einer bevorzugten Ausführungsform umfasst die Grundplatte ferner einen manuell einstellbaren Schwenkhalter oder eine angetriebene Stelleinrichtung zur Verschwenkung der zweiten Teilplatte. Dies erlaubt es, verschiedene vordefinierte Schwenkwinkel abhängig von der Neigung der Oberseite des Werkstücks von Hand oder automatisiert einzustellen.

In bevorzugten Ausführungsformen ist der Schwenkhalter oder ist die angetriebene Stelleinrichtung eingerichtet, zwischen der zweiten Teilplatte und der ersten Teilplatte oder zwischen der zweiten Teilplatte und dem sechsten Haltekörper zu wirken, um einen vordefinierten Winkel zwischen der zweiten Teilplatte und der ersten Teilplatte bevorzugt passend zu einer Neigung einer Oberseite des Werkstücks einzustellen. Diese Ausführungsformen erlauben eine relativ simple und kostengünstige Anordnung eines verstellbaren Schwenkmechanismus innerhalb des Handhabungsaggregats.

In einer weiteren bevorzugten Ausführungsform umfasst das Handhabungsaggregat ferner eine bevorzugt automatisiert angetriebene Schwenk- und Translationseinrichtung, wobei die Bearbeitungseinrichtung an der Schwenk- und Translationseinrichtung angeordnet ist. Dabei ist die Schwenk- und Translationseinrichtung derart eingerichtet, dass ein Schwenkwinkel der Schwenk- und Translationseinrichtung einem Schwenkwinkel der zweiten Teilplatte folgt und dass ein Verstellweg der Schwenk- und Translationseinrichtung einer Verlagerung eines Mittelpunkts der zweiten Teilplatte durch das Schwenken der zweiten Teilplatte folgt. Dadurch wird gewährleistet, dass z.B. Befestigungsmittel in der vordefinierten Richtung und einer vordefinierten Position in das Werkstück eingetrieben werden können, selbst wenn die Oberseite des Werkstücks geneigt ist und daher die zweite Teilplatte entsprechend der Neigung verschwenkt werden muss.

In einer weiter bevorzugten Ausführungsform umfasst die erste Teilplatte eine zentrale Aussparung zur Aufnahme der zweiten Teilplatte und die zweite Teilplatte umfasst eine zentrale Aussparung für den Einwirkungsbereich der Bearbeitungseinrichtung mit dem Werkstück. Diese Ausführungsform erlaubt zum einen eine kompakte Schwenkanordunung und zum anderen eine platzsparende Anordnung der Bearbeitungseinrichtung oberhalb der Grundplatte.

In einer bevorzugten Ausführungsform ist die erste Anlegeeinrichtung an eine Neigung der Längsseite des Werkstücks angepasst, so dass die Führungsfläche des mindestens einen Führungselements parallel zur Neigung der Längsseite des Werkstücks orientiert ist. Das umfasst das mindestens eine Führungselement bevorzugt mindestens einen Rollkörper umfasst. Die Längsseite kann dabei senkrecht zur Oberseite und Unterseite des Werkstücks geneigt sein, was bedeutet, dass das Werkstück im Querschnitt eine Rechteckform hat. Die Flächennormale der Längsseite des Werkstücks kann aber auch einen beliebigen Winkel zwischen 0° und 90° zur Unterseite des Werkstücks bilden. Werkstücke mit unterschiedlich geneigten Längsseiten können somit immer optimal kontaktiert und damit ausgerichtet und positioniert werden. Zum anderen kann die Kontaktierung des Werkstücks mittels der geringen Rollreibung bzw. des geringen Rollwiderstands des Rollkörpers optimiert und Beschädigungen an der Längsseite des Werkstücks verhindert werden.

In einer alternativen bevorzugten Ausführungsform umfasst das Handhabungsaggregat eine bevorzugt automatisierte kombinierte Schwenk- und Translationseinrichtung, an der die Befestigungseinrichtung angeordnet ist. Ein Schwenkwinkel der Schwenkeinrichtung folgt dabei einem Schwenkwinkel der Führungsplatte. Ein Verstellweg der Translationseinrichtung folgt dabei einer Verlagerung des Mittelpunkts der Führungsplatte durch das Schwenken der Führungsplatte. Damit kann bei einem beliebigen Schwenkwinkel der Führungsplatte eine Position und Orientierung einer Ausgabemündung der Befestigungseinrichtung in Bezug auf den Mittelpunkt der Führungsplatte beibehalten werden, so dass die Befestigungsmittel mittels der vordefinierten Eintreibrichtung und an der vordefinierten Stelle in die Werkstücke eingetrieben werden können.

In einer weiteren bevorzugten Ausführungsform ist die erste Anlegeeinrichtung an eine Neigung der Längsseite des Werkstücks angepasst ist, so dass die Führungsfläche des mindestens einen Führungselements parallel zur Neigung der Längsseite des Werkstücks orientiert ist. Dabei umfasst das mindestens eine Führungselement bevorzugt mindestens einen Rollkörper. Diese Anpassung der ersten Anlegeeinrichtung erlaubt zum einen präzisere Ausrichtung und Positionierung des Werkstücks in der Längsrichtung. Zum anderen ermöglicht der Rollkörper eine verminderte Reibung und reduziert auch mögliche Beschädigungen der Längsseiten der Werkstücke.

In einer weiteren bevorzugten Ausführungsform umfasst die erste Anlegeeinrichtung das mindestens eine Führungselement mit der Führungsfläche und ein weiteres Führungselement mit einer weiteren Führungsfläche. Dabei sind die Führungsfläche und die weitere Führungsfläche derart angeordnet, um an gegenüberliegenden Längsseiten des Werkstücks in Anlage zu kommen, und wobei die Führungsfläche und/oder die weitere in der Querrichtung federnd gelagert ist bzw. sind. Diese Ausführungsform erlaubt es, dass Werkstücke mit einer vordefinierten Breite, die in der Regel herstellungsbedingt schwankt, dennoch sicher und präzise ausgerichtet und positioniert werden können, weil sich die Führungsfläche bzw. die Führungsflächen an herstellungsbedingte Schwankungen der Breite der Werkstücke anpassen kann bzw. können, so dass stets beide Längsseiten der Werkstücke kontaktiert werden. Die Federung ist bevorzugt derart ausgelegt, dass eine herstellungsbedingte tatsächliche Breite der Werkstücke bei +/- 2 mm um die vordefinerte Breite der Werkstücke liegen kann und eine präzise Ausrichtung und Positionierung der Werkstücke dann immer noch gewährleistet ist.

In einer weiteren bevorzugten Ausführungsform ist bzw. sind die federnd gelagerte Führungsfläche und/oder die weitere federgelagerte Führungsfläche in der Längsrichtung zweigeteilt. Eine solche Anordnung erleichtert zum einen die Einführung des Werkstücks in die erste Anlegeeinrichtung. Zum anderen wird durch die Zweiteilung die Wahrscheinlichkeit für ein seitliches Verkippen des Werkstücks aufgrund der Federung verringert.

Nach einer weiteren bevorzugten Ausführungsform umfasst das Handhabungsaggregat ferner eine Halteeinrichtung für das jeweilige Werkstück. Dies hat den Vorteil, dass das Werkstück von der Handhabungseinrichtung nicht zur ausgerichtet und positioniert werden kann sondern auch von einem Werkstücklager mittels dem Handhabungsaggregat zur Oberseite der Grundstruktur transportiert werden kann. Somit kann auf eine separate Transporteinrichtung für ein Transport des Werkstücks von dem Werkstücklager zu der Grundstruktur verzichtet werden.

In einer weiteren bevorzugten Ausführungsform ist die Halteeinrichtung überlappend mit einer zentralen Längsachse der ersten Anlegeeinrichtung an dem Handhabungsaggregat angeordnet. Durch diese Anordnung kann direkt anschließend nach dem Transportieren des Werkstücks vom Werkstücklager zur Grundstruktur das Werkstück ohne ein Umgreifen oder Umsetzen des Handhabungsaggregats auf der Grundstruktur ausgerichtet und positioniert werden.

In einer weiteren bevorzugten Ausführungsform umfasst die Halteeinrichtung einen ersten Halteabschnitt und einen zweiten Halteabschnitt, wobei der erste Halteabschnitt und der zweite Halteabschnitt jeweils benachbart zu entgegengesetzten Enden und entlang der zentralen Längsachse der ersten Anlegeeinrichtung (10) an dem Handhabungsaggregat angeordnet sind. Damit wird zum einen ein sicheres Halten des Werkstücks beim Transport gewährleistet und zum anderen ein Verdrehen des Werkstücks in der Halteeinrichtung möglichst verhindert, so dass das Werkstück nicht aus dem Eingriffsbereich der ersten Anlegeeinrichtung gelangt.

Eine auf der Erfindung basierende Fertigungsanlage zum Positionieren bzw. Ausrichten eines Werkstücks auf einer Grundstruktur und bevorzugt zum Befestigen einer mehrteiligen Struktur aus s Holzelementen und/oder Holzwerkstoffelementen auf einem Holzrahmenelement. Die Fertigungsanlage umfasst eine der zuvor beschriebenen Ausführungsformen des Handhabungsaggregats und eine Bewegungseinheit insbesondere einen Portalroboter oder einen Knickarmroboter. Die Bewegungseinheit ist entlang einer Längsrichtung der Grundstruktur verfahrbar angeordnet. Das Handhabungsaggregat ist dabei an der Bewegungseinheit zum Positionieren und Bewegen des Handhabungsaggregats in Bezug zur Grundstruktur angeordnet. Die mehrteilige Struktur ist auch hier bevorzugt eine mehrteilige Fassadenstruktur aus Holzelementen und/oder Holzwerkstoffelementen, die die Werkstücke darstellen und die Grundstruktur ist bevorzugt das Holzrahmenelement.

In einer bevorzugten Ausführungsform ist die Bewegungseinheit als Portal mit einem Horizontalträger ausgestaltet, wobei das Portal einen Aggregateträger umfasst. Der Aggregateträgert ist hierbei eingerichtet, entlang des Horizontalträgers und somit entlang einer Querrichtung der Grundstruktur zu verfahren. Die Aggregateträger umfasst einen Horizontalschlitten, einen Vertikalschlitten, eine Kopplungseinrichtung und eine Klemmeinrichtung. Dabei ist das Handhabungsaggregat über die Kopplungseinrichtung lösbar an dem Vertikalschlitten angeordnet. Die Klemmeinrichtung ist eingerichtet, den Vertikalschlitten in einer vordefinierten Höhe der Höhenrichtung zu klemmen. Diese Ausgestaltung der Fertigungsanlage erlaubt es, dass eine Höhenposition des Handhabungsaggregats innerhalb eines Verstellwegs der Klemmeinrichtung an Höhenschwankungen der Oberseite des Werkstücks anpassbar ist. Dadurch kann zum einen auf eine komplizierte Nachführung des Handhabungsaggregats in der Höhenrichtung über eine Antriebseinrichtung für den Vertikalschlitten bei einer Grundstruktur mit einer Längsabmessung im Bereich mehrerer Meter und einer Querabmessung im Bereich mehrerer Meter verzichtet werden. Denn die Grundstruktur ist in der Regel über diese großen Abmessungen nicht völlig eben. Zum anderen verhindert die geringe Federkraft der Federn einen zu großen Anpressdruck auf das Werkstück und somit eine Beschädigung des Werkstücks oder der Grundstruktur. Ferner ist über die Kopplungseinrichtung ein automatisierter Austausch des Handhabungsaggregats am Aggregateträger möglich.

In einer bevorzugten Ausführungsform ist die Klemmeinrichtung als gefederte Schienenklemmung ausgelegt. Ferner umfasst die Klemmeinrichtung eine Klemmeinheit, eine erste Feder, eine zweite Feder, einen ersten Anschlag für die erste Feder und einen zweiten Anschlag für die zweite Feder. Dabei sind die erste Feder und die zweite Feder in der Höhenrichtung übereinander angeordnet. Ferner ist die Klemmeinheit zwischen der ersten Feder und der zweiten Feder an einem Ende der ersten Feder und an einem Ende der zweiten Feder angeordnet. Dabei ist der erste Anschlag am gegenüberliegenden Ende der ersten Feder angeordnet und der zweite Anschlag ist am gegenüberliegenden Ende zweiten Feder angeordnet. Diese Ausführungsform erlaubt es, dass der Aggregateträger in zwei entgegengesetzten Richtungen zur Vertikalen innerhalb des Federwegs der beiden Federn ausweichen kann und die Federn sowohl bei einer Auslenkung nach oben oder unten ständig versuchen, den Aggregateträger wieder in die vordefinierte Höhe zu bewegen.

In einer weiteren bevorzugten Ausführungsform umfasst die Klemmeinrichtung ferner eine lineare Führungseinrichtung mit einem Schlitten und einer Schiene. Dabei ist der Schlitten an der Klemmeinheit angeordnet und die Schiene ist an dem Horizontalschlitten angeordnet. Dabei ist die Führungseinrichtung eingerichtet, den Vertikalschlitten im geklemmten Zustand zu führen. Dies hat den technischen Vorteil, dass eine Höhenverstellung des Aggregateträgers innerhalb des Federwegs der Feder nur geführt stattfinden kann, was für eine höhere Präzision bei der Positionierung des Handhabungsaggregats auf der Grundstruktur sorgt.

In einer alternativen Ausführungsform umfasst die Fertigungsanlage ein erstes Handhabungsaggregat mit der ersten Anlegeeinrichtung gemäß der zuvor beschriebenen Ausführungsbeispiele, ein zweites Handhabungsaggregat mit der zweiten Anlegeeinrichtung gemäß der zuvor beschriebenen Ausführungsbeispiele und mindestens eine der zuvor beschriebenen Bewegungseinheiten zum Positionieren und Bewegen des ersten Handhabungsaggregats und des zweiten Handhabungsaggregats in Bezug zur Grundstruktur. Dabei ist die mindestens eine Bewegungseinheit eingerichtet, eine Kooperation zwischen dem ersten Handhabungsaggregat und dem zweiten Handhabungsaggregat zum Ausrichten und Positionieren des jeweiligen Werkstücks zu ermöglichen. Dabei können das erste Handhabungsaggregat und das zweite Handhabungsaggregat an derselben Bewegungseinheit oder an unterschiedlichen Bewegungseinheiten angeordnet sein oder das erste Handhabungsaggregat und das zweite Handhabungsaggregat können an derselben Bewegungseinheit aber an unterschiedlichen Aufnahmeeinheiten, die an der gleichen Bewegungseinheit angeordnet sind, angeordnet sein.

In einer bevorzugten Ausführungsform umfasst die Fertigungsanlage ferner eine Lagereinrichtung für das Werkstück. Dabei ist die Bewegungseinheit eingerichtet, das Werkstück von der Lagereinrichtung zu der Grundstruktur zu transportieren. Dadurch wird die Fertigungsanlage weiter automatisiert, denn es wird kein Bediener mehr für den Transport der Werkstücke von der Lagereinrichtung zu der Grundstruktur benötigt.

In einer bevorzugten Ausführungsform umfasst die Fertigungsanlage ferner die Lagereinrichtung für das Werkstück und eine weitere Bewegungseinheit zum Fördern des Werkstücks von der Lagereinrichtung zu der Grundstruktur und zur Übergabe des Werkstücks an die Bewegungseinheit oder zum Ablegen des Werkstücks auf der Grundstruktur. Mittels der weiteren Bewegungseinheit kann die Fertigungsanlage schneller bzw. effektiver arbeiten, weil die beiden Bewegungseinheiten für unterschiedliche Verfahrensschritte (Transportieren des Werkstücks bzw. Ausrichten und Positionieren eines zuvor transportierten Werkstücks) zuständig sind, die teilweise zeitlich parallel durchgeführt werden können.

In einer weiteren bevorzugten Ausführungsform sind die Bewegungseinheit und die Lagereinrichtung entlang der Grundstruktur bewegbar gestaltet, so dass die Lagereinrichtung einer Bewegung der Bewegungseinheit entlang der Grundstruktur folgen kann. Durch eine solche Ausgestaltung kann die Fertigungsanlage noch effektiver arbeiten, denn die Förderstrecke von der Lagereinrichtung zur Grundstruktur wird verkürzt, wobei die Förderung des jeweiligen Werkstücks von der Lagereinrichtung zur Grundstruktur entweder durch einen Bediener, die Bewegungseinheit oder ggf. eine weitere Bewegungseinheit der Fertigungsanlage erfolgen kann. Die bewegbar ausgestaltete Lagereinrichtung ist dabei bevorzugt so geräumig dimensioniert, dass alle Werkstücke für die mehrteilige Struktur vor Beginn des Fertigungsprozesses in der Lagereinrichtung zwischengelagert werden können.

In einer weiteren bevorzugten Ausführungsform umfasst die Fertigungsanlage ferner eine Transporteinrichtung zum Zuführen der Grundstruktur zu der Fertigungsanlage und/oder zum Abtransportieren der Grundstruktur mit der mehrteiligen Struktur und/oder eine weitere Transporteinrichtung zum Zuführen der Werkstücke zu der Fertigungsanlage. Mit diesen Transporteinrichtungen kann die Fertigungsanlage weiter automatisiert werden, so dass weniger Bedienereingriffe erforderlich sind.

In einer weiteren bevorzugten Ausführungsform umfasst die Lagereinrichtung eine erste Fördereinrichtung parallel zur Transportrichtung der weiteren Transporteinrichtung und bevorzugt eine zweite Fördereinrichtung senkrecht zur Transportrichtung der weiteren Transporteinrichtung. Diese Fördereinrichtungen erlauben es, die Werkstücke automatisiert auf der Lagereinrichtung an verschiedenen freien nicht von Werkstücken besetzten Plätzen der Lagereinrichtung einzulagern.

In einer weiteren bevorzugten Ausführungsform umfasst die Fertigungsanlage ferner eine Zerspanungseinrichtung insbesondere eine Kappsäge zur Längendimensionierung der Werkstücke und bevorzugt eine Abfalleinrichtung für Abfallstücke der Zerspanungseinrichtung. Dies hat den Vorteil, dass die Werkstücke nicht auf die jeweilige vordefinierte Länge vorkonfektioniert bzw. vordimensioniert und gelagert werden müssen, bevor die eigentliche Fertigung der mehrteiligen Struktur mittels der Fertigungsanlage beginnt.

In einer weiteren bevorzugten Ausführungsform umfasst die Fertigungsanlage ferner eine Handhabungseinrichtung zum Handhaben von Grundplatten mit je einer ersten Anlegeeinrichtung und weiteren Grundplatten mit je einer ersten Anlegeeinrichtung und einer zweiten Anlegeeinrichtung und eine Lagereinrichtung für die Grundplatten und die weiteren Grundplatten und wobei die Handhabungseinrichtung eingerichtet ist, eine der Grundplatten oder der weiteren Grundplatten zwischen der Lagereinrichtung und der Bewegungseinheit zu transportieren und bei der Bewegungseinheit automatisiert einzuwechseln bzw. auszuwechseln. Dies führt zu einer weiteren Automatisierung und Effizienzsteigerung der Fertigungsanlage, weil keine manuellen Bedienereingriffe zum Austausch der jeweiligen Grundplatte an dem Handhabungsaggregat notwendig ist.

Die Erfindung basiert ferner auf einem Verfahren zum Positionieren bzw. Ausrichten eines Werkstücks auf einer Grundstruktur, insbesondere zum Befestigen einer mehrteiligen Struktur aus Holzelementen und/oder Holzwerkstoffelementen auf einem Holzrahmenelement - insbesondere mittels einem Handhabungsaggregat nach einer der zuvor genannten Ausführungsvarianten oder mittels einer Fertigungsanlage nach einer der zuvor beschriebenen Ausführungsvarianten. Das Verfahren umfasst die folgenden Schritte:
- Positionieren und Ausrichten des Werkstücks auf der Grundstruktur in einer Längsrichtung durch Anlegen einer ersten Anlegeeinrichtung zumindest an einer Längsseite des Werkstücks , und
- Positionieren und Ausrichten des Werkstücks auf der Grundstruktur in einer Höhenrichtung durch Anlegen einer zweiten Anlegeeinrichtung an einer Oberseite des Werkstücks,
- Anpassen der ersten Anlegeeinrichtung in einer Querrichtung an eine vordefinierte Breite des Werkstücks, und/oder
- Verstellen der ersten Anlegeeinrichtung und der zweiten Anlegeeinrichtung relativ zueinander in der Höhenrichtung.

In einer bevorzugten Ausführungsform umfasst das Verfahren ferner den Schritt Andrücken des Werkstücks an die Grundstruktur zumindest zeitweise über Druck auf die Oberseite des Werkstücks mittels der zweiten Anlegeeinrichtung. Mittels dieses Schritts kann ein möglicherweise in der Höhenrichtung gebogenes Werkstück, insbesondere bananenförmig gebogenes Werkstück, plan auf die Grundstruktur angedrückt werden, so dass ein nachfolgender Verfahrensschritt wie beispielsweise das Befestigen des Werkstücks auf der Grundstruktur mit höherer Präzision durchgeführt werden kann. Die Anpresskraft kann beispielsweise so dimensioniert sein, dass das Werkstück zwar auf der Grundstruktur anliegt, um nach Eintreiben der Befestigungsmittel einen Formschluss auszubilden, ein Verschieben, insbesondere entlang der Längserstreckung des Werkstücks, jedoch noch möglich ist, beispielsweise um die Positionierung des Werkstücks auf der Grundstruktur nachjustieren zu können.

In einer bevorzugten Ausführungsform umfasst das Verfahren ferner die Schritte Befestigen des Werkstücks an mindestens zwei Befestigungsstellen an der Grundstruktur. Damit wird das Verfahren neben den oben genannten Handhabungsschritten zur Positionierung und Ausrichtung um einen Bearbeitungsschritt zur Fertigung der mehrteiligen Struktur ergänzt.

In einer weiteren bevorzugten Ausführungsform umfasst das Verfahren ferner die folgenden Schritte:
- Vorpositionieren der ersten Anlegeeinrichtung in einer Grundposition zum Einführen bzw. Anlegen des Werkstücks in bzw. an die erste Anlegeeinrichtung, und
- Zuführen des Werkstücks in bzw. an die erste Anlegeeinrichtung und an in die zweite Anlegeeinrichtung.

Dabei erfolgt das Verstellen der ersten Anlegeeinrichtung und der zweiten Anlegeeinrichtung relativ zueinander in der Höhenrichtung durch ein Verstellen der zweiten Anlegeeinrichtung von einer Grundstellung, bei der die zweite Anlegeeinrichtung keinen Kontakt zur Oberseite des Werkstücks hat, zu einer Arbeitsstellung, bei der die zweite Anlegeeinrichtung Kontakt zur Oberseite des Werkstücks hat. Ferner erfolgt das Positionieren und Ausrichten des Werkstücks auf der Grundstruktur in der Längsrichtung und der Höhenrichtung durch ein Entlangbewegen der ersten Anlegeeinrichtung und der zweiten Anlegeeinrichtung am Werkstück in Längsrichtung des Werkstücks .

Mittels dieser weiteren Verfahrensschritte wird zum einen eine einfache Vorpositionierung des Werkstücks ermöglicht. Zum anderen erfolgt eine einfache finale Positionierung und Ausrichtung des Werkstücks einfach dadurch, dass die erste Anlegeeinrichtung und die zweite Anlegeeinrichtung an dem Werkstück entlang bewegt werden.

In einer weiter bevorzugten Ausführungsform erfolgt das Verstellen der zweiten Anlegeeinrichtung 20, 20a) von der Grundstellung zu der Arbeitsstellung durch ein Drücken der zweiten Anlegeeinrichtung gegen die Oberseite des Werkstücks mittels einer Verstelleinrichtung des Handhabungsaggregat. Dadurch wird eine Anhebung der ersten Anlegeeinrichtung gegenüber der Oberseite des Werkstücks bewirkt. Dies hat den technischen Vorteil, dass durch eine einzige Bewegung bevorzugt mittels einer entsprechend automatisierten Verstelleinrichtung sowohl die erste Anlegeeinrichtung als auch die zweite Anlegeeinrichtung in die Arbeitsstellung gebracht werden können.

In einer weiteren bevorzugten Ausführungsform erfolgt das Positionieren der zweiten Anlegeeinrichtung in die Arbeitsstellung synchron mit einer Positionierung der Bearbeitungseinrichtung zur Bearbeitung des Werkstücks in eine Arbeitsposition. Bevorzugt wird für die synchrone Positionierung eine gemeinsame Verstelleinrichtung verwendet. Dies hat den weiteren technischen Vorteil, dass durch eine einzige Bewegung bevorzugt mittels einer entsprechend automatisierten Verstelleinrichtung sowohl die zweite Anlegeeinrichtung in die Arbeitsstellung als auch die Bearbeitungseinrichtung in die Arbeitsposition gebracht werden können.

In einer weiteren bevorzugten Ausführungsform erfolgt das Positionieren der ersten Anlegeeinrichtung und der zweiten Anlegeeinrichtung in die Arbeitsstellung derart, dass die erste Anlegeeinrichtung das Werkstück zumindest an einer Längsseite des Werkstücks insbesondere mit einem Längenmaß senkrecht zur Oberseite des Werkstücks im Bereich von 5 bis 15 mm, bevorzugt von 7 bis 13 mm und weiter bevorzugt von 9 bis 11 mm bevorzugt direkt benachbart zur Oberseite des Werkstücks kontaktiert. Dadurch wird gewährleistet, dass zum einen das Werkstück noch sicher ausgerichtet und positioniert werden kann und zum anderen die erste Anlegeeinrichtung einen ausreichend großen Abstand zur Grundstruktur hat, um die Grundstruktur beim Ausrichten und Positionieren des Werkstücks nicht zu beschädigen.

In einer weiteren bevorzugten Ausführungsform erfolgt das Vorpositionieren der ersten Anlegeeinrichtung in die Grundposition durch eine Bewegungseinheit einer Fertigungsanlage und insbesondere durch einen an der Bewegungseinheit angeordneten Horizontalschlitten und einen an der Bewegungseinheit angeordneten Vertikalschlitten. Dies hat den Vorteil, dass das Handhabungsaggregat als Positionierhilfe für ein der Grundstruktur zuzuführenden Werkstück und somit einer Vorpositionierung des Werkstücks dienen kann, bevor die finale Ausrichtung und Positionierung des Werkstücks erfolgt. Der gesamte Ausricht- und Positionierungsprozess für ein Werkstück kann somit beschleunigt werden.

In einer weiteren bevorzugten Ausführungsform umfasst das Vorpositionieren der ersten Anlegeeinrichtung in die Grundposition folgende Unterschritte:
- Annähern der ersten Anlegeeinrichtung an die Grundstruktur und Kontaktieren der Grundstruktur durch die erste Anlegeeinrichtung bevorzugt mittels der Erdanziehungskraft,
- Einschalten bzw. Aktivieren einer Klemmeinrichtung an der Höhenverstelleinrichtung nach Kontaktieren der Grundstruktur, ,so dass eine Bewegung der ersten Anlegeeinrichtung in der Höhenrichtung durch einen Verstellweg der Klemmeinrichtung begrenzt ist, und
- Beabstanden bzw. Entfernen der ersten Anlegeeinrichtung von der Grundstruktur bis ein vordefinierter Abstand der ersten Anlegeeinrichtung zur Grundstruktur von bevorzugt 1 mm bis 10 mm, weiter bevorzugt von 1 bis 5 mm und noch weiter bevorzugt von 1 mm bis 3 mm erreicht ist. Dies hat den Vorteil, dass die zweite Anlegeeinrichtung eine ausreichende Höhe einnimmt, so dass selbst das in der Höhenrichtung vorgesehene dickste Werkstück ohne Kontakt zur zweiten Anlegeeinrichtung an die erste Anlegeeinrichtung herangeführt werden kann, so dass genug Freiraum für das Zuführen des Werkstücks besteht und es nicht zu einer Kollision mit der zweiten Anlegeeinrichtung kommen kann

In weiteren bevorzugten Ausführungsformen erfolgt das Zuführen des Werkstücks in bzw. an die erste Anlegeeinrichtung und an in die zweite Anlegeeinrichtung durch eine weitere Bewegungseinheit der Fertigungsanlage oder durch einen Bediener. Bei der ersten Variante kann das Verfahren vollautomatisiert ablaufen, weil für das Einführen der Werkstücke kein Bediener benötigt wird. Bei der zweiten Variante können Anschaffungs- und Betriebskosten für eine weitere Bewegungseinheit eingespart werden.

In weiteren bevorzugten Ausführungsformen umfasst das Verfahren ferner mindestens einen weiteren der folgenden Schritte:
- Zuführen der Grundstruktur mittels einer Transporteinrichtung,
- Automatisiertes Positionieren und Fixieren der Grundstruktur auf einem Auflagetisch,
- Zuführen des Werkstücks oder von noch nicht dimensionierten Werkstücken mittels einer Transporteinrichtung,
- Zerteilen bzw. Zersägen der noch nicht dimensionierten Werkstücke auf eine vordefinierte Längenabmessung,
- Automatisiertes Zwischenlagern des Werkstücks in einer Lagereinrichtung ,
- Automatisiertes Aufbringen von Markierungslinien auf die Grundstruktur vor dem Befestigen der mehrteiligen Struktur an der Grundstruktur.

Diese zusätzlichen Verfahrensschritte ermöglichen eine weitere bzw. vollständige Automatisierung des Verfahrens zur Fertigung der mehrteiligen Struktur auf der Grundstruktur.

In einer weiteren bevorzugten Ausführungsform umfasst das Verfahren den Schritt Abtransportieren der Grundstruktur mit der mehrteiligen Struktur mittels der Transporteinrichtung oder einer weiteren Transporteinrichtung. Dieser weitere Schritt ermöglicht eine weitere Automatisierung der Fertigung der Grundstruktur mit der mehrteiligen Struktur und somit eine Effizienzsteigerung.

In weiteren bevorzugten Ausführungsform werden das Werkstück und mindestens ein weiteres Werkstück für die mehrteilige Struktur ineinandergreifend oder überlappend oder mit Kontakt zueinander oder mit einem vordefinierten Abstand zueinander ausgerichtet und positioniert werden. Diese verschiedenen Varianten erlauben eine vielfältige Positionierung der beiden Werkstücke zueinander fürverschiedenste mehrteilige Stukturen.

In weiteren bevorzugten Ausführungsformen ist die mehrteilige Struktur eine Holzfassade in Form einer Nut-Feder-Schalung oder Stülp-Schalung oder Stoß-Schalung oder Lücken-Schalung oder Rhombusleistenschalung oder Trapezprofilschalung oder Skyline-Schalung ist. Die verschiedenen Schalungen werden dadurch erreicht, dass entsprechend für die jeweilige Schalung benötigte Werkstücke vorgefertigt und bevorzugt in einem Zwischenlager möglichst dicht an der Fertigungsanlage bereitgestellt werden und das Verfahren die Werkstücke passend mit einem vordefinierten Abstand zueinander positioniert oder die Werkstücke auf Stoß, überlappend oder mittels Nut und Feder ineinandergefügt positioniert. Somit können verschiedenartige Holzfassaden je nach Wunsch des Architekten bzw. des Eigentümers eines Fertighauses gefertigt werden.

Als Nut-Feder-Schalung werden folgende Verbindungen angesehen:
- Zwei zu verbindende Werkstücke besitzen an gegenüberliegenden Längsseiten je eine angeformte Nut, in die, als verbindendes drittes Bauteil, eine sogenannte Feder eingesteckt wird.
- Zwei zu verbindende Werkstücke besitzen jeweils an gegenüberliegenden Längsseiten eine angeformte Nut und eine angeformte Feder, so dass je zwei Werkstücke ohne ein drittes Bauteil miteinander verbunden werden können.

Bei der Stülp-Schalung werden die Werkstücke an der Längsseite der Werkstücke wenige Zentimeter (bevorzugt 1 cm bis 3 cm) überdeckend angeordnet. Dafür hat das jeweilige Werkstück an einer ersten Längsseite eine Aussparung zur Grundstruktur, wobei die Aussparung bis maximal zur halben Dicke des jeweiligen Werkstücks reichen kann. An der gegenüberliegenden zweiten Längsseite hat das jeweilige Werkstück eine Aussparung zur Außenseite der mehrteiligen Struktur zum Beispiel bevorzugt invers zur ersten Längsseite, so dass die mehrteilige Struktur im Überlappungsbereich der Werkstücke die gleiche Stärke hat wie außerhalb des Überlappungsbereiches der Werkstücke.

Bei einer Rhombusleistenschalung haben die Werkstücke im Querschnitt die Form eines Rhombus und werden bevorzugt in einem Bereich von 5 mm bis 5 cm und weiter bevorzugt von 1 cm bis 3 cm voneinander beabstandet parallel zueinander angeordnet.

Bei einer Trapezprofilschalung haben die Werkstücke an der Oberseite in der Querrichtung eine Neigung, so dass die Werkstücke an den Längsseiten unterschiedlich dick sind, und die Werkstücke sind an beiden Längsseiten so gestalte, dass die Werkstücke überlappend oder ineinandergreifend positioniert und an der Grundstruktur befestigt werden können.

Bei der Stoß-Schalung werden Werkstücke mit einem bevorzugt rechteckförmigen Querschnitt auf Kontakt nebeneinander positioniert und befestigt. Ein Ineinandergreifen oder Überlappen der Werkstücke wie bei den beiden vorgenannten Schalungen erfolgt bei dieser Schalung nicht.

Bei der Lückenschalung werden Werkstücke mit einem vordefinierten Abstand und somit ohne Kontakt zu einander positioniert und befestigt.

Bei der Skyline-Schalung werden die oben genannten Schalungen mittels unterschiedlich dicker Werkstücke erzeugt.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und sind derart dargestellt, dass die erfindungsgemäßen Besonderheiten deutlich sichtbar gemacht werden können. Die einzelnen beschriebenen Merkmale können je einzeln für sich oder zu mehreren in beliebigen Kombinationen bei verschiedenen Ausführungsbeispielen der Erfindung verwirklicht sein.

Bevorzugte Ausführungsbeispiele der Erfindung sind in den Figuren der Zeichnung dargestellt und werden in der nachfolgenden Beschreibung näher erläutert, wobei sich gleiche Bezugszeichen auf gleiche oder ähnliche oder funktional gleiche Vorrichtungskomponenten oder Verfahrensschritte beziehen.

Es zeigen:
- **Fig. 1:**: Dreidimensionale Ansicht eines Handhabungsaggregats zum Positionieren bzw. Ausrichten eines Werkstücks auf einer Grundstruktur und optional zum Befestigen des Werkstücks als Bestandteil einer mehrteiligen Struktur an der Grundstruktur
- **Fig. 2:**: Prinzipskizze eines weiteren Handhabungsaggregats zum Positionieren bzw. Ausrichten eines Werkstücks auf einer Grundstruktur und optional zum Befestigen des Werkstücks als Bestandteil einer mehrteiligen Struktur an der Grundstruktur
- **Fig. 3:**: Seitenansicht eines Ausschnitts von **Fig. 1** mit einem unteren Abschnitt des Handhabungsaggregats sowie der mehrteiligen Struktur und der Grundstruktur
- **Fig. 4:**: Dreidimensionale Ansicht einer ersten Anlegeeinrichtung des Handhabungsaggregats von **Fig. 1**
- **Fig. 5:**: Seitenansicht der ersten Anlegeeinrichtung von **Fig. 4**
- **Fig. 6:**: Draufsicht auf eine Unterseite der ersten Anlegeeinrichtung von **Fig. 4** mit zwei Führungselemente, um an Längsseiten eines Werkstücks in Anlage gebracht zu werden
- **Fig. 7:**: Draufsicht auf ein Führungselement in einer bevorzugten Ausführungsform für die erste Anlegeeinrichtung
- **Fig. 8:**: Dreidimensionale Ansicht des Führungselements von **Fig. 7**
- **Fig. 9:**: Blick auf einen Querschnitt des Führungselements von **Fig. 7** in einer Ruhestellung (a) und in einer Andruckstellung (b) bei Kontakt mit einem Werkstück
- **Fig. 10:**: Draufsicht auf ein Führungselement in einer weiteren bevorzugten Ausführungsform für die erste Anlegeeinrichtung
- **Fig. 11:**: Dreidimensionale Ansicht des Führungselements von **Fig. 10**
- **Fig. 12:**: Dreidimensionale Ansicht einer zweiten Anlegeeinrichtung des Handhabungsaggregats von **Fig. 1** zusammen mit der mehrteiligen Struktur und der Grundstruktur
- **Fig. 13:**: Dreidimensionale um 90° um eine vertikale Achse gegenüber **Fig. 12** gedrehte Ansicht der zweiten Anlegeeinrichtung des Handhabungsaggregats von **Fig. 1** zusammen mit der mehrteiligen Struktur und der Grundstruktur
- **Fig. 14:**: Dreidimensionale Ansicht des Handhabungsaggregats von **Fig. 1** mit weggelassenen Bestandteilen eines Haltekörpers für die ersten Anlegeeinrichtung zur besseren Sichtbarkeit der zweiten Anlegeeinrichtung
- **Fig. 15:**: Seitenansicht des Handhabungsaggregats von **Fig. 1** mit weggelassenen Bestandteilen zu einer in dem Handhabungsaggregat angeordneten Bearbeitungseinrichtung für Werkstücke zur besseren Sichtbarkeit einer Sensoreinrichtung
- **Fig. 16:**: Gleiche Seitenansicht des Handhabungsaggregats wie bei **Fig. 15** jedoch mit allen Bestandteilen des Handhabungsaggregats
- **Fig. 17:**: Seitenansicht eines unteren Abschnitts eines weiteren Handhabungsaggregats zum Positionieren bzw. Ausrichten eines Werkstücks auf einer Grundstruktur und optional zum Befestigen des Werkstücks als Bestandteil einer mehrteiligen Struktur an der Grundstruktur
- **Fig. 18:**: Querschnitt im Wesentlichen eines Haltekörpers des Handhabungsaggregats von **Fig. 17**
- **Fig. 19:**: Seitenansicht einer ersten Teilplatte einer Grundplatte einer ersten Anlegeeinrichtung und einer zweiten Anlegeeinrichtung des Handhabungsaggregats von **Fig. 17**
- **Fig. 20:**: Seitenansicht einer zweiten Teilplatte der Grundplatte mit der ersten Anlegeeinrichtung und der zweiten Anlegeeinrichtung des Handhabungsaggregats von **Fig. 17**
- **Fig. 21:**: Seitenansicht eines mittleren Abschnitts des Handhabungsaggregats von **Fig. 17** mit einer an einer Tragstruktur des Handhabungsaggregats angeordneten Schwenk- und Translationseinrichtung in einer ersten Stellung für ein Werkstück mit einer horizontal ausgerichteten Oberseite des Werkstücks (a) und in einer zweiten Stellung für ein Werkstück mit einer zur Horizontalen geneigten Oberseite des Werkstücks
- **Fig. 22:**: Eine Prinzipskizze zur Ermittlung von Ausgleichsbewegungslängen der Schwenk- und Translationseinrichtung in Folge einer Verschwenkung der Schwenk- und Translationseinrichtung
- **Fig. 23:**: Seitenansicht eines weiteren Handhabungsaggregats zum Positionieren bzw. Ausrichten eines Werkstücks auf einer Grundstruktur und optional zum Befestigen des Werkstücks als Bestandteil einer mehrteiligen Struktur an der Grundstruktur
- **Fig. 24:**: Dreidimensionale Ansicht einer Grundstruktur und einer darauf bereits teilweise aus Werkstücken gefertigten und befestigten mehrteiligen Struktur in Form einer Holzfassade
- **Fig. 25:**: Seitenansicht eines unteren Teils eines weiteren Handhabungsaggregats mit einer ersten Anlegeeinrichtung und einer zweiten Anlegeeinrichtung und einer teilweise gefertigten Rhombusleistenschalung als Holzfassade auf einem Holzrahmenwandelement
- **Fig. 26:**: Seitenansicht eines unteren Teils eines weiteren Handhabungsaggregats mit einer ersten Anlegeeinrichtung und einer zweiten Anlegeeinrichtung und einer teilweise gefertigten Rhombusleistenschalung als Holzfassade auf einem Holzrahmenwandelement
- **Fig. 27:**: Seitenansicht eines unteren Teils eines weiteren Handhabungsaggregats mit einer ersten Anlegeeinrichtung und einer zweiten Anlegeeinrichtung und einer teilweise gefertigten Trapezprofilschalung als Holzfassade auf einem Holzrahmenwandelement
- **Fig. 28:**: Dreidimensionale Ansicht einer Fertigungsanlage zum Positionieren bzw. Ausrichten eines Werkstücks auf einer Grundstruktur und insbesondere zum Befestigen einer mehrteiligen Struktur aus Holzelementen und/oder Holzwerkstoffelementen auf einem Holzrahmenelement
- **Fig. 29:**: Seitenansicht bzw. Prinzipskizze eines Ausschnitts der Fertigungsanlage von **Fig. 28** mit einem eine gefederte Schienenklemmung umfassenden Aggregateträger einer Bewegungseinheit zum Positionieren eines Handhabungsaggregats oberhalb einer Grundstruktur
- **Fig. 30:**: Dreidimensionale Detailansicht der gefederten Schienenklemmung von **Fig. 29**
- **Fig. 31:**: Draufsicht einer weiteren Fertigungsanlage zum Positionieren bzw. Ausrichten eines Werkstücks auf einer Grundstruktur und insbesondere zum Befestigen einer mehrteiligen Struktur aus Holzelementen und/oder Holzwerkstoffelementen auf einem Holzrahmenelement
- **Fig. 32:**: Draufsicht einer weiteren Fertigungsanlage zum Positionieren bzw. Ausrichten eines Werkstücks auf einer Grundstruktur und insbesondere zum Befestigen einer mehrteiligen Struktur aus Holzelementen und/oder Holzwerkstoffelementen auf einem Holzrahmenelement
- **Fig. 33:**: Draufsicht einer weiteren Fertigungsanlage zum Positionieren bzw. Ausrichten eines Werkstücks auf einer Grundstruktur und insbesondere zum Befestigen einer mehrteiligen Struktur aus Holzelementen und/oder Holzwerkstoffelementen auf einem Holzrahmenelement
- **Fig. 34:**: Draufsicht einer weiteren Fertigungsanlage zum Positionieren bzw. Ausrichten eines Werkstücks auf einer Grundstruktur und insbesondere zum Befestigen einer mehrteiligen Struktur aus Holzelementen und/oder Holzwerkstoffelementen auf einem Holzrahmenelement
- **Fig. 35:**: Ablaufdiagramm eines Verfahrens zum Positionieren bzw. Ausrichten eines Werkstücks auf einer Grundstruktur und insbesondere zum Befestigen einer mehrteiligen Struktur aus Holzelementen und/oder Holzwerkstoffelementen auf einem Holzrahmenelement
- **Fig. 36:**: Seitenansicht eines unteren Ausschnitts des Handhabungsaggregats von **Fig. 1****,** sowie der mehrteiligen Struktur und der Grundstruktur zu verschiedenen Zeitpunkten gemäß der Teilfiguren a) bis f) bei der Befestigung einer mehrteiligen Struktur aus Holzelementen und/oder Holzwerkstoffelementen auf einem Holzrahmenelement
- **Fig. 37:**: Prinzipskizzen für bevorzugte Verfahrwege eines der gezeigten oder beschriebenen Handhabungsaggregate auf der Grundstruktur zum Ausrichten, Positionieren und Befestigen von Werkstücken der mehrteiligen Struktur im halbautomatischen Betrieb (a) und im vollautomatischen Betrieb (b)

Die vorliegende Erfindung wird im Folgenden unter Bezugnahme auf die beigefügte Zeichnung näher beschrieben. Es ist nicht beabsichtigt, die Erfindung auf die dargestellten Ausführungsformen zu beschränken; vielmehr sollen diese Ausführungsformen dem Fachmann die Erfindung verständlich und vollständig offenbaren. In den Figuren der Zeichnung beziehen sich gleiche Nummern durchweg auf gleiche Elemente. Die Dicken und Abmessungen einiger Komponenten können aus Gründen der Übersichtlichkeit übertrieben dargestellt sein.

Sofern nicht anders definiert, haben alle hierin verwendeten Begriffe (einschließlich technischer und wissenschaftlicher Begriffe) die gleiche Bedeutung, wie sie von einem Fachmann auf dem Gebiet, zu dem diese Erfindung gehört, gemeinhin verstanden wird. Es versteht sich ferner, dass Begriffe, wie sie in allgemein gebräuchlichen Wörterbüchern definiert sind, so ausgelegt werden sollten, dass sie eine Bedeutung haben, die mit ihrer Bedeutung im Kontext des betreffenden Fachgebiets übereinstimmt, und dass sie nicht in einem idealisierten oder übermäßig formalen Sinne ausgelegt werden, es sei denn, dies ist hier ausdrücklich definiert.

Darüber hinaus können hier der Einfachheit halber räumlich relative Begriffe wie "unter", "unten", "über", "oben" und dergleichen verwendet werden, um die Beziehung eines Elements oder Merkmals zu einem anderen Element oder Merkmal zu beschreiben, wie in den Figuren dargestellt. Es versteht sich, dass die räumlich relativen Begriffe neben der in den Figuren dargestellten Ausrichtung auch andere Ausrichtungen insbesondere des nachfolgend beschriebenen Handhabungsaggregats im Gebrauch oder Betrieb umfassen sollen. Wenn beispielsweise das Handhabungsaggregat in den Figuren umgedreht wird, würden Elemente, die als "unter" oder "unterhalb" anderer Elemente oder Merkmale beschrieben werden, dann "über" oder "oberhalb" der anderen Elemente oder Merkmale ausgerichtet sein. Somit kann der beispielhafte Begriff "unter" sowohl eine Ausrichtung über als auch unter umfassen. Insbesondere kann die nachfolgend beschriebene Grundstruktur nicht nur auf einer horizontalen ebenen Fläche aufliegen sondern auch anders angeordnet sein (z.B. auf einer vertikalen ebenen Fläche stehend befestigt sein oder in beliebigen anderen geneigten und/oder verdrehten Ausrichtungen zwischen einer liegenden Anordnung und einer stehenden Anordnung angeordnet sein) und die hier verwendeten räumlich relativen Deskriptoren entsprechend interpretiert werden.

Die hier verwendete Terminologie dient nur der Beschreibung bestimmter Ausführungsformen und ist nicht als Einschränkung der Erfindung zu verstehen. Die hier verwendeten Singularformen "ein", "eine", "das", "der" und "die" schließen auch die Pluralformen ein, sofern aus dem Kontext nicht eindeutig etwas anderes hervorgeht. Es versteht sich ferner, dass die Begriffe "umfasst" und/oder "enthaltend", wenn sie in dieser Beschreibung verwendet werden, das Vorhandensein bestimmter Merkmale, ganzer Zahlen, Schritte, Operationen, Elemente und/oder Komponenten spezifizieren, jedoch nicht das Vorhandensein oder die Hinzufügung eines oder mehrerer anderer Merkmale, ganzer Zahlen, Schritte, Operationen, Elemente, Komponenten und/oder Gruppen davon ausschließen, und/oder Gruppen davon. Der hier verwendete Ausdruck "und/oder" schließt alle Kombinationen von einem oder mehreren der aufgeführten Merkmale ein. Die Begriffe "angebracht", "verbunden", "zusammengeschaltet", "kontaktierend", "montiert" und dergleichen können entweder eine direkte oder indirekte Befestigung oder einen Kontakt zwischen Elementen bedeuten, sofern nicht anders angegeben.

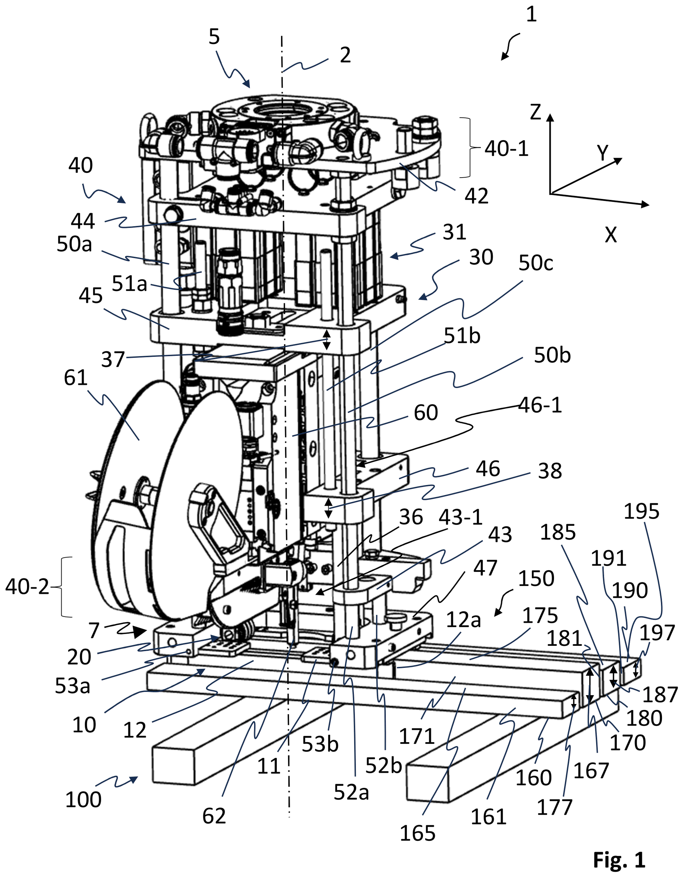

Fig. 1 zeigt ein Handhabungsaggregat 1 in einer ersten bevorzugten Ausführungsform zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 beispielsweise in Form eines Holzrahmenelements für eine Wand oder einen Boden bzw. eine Decke oder ein Dach eines Fertighauses. In der **Fig. 1** ist ein Koordinatensystem mit einer Längsrichtung X, einer dazu senkrechten Querrichtung Y und einer zu der Längsrichtung X und der Querrichtung Y senkrechten Höhenrichtung Z dargestellt, auf die im Folgenden jeweils Bezug genommen wird. Die Längsrichtung X und die Querrichtung Y spannen eine Ebene auf die bevorzugt parallel zur Erdoberfläche ist. Die Höhenrichtung Z ist somit bevorzugt senkrecht zur Erdoberfläche. Bei einer anderen Anordnung der Grundstruktur 100 im dreidimensionalen Raum ändern sich entsprechend die Relationen der Längsrichtung X, der Querrichtung Y und der Höhenrichtung Z zur Erdoberfläche.

Das Handhabungsaggregat 1 umfasst eine Tragstruktur 40, die sich entlang einer Längsachse 2 erstreckt, wobei die Längsachse 2 parallel zur Höhenrichtung Z ist. Die Tragstruktur 40 umfasst bevorzugt mindestens eine Stange 50a und weiter bevorzugt zwei parallel zueinander angeordnete Stangen 50a, 50b und noch weiter bevorzugt vier parallel zueinander angeordnete Stangen 50a, 50b, 50c, 50d, die bevorzugt zylinderförmig ausgestaltet ist bzw. sind. Die vier Stangen 50a, 50b, 50c, 50d sind in einer Ebene senkrecht zu der Längsachse 2 bevorzugt in den Ecken eines Rechtecks oder Trapezes angeordnet. Die Stangen 50a, 50b, 50c, 50d sind in der Ebene der Längsrichtung X und der Querrichtung Y gesehen bevorzugt an vier Ecken der Tragstruktur 40 angeordnet und soweit voneinander beabstandet, dass sich ein vordefinierter Hohlraum 41 innerhalb des Handhabungsaggregats 1 für eine Bearbeitungseinrichtung 60 zum Bearbeiten der Werkstücke 160, 170, 180, 190 ergibt. In dem in **Fig. 1** dargestellten Ausführungsbeispiel sind bevorzugt zwei der vier Stangen 50a, 50b, 50c, 50d als Gewindestangen ausgeführt und weitere zwei der vier Stangen 50a, 50b, 50c, 50d als Führungsstangen ohne Gewinde ausgeführt.

Die Tragstruktur umfasst ferner bevorzugt einen ersten bevorzugt plattenförmigen Haltekörper 42 an einem ersten endseitigen Abschnitt 40-1 der Tragstruktur 40 und einen zweiten bevorzugt plattenförmigen Halterkörper 43 an einem zweiten endseitigen Abschnitt 40-2 der Tragstruktur 40, wobei bei dem Ausführungsbeispiel gemäß **Fig. 1** sich der erste endseitige Abschnitt 40-1 und der zweite endseitige Abschnitt 40-2 an entgegengesetzten Enden der Tragstruktur 40 befinden. Ein Abstand zwischen dem ersten Haltekörper 42 und dem zweiten Haltekörper 43 bestimmt quasi eine unveränderliche Länge des Handhabungsaggregats 1 in der Höhenrichtung Z. Der erste Haltekörper 42 und der zweite Haltekörper 43 werden bevorzugt von den Stangen 50a, 50b, 50c, 50d durchdrungen und sind an den Stangen 50a, 50b, 50c, 50d befestigt bzw. verklemmt.

Das Handhabungsaggregat 1 umfasst an dem ersten endseitigen Abschnitt 42 bevorzugt an dem ersten Haltekörper 42 eine Kopplungseinrichtung 5, mit der das Handhabungsaggregat 1 mit einer externen Bewegungseinheit mechanisch gekoppelt werden kann. Die Kopplungseinrichtung 5 dient bevorzugt zur Übertragung bzw. Übermittlung von elektrischen Spannungen, elektrischen Signalen, optischen Signalen und/oder Pneumatikleitungen für Druckluft und/oder Niederdruck für nachfolgend noch zu benennende Komponenten des Handhabungsaggregats 1. Die Kopplungseinrichtung 5 ist bevorzugt bei verschiedenen Typen von Handhabungsaggregaten gleichgestaltet, so dass die verschiedenen Typen von Handhabungsaggregaten mit einer Bewegungseinheit gekoppelt werden können ohne technische Änderungen an der Bewegungseinheit vornehmen zu müssen. Die Kopplungseinrichtung 5 wird bevorzugt zentral von der Längsachse 2 geschnitten.

Die Tragstruktur 40 umfasst ferner bevorzugt unterhalb des ersten Haltekörpers 42 einen entlang der Längsachse 2 einstellbaren dritten bevorzugt plattenförmigen Haltekörper 44. Die Position des dritten Haltekörpers 44 auf den vier Stangen 50a, 50b, 50c, 50d wird dabei durch eine Abmessung der Bearbeitungseinrichtung 60 entlang der Längsachse 2 bestimmt. Da innerhalb des Handhabungsaggregats 1 verschiedene Bearbeitungseinrichtungen 60 zum einen von verschiedenen Herstellern und zum anderen für verschiedene Funktionen wie z.B. Befestigen, Markieren oder Reinigen eingesetzt werden können und die Bearbeitungseinrichtungen 60 daher verschiedene Abmessungen parallel zur Längsachse 2 haben können, ist eine Flexibilität bei der Platzierung des dritten Haltekörpers 44 entlang der Längsrichtung 2 von besonderem Vorteil. Der dritte Haltekörper 44 wird also passend zur Abmessung der Bearbeitungseinrichtung 60 entlang der Längsachse 2 derart mittels mindestens eines Befestigungsmittels 44-1 wie beispielsweise einer Rändelschraube an mindestens einer der Stangen 50a, 50b, 50c, 50d verklemmt, so dass ein Einwirkungsbereich 62 der Bearbeitungseinrichtung 60 bei einem Verbringen des Handhabungsaggregats 1 in eine Arbeitsstellung einen vordefinierten optimalen Abstand zu dem jeweiligen Werkstück 160, 170, 180, 190 hat.

Die Tragstruktur 40 umfasst ferner bevorzugt unterhalb des dritten Haltekörpers 42 einen entlang der Längsachse 2 verstellbaren bzw. verschiebbaren vierten bevorzugt plattenförmigen Haltekörper 45. Der vierte Haltekörper 45 ist Bestandteil einer Verstelleinrichtung 30 und ist im Vergleich zum dritten Haltekörper 44 nicht an den Stangen 50a, 50b, 50c, 50d verklemmt. Die Verstelleinrichtung 30 umfasst neben dem vierten Haltekörper 45 bevorzugt eine Antriebseinrichtung 31, so dass die Verstelleinrichtung 30 automatisiert betrieben werden kann. Die Antriebseinrichtung 31 ermöglicht einen linearen Hub der bevorzugt von zwei Hubzylindern ermöglicht wird und die bevorzugt von einer externer Steuereinrichtung ansteuerbar sind. Alternativ kann die Antriebseinrichtung 31 auch nur einen Hubzylinder oder auch mehr als zwei Hubzylinder umfassen. Die beiden Hubzylinder sind zwischen dem an den Stangen 50a, 50b, 50c, 50d verklemmten dritten Haltekörper 44 und dem fünften Haltekörper 45 angeordnet und jeweils mit einem Endbereich des jeweiligen Hubzylinders an einer der sich gegenüberliegenden Flächen der Haltekörper 44, 45 befestigt. Werden die beiden Hubzylinder synchron betätigt, dann bleibt der dritte Haltekörper 42 in seiner verklemmten Position und der vierte Haltekörper 45 verschiebt sich entsprechend des Hubs der Hubzylinder entlang der Stangen 50a, 50b, 50c, 50d,

Die Tragstruktur 40 bzw. die Verstelleinrichtung 30 umfasst ferner bevorzugt einen fünften bevorzugt plattenförmigen Haltekörper 46 unterhalb des vierten Haltekörpers 45, wobei der fünfte Haltekörper wie die anderen vier Haltekörper 42, 43, 44, 45 von den Stangen 50a, 50b, 50c, 50d durchdrungen wird. Der fünfte Haltekörper 46 ist nicht an den Stangen 50a, 50b, 50c, 50d verklemmt, so dass der fünfte Haltekörper 46 auf den Stangen 50a, 50b, 50c, 50d verschiebbar gelagert ist. Der fünfte Haltekörper 46 hat bevorzugt eine zentrale Aussparung 46-1, in der die Bearbeitungseinrichtung 60 aufgenommen ist.

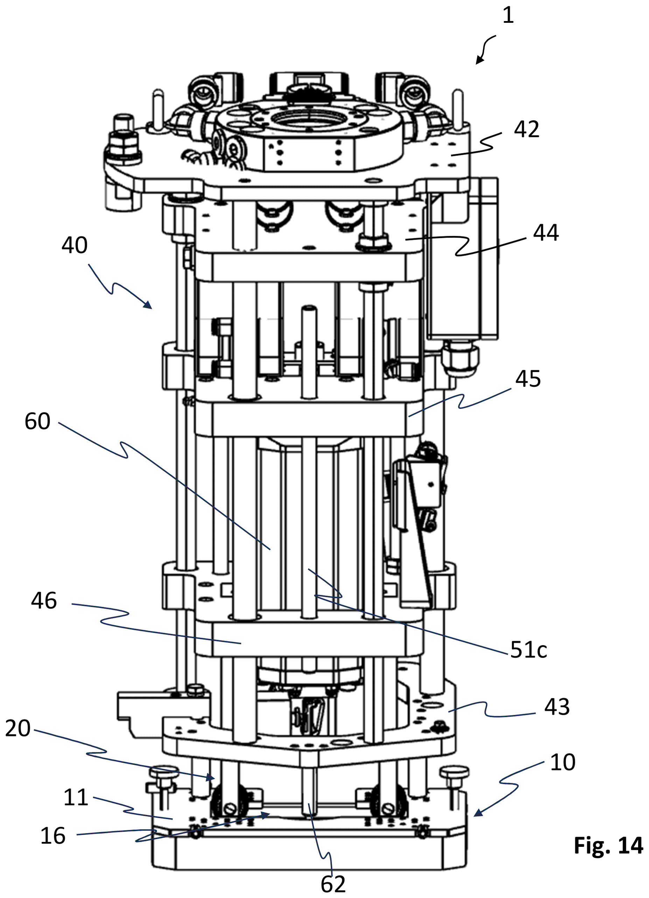

Die Tragstruktur 40 bzw. die Verstelleinrichtung 30 umfasst ferner bevorzugt mindestens eine Stange 51a und weiter bevorzugt zwei Stangen 51a, 51b und noch weiter bevorzugt drei Stangen 51a, 51b, 51c (die Stange 51c wird in **Fig. 14** gezeigt), die jeweils mit einem Längsabschnitt 37 mit dem vierten Haltekörper 45 verklemmt sind und mit einem weiteren Längsabschnitt 38 mit dem fünften Haltekörper 46 verklemmt sind. Dadurch wird der fünfte Haltekörper 46 auf den Stangen 50a, 50b, 50c, 50d in Position gehalten und sowohl die Stangen 51a, 51b als auch der fünfte Haltekörper 46 verschieben sich linear in dem Handhabungsaggregat 1 mit dem linearen Hub der Antriebseinrichtung 31.

Die Tragstruktur 40 bzw. die Verstelleinrichtung 30 umfasst ferner bevorzugt mindestens ein Abstandselement 36 und weiter bevorzugt zwei Abstandselemente 36, 36a, die jeweils mit einem oberen Endabschnitt an einer unteren Fläche des fünften Haltekörpers 46 angeordnet und befestigt sind. In einer alternativen Ausgestaltungsform ist der fünfte Haltekörper 46 nicht vorhanden und die zwei Abstandselemente 36, 36a sind entsprechend verlängert direkt an dem vierten Haltekörper 45 angeordnet bzw. befestigt. Dies alternative Ausgestaltungsform hat allerdings den Nachteil, dass je nach Abmessung der Bearbeitungseinrichtung 60 entlang der Längsachse 2, ein in der Länge passendes Paar an Abstandselementen 36, 36a ausgewählt werden muss, so dass mit einem Austausch der Bearbeitungseinrichtung 60 in der Regel auch die Abstandselemente 36, 36a ausgetauscht werden müssen.

Die in der **Fig. 1** dargestellte Kombination aus den Stangen 51a, 51b, dem fünften Haltekörper 46 und den Abstandselementen 36, 36a erlaubt es hingegen, dass keines dieser Elemente ausgetauscht werden muss, wenn eine andere Bearbeitungseinrichtung 60 mit einer anderen Abmessung entlang der Längsachse 2 in das Handhabungsaggregat eingebaut wird. Die Stangen 51a, 51b müssen lediglich mit einem anderen Längsabschnitt oder mit zwei anderen Längsabschnitten an dem vierten Halteelement 45 und dem fünften Halteelement 46 befestigt bzw. verklemmt werden, so dass untere Endabschnitte der zwei Abstandselemente 36, 26a nach der Verstellung des dritten Haltekörpers 44 entlang der Längsachse 2 wieder auf der gleichen Längsposition der Längsachse 2 angeordnet sind.

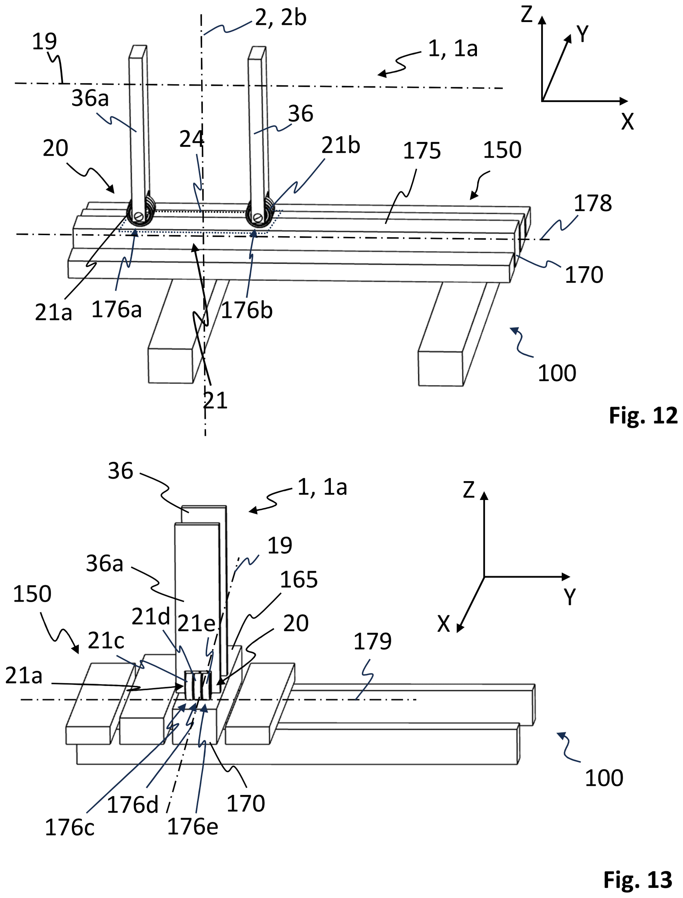

Das Handhabungsaggregat 1 umfasst ferner bevorzugt eine erste Anlegeeinrichtung 10 und eine zweite Anlegeeinrichtung 20, die beide an dem zweiten endseitigen Abschnitt 40-2 der Tragstruktur 40 angeordnet sind. Beide Anlegeeinrichtungen 10, 20 dienen dem Zweck, bevorzugt jeweils eines der Werkstücke 160, 170, 180, 190 auf einer Grundstruktur 100 auszurichten und jeweils an einer vordefinierten Position zu positionieren. Die zweite Anlegeeinrichtung 20 hat bevorzugt einen zweigeteilten Anlegebereich 24, von dem je ein Teilabschnitt an einem der unteren Endabschnitte der zwei Abstandselemente 36, 26a angeordnet bzw. bevorzugt lösbar befestigt (siehe auch **Fig. 12****).** Die Verstelleinrichtung 30 ist somit insgesamt ausgestaltet, die zweite Anlegeeinrichtung 20 entlang der Stangen 50a, 50b, 50c, 50d zu führen.

Die erste Anlegeeinrichtung 10 dient zum Führen eines Werkstücks 160, 170, 180, 190 an mindestens einer Längsseite 161, 171, 181, 191 des Werkstücks 160, 170, 180, 190 und zum Positionieren des Werkstücks 160, 170, 180, 190 auf der Grundstruktur 100. Die erste Anlegeeinrichtung 10 umfasst mindestens ein erstes Führungselement 12 mit einer Führungsfläche 12a, die zum Ausrichten und Positionieren des Werkstücks 160, 170, 180, 190 auf der Grundstruktur 100 an der mindestens einen Längsseite 161, 171, 181, 191 des Werkstücks 160, 170, 180, 190 entlanggeführt wird. Durch die Auswechselbarkeit der ersten Anlegeeinrichtung 10 gegen eine weitere erste Anlegeeinrichtung 10 können wie bei einem Baukastensystem verschiedene Anlegeeinrichtungen 10 mit verschieden gestalteten Führungselementen und verschieden beabstandeten Führungselementen bereitgestellt werden, um das Handhabungsaggregat 1 an eine individuell zu fertigende mehrteilige Struktur 150 bestehend aus den Werkstücken 160, 170, 180, 190 anzupassen.

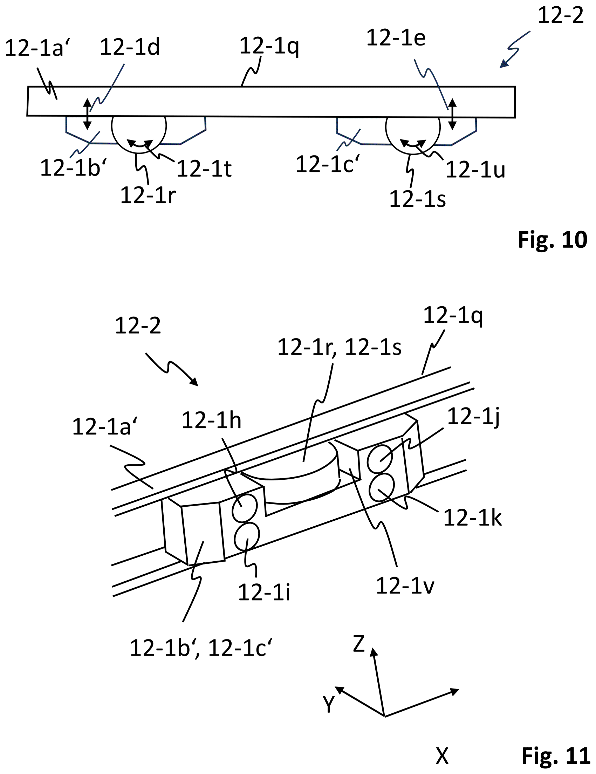

Die zweite Anlegeeinrichtung 20 ist vorgesehen, um an der Oberseite 165, 175, 185, 195 des jeweiligen Werkstücks 160, 170, 180, 190 in Anlage gebracht zu werden und um Anlegeelemente 21a, 21b, 21c, 21d, 21e (siehe **Fig. 11** und **Fig. 12****)** entlang der Oberseite 165, 175, 185, 195 des jeweiligen Werkstücks 160, 170, 180, 190 zu führen, um dadurch das jeweilige Werkstück 160, 170, 180, 190 in der Höhenrichtung Z auszurichten und zu positionieren. Dabei wird bevorzugt zumindest zweitweise über die Anlegeelemente 21a, 21b, 21c, 21d, 21e ein Druck auf die Oberseite 165, 175, 185, 195 des jeweiligen Werkstücks 160, 170, 180, 190 ausgeübt, um das jeweilige Werkstücks 160, 170, 180, 190 an der Grundstruktur 100 anzudrücken.

Die Bearbeitungseinrichtung 60 ist bevorzugt eine Befestigungseinrichtung mit einer Ausgabemündung 62 für Befestigungsmittel, wobei die Ausgabemündung 62 bevorzugt am unteren Ende des zweiten endseitigen Abschnitts 40-2 der Tragstruktur 40 angeordnet ist. Alternativ kann die Bearbeitungseinrichtung 60 beispielsweise eine Zerspanungseinrichtung sein, um das jeweilige Werkstück 160, 170, 180, 190 für die mehrteilige Struktur 150 final anzupassen, oder eine Reinigungseinrichtung zum Reinigen des jeweiligen Werkstücks 160, 170, 180, 190 sein.

Die Tragstruktur 40 bzw. eine Lattenschuheinheit 7 umfasst ferner im Bereich des zweiten endseitigen Abschnitts 43 unterhalb des zweiten Haltekörpers 43 bevorzugt einen sechsten bevorzugt plattenförmigen Haltekörper 47, der bevorzugt über weitere Stangen 52a, 52b an dem zweiten Haltekörper 43 befestigt bzw. verklemmt ist. Der sechste Halteköper 47-1 hat bevorzugt eine zentrale Aussparung 47-1 für eine Aufnahme von Elementen der Bearbeitungseinrichtung 60 wie die Ausgabemündung 62 und für die Aufnahme der Abstandselemente 36, 36a. Die Lattenschuheinheit 7 umfasst den sechsten Haltekörper 47, die Stangen 52a, 52b, die erste Anlegeeinrichtung 10, die lösbar an dem sechsten Haltekörper 47 befestigt ist, und die zweite Anlegeeinrichtung 20. Der sechste Haltekörper 47 umfasst an beiden Längsseiten bevorzugt jeweils zwei Gewindebohrungen 53a, 53b, in die bevorzugt versenkbare Madenschrauben eingedreht sind, um damit die erste Anlegeeinrichtung 10 an dem sechsten Haltekörper 47 festzulegen.

Anstelle der Lattenschuheinheit 7 kann an dem zweiten Haltekörper 43 auch eine andere Einheit wie beispielsweise eine Fahrwerkseinheit mit Rädern angeordnet sein, so dass das Handhabungsaggregat 1 über die Grundstruktur 100 gerollt werden kann. Eine solche Fahrwerkseinheit wird beispielsweise eingesetzt, wenn mit einer in dem Handhabungsaggregat 1 angeordneten Befestigungseinrichtung 60 Platten auf der Grundstruktur 100 aufliegen und mit dem Handhabungsaggregat 1 an der Grundstruktur 100 befestigt werden sollen.

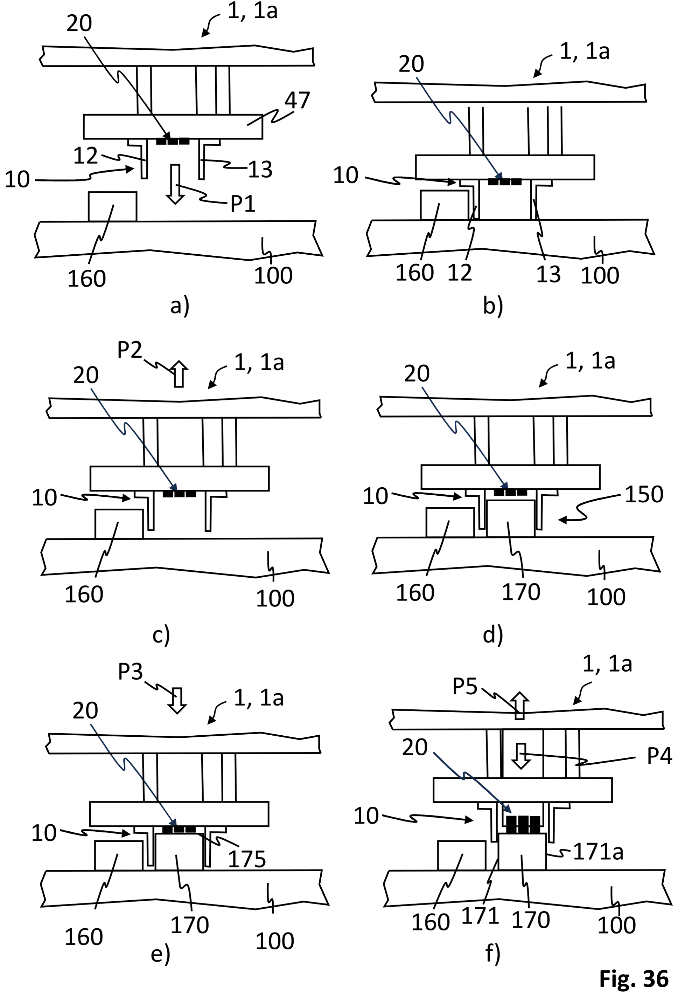

Die Verstelleinrichtung 30 ist primär dazu eingerichtet, eine Relativposition der zweiten Anlegeeinrichtung 20 in Bezug auf die erste Anlegeeinrichtung 10 einzustellen, so dass das jeweilige Werkstück 160, 170, 180, 190 in einer Grundstellung der Verstelleinrichtung 30 an der ersten Anlegeeinrichtung 10 und der zweiten Anlegeeinrichtung 20 vorpositionierbar ist und in einer Arbeitsstellung der Verstelleinrichtung das jeweilige Werkstück 160, 170, 180, 190 ausgerichtet und positioniert werden kann, wobei die erste Anlegeeinrichtung 10 und die zweite Anlegeeinrichtung 20 mit dem jeweiligen Werkstück 160, 170, 180, 190 in Anlage gebracht wird und beide Anlegeeinrichtung 10, 20 entlang der Längsrichtung X an dem jeweiligen Werkstück 160, 170, 180, 190 bevorzugt von einem Ende des jeweiligen Werkstücks 160, 170, 180, 190 bis zum entgegengesetzten Ende des jeweiligen Werkstücks 160, 170, 180, 190 verfahren werden. Die Grundstellung und die Arbeitsstellung werden z.B. in **Fig. 36** gezeigt. Wahlweise ist die zweite Anlegeeinrichtung 20 über einen vordefinierten Druck auf die jeweilige Oberseite 165, 175, 185, 195 des jeweiligen Werkstücks 160, 170, 180, 190 an der Grundstruktur 100 andrückbar, um in der Höhenrichtung Z verbogene Werkstücke auf der Grundstruktur 100 platt zu drücken.

An der Tragstruktur 40 sind somit die erste Anlegeeinrichtung 10, die zweite Anlegeeinrichtung 20 und die Kopplungseinrichtung 5 zur Kopplung mit einer externen Bewegungseinheit angeordnet. Dabei ist die Kopplungseinrichtung 5 bevorzugt an dem ersten endseitigen Abschnitt 42 der Tragstruktur 40 angeordnet und die erste Anlegeeinrichtung 10 und die zweite Anlegeeinrichtung 20 sind bevorzugt an dem zweiten endseitigen Abschnitt 43 der Tragstruktur 40 angeordnet.

Das Handhabungsaggregat 1 umfasst ferner bevorzugt die Befestigungseinrichtung 60, die bevorzugt an einer Unterseite des vierten Haltekörpers 45 befestigt ist und somit ebenfalls mittels des Hubs der Antriebseinrichtung 31 linear verstellt werden kann, und ein Magazin 61 für Befestigungsmittel der Befestigungseinrichtung 60. In vordefinierten Längsabschnitten wird das jeweilige Werkstück 160, 170, 180, 190 bevorzugt mit der Befestigungseinrichtung 60 an der Grundstruktur 100 befestigt, wobei bevorzugt mindestens zwei Befestigungspunkte verwendet werden. Als Befestigungsmittel kommen bevorzugt Nägel und insbesondere Schraubnägel insbesondere aus Stahl zum Einsatz, die insbesondere mittels Druckluft aus einer Ausgabemündung 62 der Befestigungseinrichtung 60 ausgestoßen und in das Werkstück 160 eingetrieben werden, um das Werkstück 160 auf der Grundstruktur 100 zu befestigen. Die Schraubnägel umfassen einen Kopf, einen Schaft und eine Spitze am Ende des Schaftes, wobei der Schaft ein Gewinde umfasst. Schraubnägel haben im Gegensatz zu Klammern insbesondere den Vorteil, dass die Schraubnägel stets mit einer Richtung parallel zur Höhenrichtung Z in die Werkstücke 160, 170, 180, 190 und die darunterliegende Grundstruktur 100 eingetrieben werden können egal um welchen Anwendungsbereich es sich handelt. Alternativ können als Befestigungsmittel Schrauben, handelsübliche Nägel oder Klammern verwendet werden, wobei bei der Verwendung von Klammern in dem Handhabungsaggregat 1 bevorzugt zusätzlich eine Kippeinrichtung verbaut ist, um die Richtung der Klammern variieren zu können, insbesondere wenn damit Platten auf Latten befestigt werden. Klammern werden bevorzugt mit einem Winkel von 30° zur Längsfaser einer Latte eingeschossen.

Die Anordnung des dritten Haltekörpers 44 in der Höhenrichtung Z an den Stangen 50a, 50b, 50c, 50d und die Anordnung der Stangen 51a, 51b an den Haltekörpern 45, 46 ist so zueinander gewählt, dass die Ausgabemündung 62 einen vorbestimmten Abstand zu dem Anlegebereich 24 der zweiten Anlegeeinrichtung 20 einnimmt, da über diesen vorbestimmten Abstand neben dem Druck der Druckluft zum Ausschießen der Befestigungsmittel eine gewünschte Eintreibtiefe der Befestigungsmittel eingestellt werden kann. Die gewünschte Eintreibtiefe ist insbesondere derart, dass ein Nagelkopf des eingetriebenen Nagels bündig mit der Oberseite des Werkstücks abschließt. Die Position der Ausgabemündung 62 innerhalb des Handhabungsaggregats 1 wird dabei bevorzugt durch die Anordnung der Stangen 51a, 51b an den Haltekörpern 45, 46 eingestellt.

In einer bevorzugten Ausführungsform befinden sich Mittelpunkte der Kopplungseinrichtung 5, der Ausgabemündung 62, der ersten Anlegeeinrichtung 10 und der zweiten Anlegeeinrichtung 20 senkrecht übereinander und auf der Längsachse 2, die zentral durch die Kopplungseinrichtung 5 verläuft. Dies ermöglicht eine Drehung des Handhabungsaggregats 1 mittels einer externen Bewegungseinheit ohne dass sich eine mit dem Handhabungsaggregat 1 angepeilte Stelle auf dem jeweiligen Werkstück 160, 170, 180, 190 ändert.

Mittels der ersten Anlegeeinrichtung 10 und der zweiten Anlegeeinrichtung 20 können die Werkstücke 160, 170, 180, 190 auf der Grundstruktur 100 ineinandergreifend, mit Kontakt zueinander oder mit einem vordefinierten Abstand zueinander ausgerichtet und positioniert werden, so dass die Werkstücke 160, 170, 180, 190 bevorzugt mit der Befestigungseinrichtung 60 anschließend auf der Grundstruktur 100 befestigt werden können.

In einer alternativen Ausgestaltung des Handhabungsaggregats 1 ohne die Befestigungseinrichtung 60 wird bei der Verwendung des Handhabungsaggregats 1 in einer entsprechenden Fertigungsanlage die Befestigungseinrichtung durch ein weiteres benachbartes Handhabungsaggregat bzw. Befestigungsaggregat bereitgestellt.

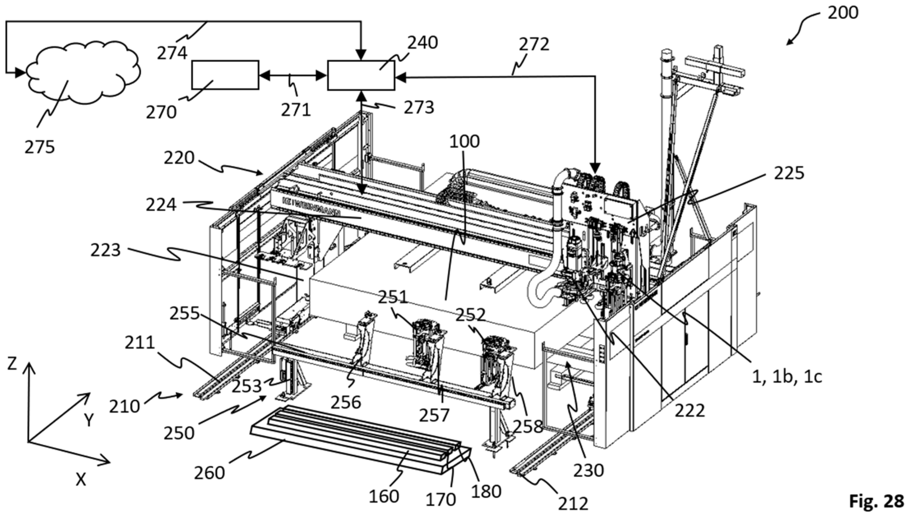

Das Handhabungsaggregat 1 wird bevorzugt bei einer Fertigungsanlage mit einem Bearbeitungsportal eingesetzt, das über die Grundstruktur 100 verfahrbar angeordnet ist (siehe beispielsweise **Fig. 28****).** Dabei ist das Handhabungsaggregat 1 bevorzugt hängend an dem Bearbeitungsportal angeordnet.

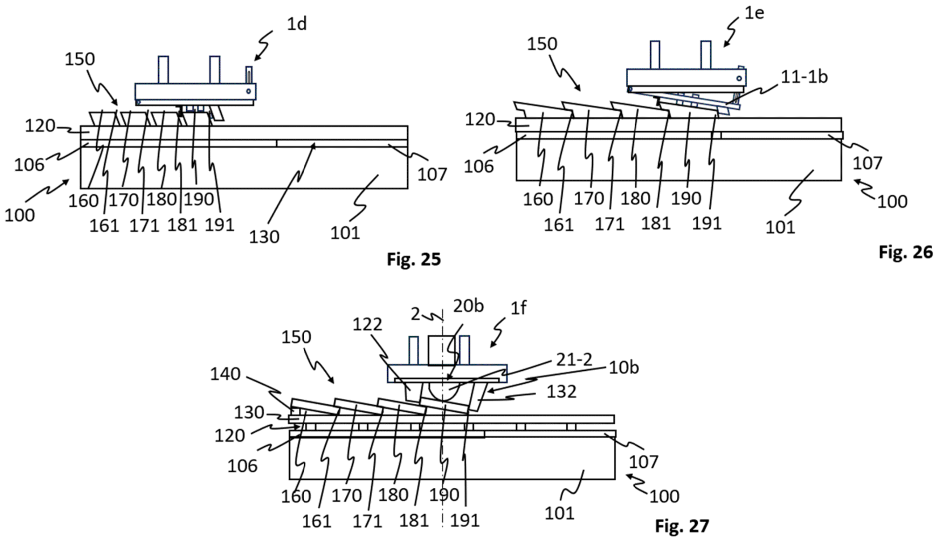

Die mehrteilige Struktur 150 ist insbesondere eine Holzfassade auf einem Holzrahmenwandelement oder eine Holzlattenanordnung auf einem Holzrahmendachelement. Die Werkstücke 160, 170, 180, 190 mit jeweils zugehörigen Oberseiten 165, 175, 185, 195 und den jeweils zugehörigen Längsseiten 161, 171, 181, 191 sind in diesem Fall Bretter, Latten, Leisten oder Rahmenschenkel mit vordefinierten Abmessungen, die bevorzugt in einer Dimension (in **Fig. 1** ist es die Längsrichtung X) eine Abmessung haben, die mindestens einen Faktor 5 größer ist, als die Abmessungen in den anderen beiden Dimensionen (in **Fig. 1** sind es die Querrichtung Y und die Höhenrichtung Z). Im Querschnitt können die Werkstücke 160, 170, 180, 190 verschiedenste Formen haben, wie beispielsweise die **Fig. 25** bis **Fig. 27** zeigen. Bevorzugt haben Werkstücke 160, 170, 180, 190 zumindest zwei oder mehr als zwei unterschiedliche vordefinierte Abmessungen in der Höhenrichtung Z, so daß mit den Werkstücken 160, 170, 180, 190 wie in **Fig. 1** gezeigt eine unterschiedlich hohe Holzfassadenstruktur 150 realisiert werden kann. Eine solche Holzfassadenstruktur ist auch unter dem Begriff "Skyline-Schalung" bekannt. Bevorzugt unterscheiden sich die Abmessungen in der Höhenrichtung Z mindenstens um einen Faktor 2, so dass der Höhenunterschied deutlich sichtbar wird und damit einen ästhetischen Effekt erzielt. Die Abmessungen der Werkstücke 160, 170, 180, 190 in der Höhenrichtung liegen bevorzugt in einem Bereich zwischen 10 mm und 100 mm, weiter bevorzugt in einem Bereich zwischen 15 mm und 80 mm und noch weiter bevorzugt in einem Bereich zwischen 18 mm und 50 mm.

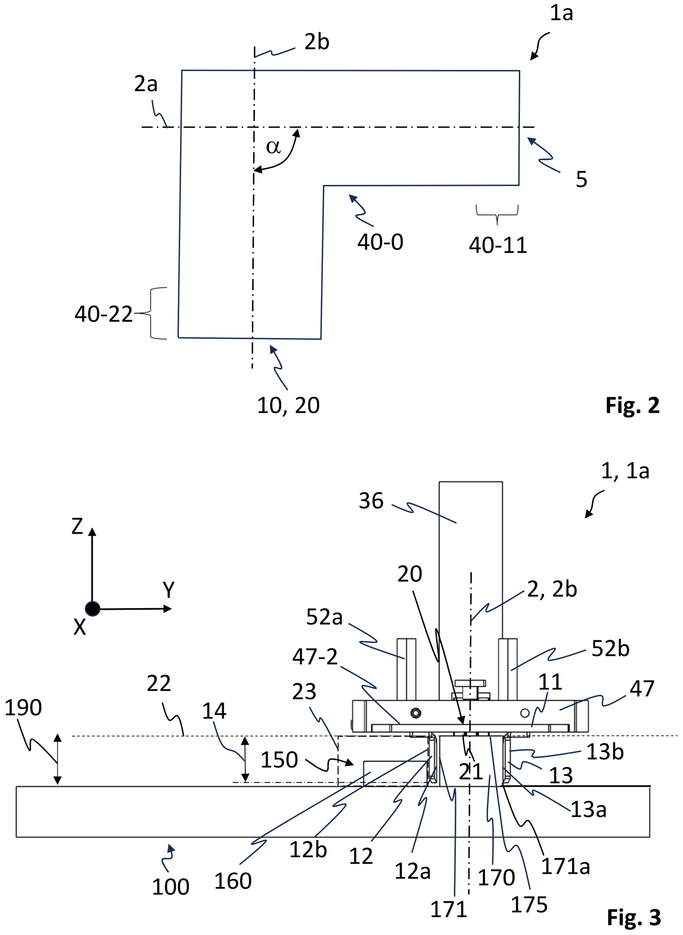

**Fig. 2** zeigt stark vereinfacht ein Handhabungsaggregat 1a in einer zweiten bevorzugten Ausführungsform zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses. Der grundlegende Unterschied in der Ausgestaltung des Handhabungsaggregats 1a im Vergleich zur Ausgestaltung des Handhabungsaggregats 1 besteht darin, dass endseitige Abschnitte 40-11, 40-22 einer Tragstruktur 40-0 nicht durch eine gemeinsame Längsachse des Handhabungsaggregats 1a geschnitten werden. Stattdessen ist das Handhabungsaggregat 1a derart gestaltet, dass eine erste Längsachse 2a des Handhabungsaggregats 1a senkrecht von dem ersten endseitigen Abschnitt 40-11 der Tragstruktur 40-0 mit der Kopplungseinrichtung 5 geschnitten wird und eine zweite Längsachse 2b des Handhabungsaggregats 1a senkrecht von dem zweiten endseitigen Abschnitt 40-22 der Tragstruktur 40-0 mit der ersten Anlegeeinrichtung 10 und der zweiten Anlegeeinrichtung 20 geschnitten wird. Ein Winkel a zwischen der ersten Längsachse 2a und der zweiten Längsachse 2b liegt bevorzugt im Intervall zwischen 45° und 135°. Weiter bevorzugt liegt der Winkel a im Intervall zwischen 80° und 100°. Noch weiter bevorzugt liegt der Winkel a im Intervall zwischen 85° und 95°, so dass zwischen der ersten Längsachse 2a und der zweiten Längsachse 2b ein senkrechter Winkel bzw. annähernd ein senkrechter Winkel gebildet wird. Insbesondere kann die Tragstruktur 40-0 derart gestaltet sein, dass dass Handhabungsaggregat 1a im Wesentlichen wie das Handhabungsaggregat 1 gestaltet ist und nur die Kopplungseinrichtung 5 seitlich angeordnet ist, so dass das Handhabungsaggregat 1a im Gegensatz zum Handhabungsaggregat 1 seitlich von einer externen Bewegungseinheit aufgenommen werden kann.

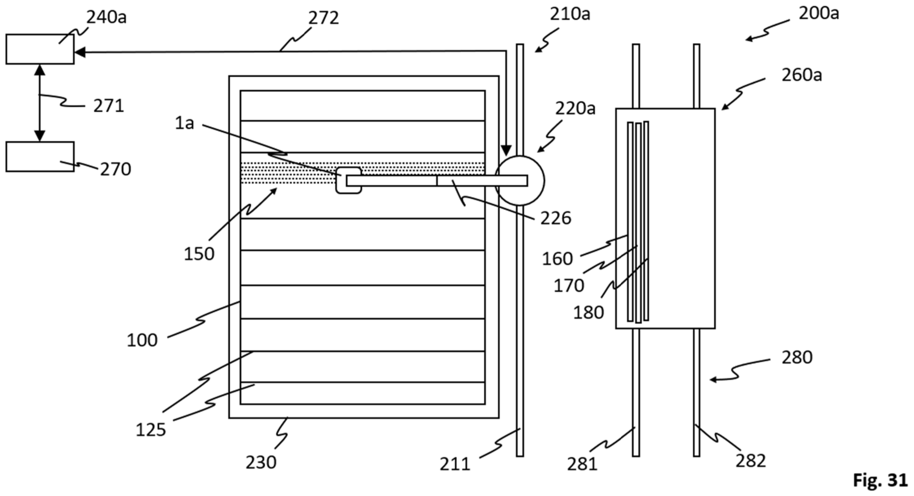

Das Handhabungsaggregat 1a wird bevorzugt bei einer Fertigungsanlage mit einem Knickarmroboter eingesetzt, der seitlich neben der Grundstruktur 100 verfahrbar angeordnet ist (siehe **Fig. 31** bis **Fig. 34**). Dabei ist das Handhabungsaggregat 1a bevorzugt am freien Ende eines Knickarms des Knickarmroboters angeordnet.

**Fig. 3** zeigt eine Seitenansicht eines Ausschnitts des Handhabungsaggregat 1, 1a im Bereich des zweiten endseitigen Abschnitts 40-2, 40-22 der Tragstruktur 40, 40-0 sowie die mehrteilige Struktur 150 und die Grundstruktur 100. Bei dem in **Fig. 3** dargestellten Handhabungsaggregat 1, 1a wurden aus Gründen der Übersichtlichkeit einige der in **Fig. 1** dargestellten Komponenten im Bereich des zweiten endseitigen Abschnitts 40-2, 40-22 der Tragstruktur 40, 40-0 weggelassen. Es wird in **Fig. 3** eine Situation gezeigt, bei der von der mehrteiligen Struktur 150 bereits ein erstes Werkstück 160 an der Grundstruktur 100 befestigt wurde und das Handhabungsaggregat 1, 1a gerade ein zweites Werkstück 170 handhabt bzw. ausrichtet und positioniert und bevorzugt auch an der Grundstuktur 100 befestigt.

Die erste Anlegeeinrichtung 10 umfasst eine Grundplatte 11, an der das erste Führungselement 12 mit der Führungsfläche 12a zum Anlegen an die Längsseite 171 des zweiten Werkstücks 170 und ein zweites Führungselement 13 mit einer Führungsfläche 13a zum Anlegen an eine der Längsseite 171 gegenüberliegende Längsseite 171a des zweiten Werkstücks 170 angeordnet ist. Das erste Führungselement 12 und das zweite Führungselement 13 können jeweils aus einem Teil bestehen, bei dem die jeweilige Abmessung des Führungselements 12, 13 parallel zur Längsachse 2, 2b des Handhabungsaggregats 1, 1a in Abhängigkeit von vordefinierten Dickenabmessungen der auszurichtenden und zu positionierenden Werkstücke 160, 170, 180, 190 vordefiniert ist. Für kleine zu erstellende Abstände zwischen den Werkstücken 160, 170, 180, 190 der mehrteiligen Struktur 150 im Bereich von 3 mm bis 5 mm bestehen die Führungselemente 12, 13 bevorzugt aus einem Blech mit einer Dicke in der Querrichtung Y von mindestens 3 mm und bevorzugt mit einer Dicke zwischen zwischen 3 mm und 5 mm.

Alternativ ist es auch möglich, dass die jeweilige Höhe des Führungselements 12, 13 z.B. wie bei einem Legobaukastenprinzip durch ein Ineinanderfügen und ein Aneinanderbefestigen von normierten Bauteilen an die vordefinierte Dickenabmessung bzw. den vordefinierten Dickenabmessungsbereich der Werkstücke 160, 170, 180, 190 angepasst werden kann, ohne dass die erste Anlegeeinrichtung 10 komplett ausgetauscht werden muss.

Die Grundplatte 11 ist an dem sechsten Haltekörper 47 bevorzugt auswechselbar angeordnet, wobei der sechste Haltekörper 47 neben einer zentralen Aussparung 47-1 für die zweite Anlegeeinrichtung 20 und die Austrittsmündung 61 der Befestigungseinrichtung 60 bevorzugt an der unteren Seite eine Aussparung 47-2 zur Aufnahme der Grundplatte 11 umfasst. Die jeweilige Führungsfläche 12a, 13a des jeweiligen Führungselements 12, 13 hat in der Höhenrichtung Z bevorzugt eine effektiv nutzbare vordefinierte Längenabmessung 14, die im Wesentlichen einer vordefinierten maximalen Dicke 190 in der Höhenrichtung Z der auszurichtenden und zu positionierenden Werkstücke 160, 170, 180, 190 plus einer Länge von bevorzugt von 1 mm bis 10 mm, weiter bevorzugt von 3 mm bis 8 mm und noch weiter bevorzugt von 4 mm bis 6 mm. Effektiv nutzbare Längenabmessung bedeutet jene Längenabmessung in der Höhenrichtung Z des Führungselement 12, 13, die tatsächlich an der jeweiligen Längsseite der Werkstücke 160, 170, 180, 190 in Anlage gebracht werden kann und beispielsweise nicht durch die Gegenwart der zweiten Anlegeeinrichtung 20 oder einen Übergangsbereich zur Grundplatte an einer Anlage an die jeweilige Längsseite der Werkstücke 160, 170, 180, 190 gehindert wird.

Je nach Art der zu fertigenden mehrteiligen Struktur 150 wird die erste Anlegeeinrichtung 10 mit einem der beiden Führungselemente 12, 13 oder beiden Führungselementen 12, 13 ausgestattet, wobei die Form des jeweiligen Führungselements 12, 13 bzw. der Führungselemente 12, 13 an die Form der Längsseiten 161, 171, 171a, 181, 181a, 191 der Werkstücke 160, 170, 180, 190 passend ausgewählt wird. Soll die mehrteilige Struktur 150 in Form einer Lückenschalung mit einem vordefinierten Abstand zwischen den Werkstücken 160, 170, 180, 190 erstellt werden, dann befinden sich bevorzugt beide Führungselemente 12, 13 an der ersten Anlegeeinrichtung 10. Soll die mehrteilige Struktur 150 in Form einer Nut-Feder-Schalung oder einer StülpSchalung oder einer Stoß-Schalung erstellt werden, dann befindet sich bevorzugt nur eines der beiden Führungselemente 12, 13 an der ersten Anlegeeinrichtung 10, damit ein noch auszurichtendes und zu positionierendes Werkstück mit Kontakt zu der bereits ausgerichteten, positionierten und befestigten Werkstücken der gefertigten mehrteiligen Struktur 150 positioniert werden kann.

Die zweite Anlegeeinrichtung 20 umfasst einen Anlegeabschnitt 21, der insbesondere als mindestens ein Rollkörper (siehe beispielsweise **Fig. 12** und **Fig. 13****)** ausgestaltet ist. Der Anlegeabschnitt 21 kommt bei der Ausrichtung und Positionierung des zweiten Werkstücks 170 mit der Oberseite 175 des zweiten Werkstücks 170 in Anlage. Dabei definiert der Anlegeabschnitt 21 eine im Wesentlichen parallel zur Oberseite 175 des zweiten Werkstücks 170 verlaufende Anlegeebene 22. Die Anlegeebene 22 definiert bis auf die Führungselemente 12, 13 eine erste Grenzfläche des Handhabungsaggregats 1, 1a. Dies bedeutet, dass in den Raum jenseits der ersten Grenzfläche nur das vorhandene Führungselement 12, 13 oder die beiden vorhandenen Führungselemente 12, 13 ragen. Eine der jeweiligen Führungsfläche 12a, 13a gegenüberliegende Gegenfläche 12b, 13b des jeweiligen Führungselements 12, 13 definiert ferner eine zweite Grenzfläche des Handhabungsaggregats 1, 1a. Dabei begrenzen die erste Grenzfläche und die zweite Grenzfläche einen Raumbereich 23, in den keine Komponenten des Handhabungsaggregat 1, 1a, hineinragen und in den ein bereits aus dem ersten Werkstück 160 gefertigter Teil der mehrteiligen Teilstruktur 150 beim Ausrichten und Positionieren des zweiten Werkstücks 170 gelangen kann.

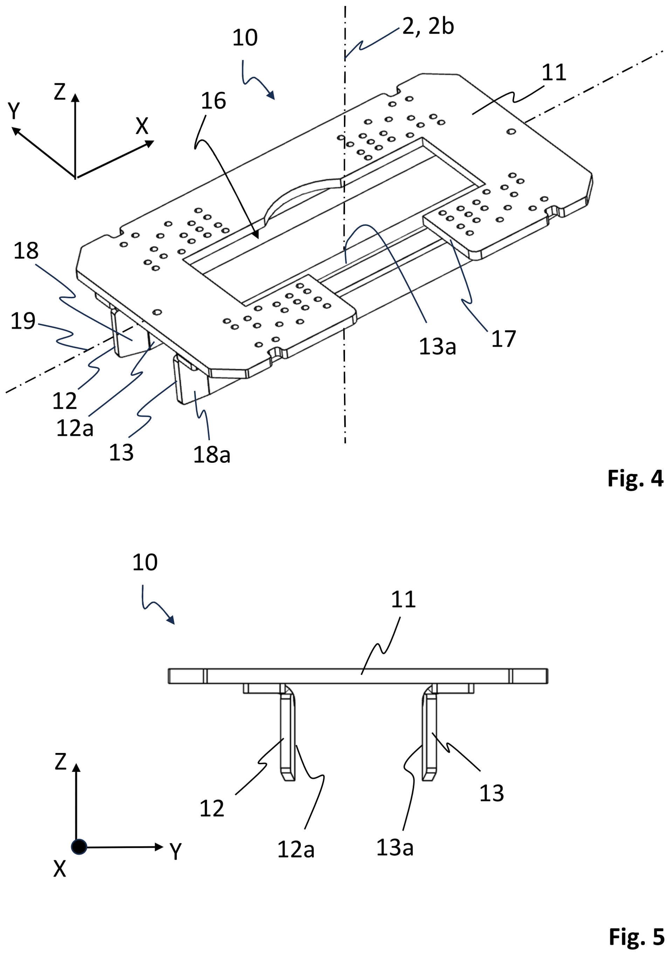

Die Fig. 4 zeigt in einer dreidimensionalen Ansicht die erste Anlegeeinrichtung 10 mit der Grundplatte 11 und den beiden Führungselementen 12, 13. Die Grundplatte 10 umfasst eine bevorzugt zentrale Aussparung 16 für ein Hindurchführen des Anlegeabschnitt 21 oder eines Anlegebereich 24 (siehe **Fig. 12****)** der zweiten Anlegeeinrichtung 20. Der Anlegeabschnitt 21 kann somit variabel entlang der jeweiligen Längsrichtung 2, 2b des Handhabungsaggregats 1, 1a durch die Grundplatte 11 hindurch verstellt werden. Die Grundplatte 11 umfasst ferner bevorzugt eine seitliche nach außen offene Aussparung 17, die bevorzugt in die zentrale Aussparung 16 übergeht, wobei die beiden Aussparungen 16, 17 bevorzugt eine T-förmige Aussparung in der Grundplatte 11 bilden. Die seitliche Aussparung 17 erleichtert u.a. den Austausch der Befestigungseinrichtung 60 mit der Austrittsmündung 61, ohne vorher die erste Anlegeeinrichtung 10 ausbauen zu müssen.

Die Führungselemente 12, 13 sind bevorzugt derart gestaltet, dass die Führungsflächen 12a, 13a an den jeweiligen Endbereichen 18, 18a in Richtung einer Führungsachse 19, die parallel zu der Längsrichtung X verläuft, nach außen in der Y-Richtung (für das erste Führungselement 12) bzw. entgegengesetzt zu der Y-Richtung (für das zweite Führungselement 13) geneigt sind, so dass das jeweilige Werkstück 160, 170, 180, 190 leichter zwischen den Führungselementen 12, 13 eingeführt werden kann.

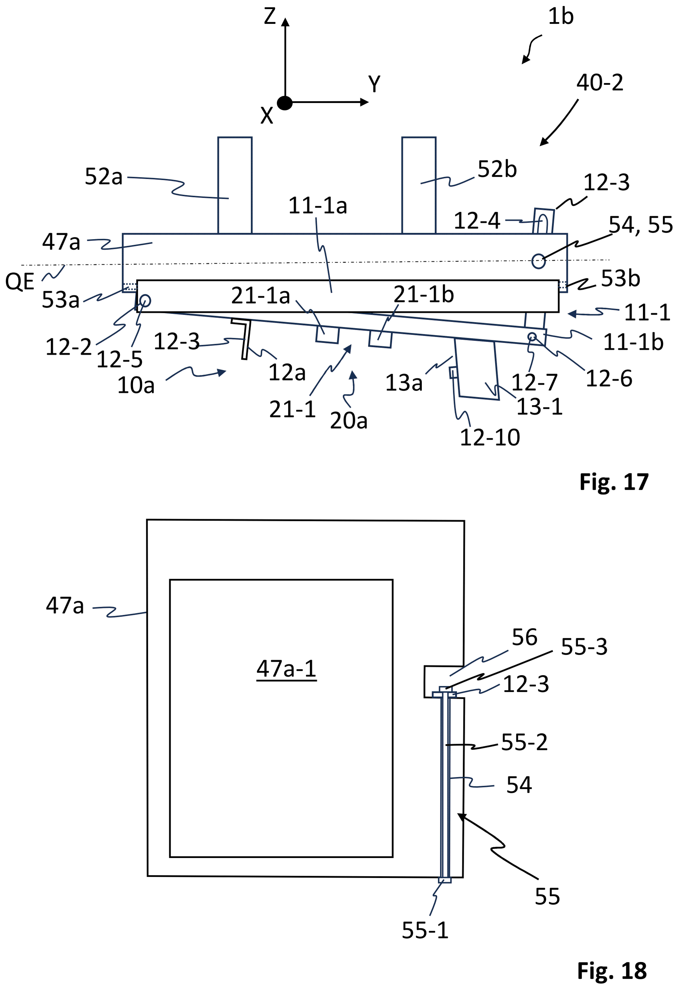

Die **Fig. 5** zeigt in der Y-Z-Ebene die erste Anlegeeinrichtung 10 insbesondere zur Ausrichtung und Positionierung der Werkstücke 160, 170, 180, 190, für eine Lückenschalung. Die Führungselemente 12, 13 bestehen bevorzugt aus ungleichschenkligen Breitwinkeln, wobei die Breitwinkel bevorzugt aus Edelstahl oder Aluminium gefertigt sind. Der kürzere Schenkel der Breitwinkel des jeweiligen Führungselements 12, 13 ist bevorzugt an der Grundplatte 11 befestigt. Der längere Schenkel der Breitwinkel wird bevorzugt zum Ausrichten und Positionieren der Werkstücke 160, 170, 180, 190 verwendet. Anstelle der in der **Fig. 5** gezeigten identischen Führungselemente 12, 13 können auch zwei Führungselemente 12, 13 verwendet werden, deren Abmessung in der Höhenrichtung Z unterschiedlich ist (siehe beispielsweise **Fig. 17****),** um auch Holzfassaden wie beispielsweise in **Fig. 27** gezeigt zu fertigen ohne den in **Fig. 17** dargestellten und in Bezug zur **Fig. 17** beschriebenen Schwenkmechanismus überhaupt zu benötigen.

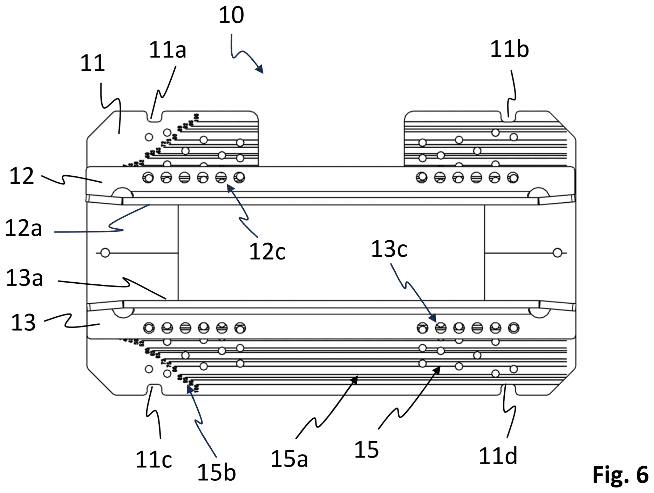

Die **Fig. 6** zeigt in einer Draufsicht die Unterseite der ersten Anlegeeinrichtung 10, wo die beiden Führungselemente 12, 13 angeordnet und lösbar befestigt sind. Die Grundplatte 11 umfasst bevorzugt an beiden Längsseiten jeweils zwei Kerben 11a, 11b, 11c, 11d, in die bevorzugt die -oder Gewindestifte zum Befestigen der Grundplatte 11 an dem sechsten Haltekörper 47 eingreifen. Die Grundplatte 11 umfasst ferner bevorzugt ein Lochraster 15 mit Gewindebohrungen zur variablen Befestigung der Führungselemente 12, 13. Das Lochraster 15 ist bevorzugt in vier Abschnitten der Grundplatte 11 eingebracht, wobei jeweils zwei der Abschnitte für die Befestigung eines der Führungselemente 12, 13 dient. Die Führungselemente 12, 13 umfassen jeweils ein Lochraster 12c, 13c, das bevorzugt analog zu dem Lochraster 15 der Grundplatte 11 jeweils in zwei Abschnitte unterteilt ist. Die Unterteilung der Lochraster 15, 12c, 13c in die jeweiligen Abschnitte ermöglicht es, die Führungselemente 12, 13 auf einfache Art und Weise parallel zu einander an der Grundplatte 11 passend zu der vordefinierten Breitenabmessung der auszurichtenden und zu positionierenden Werkstücke 160, 170, 180, 190 ohne weitere Hilfsmittel zur Kontrolle der Parallelität zu befestigen. Bei der Verwendung nur eines Abschnitts könnte es ansonsten leicht zu einer ungewollten Winkelabweichung bei den Führungselementen 12, 13 durch eine Verdrehung des jeweiligen Führungselements 12, 13 beim Ausrichten und Positionieren der Werkstücke 160, 170, 180, 190 kommen. Über die Auswahl der passenden Löcher der Lochraster 15, 12c, 13c kann nicht nur der Abstand der Führungselemente 12, 13 an die vordefinierte Breite der Werkstücke 160, 170, 180, 190 angepasst werden, sondern dadurch kann auch ein vordefinierter sogenannter Außenkante-zu-Befestigungsmittelpositions-Abstand eingestellt werden, wobei es sich dabei um den kürzesten Abstand zwischen einer Längsseite 161, 171, 171a, 181, 181a, 191 des jeweiligen Werkstücks 160, 170, 180, 190 zu einer vordefinierten Position auf der Oberseite des jeweiligen Werkstücks 160, 170, 180, 190 handelt, wo das jeweilige Befestigungsmittel eingetrieben werden soll. Der Außenkante-zu-Befestigungsmittelpositions-Abstand liegt beispielsweise im Bereich zwischen 15 mm und 50 mm.

Alternativ zu den Lochrastern, 15, 12c, 13c könnten auch zwei Führungsschienen und weiter bevorzugt eine Antriebseinrichtung zur stufenlosen bevorzugt automatisierten Einstellung des Abstands der Führungselemente 12, 13 verwendet werden, wobei sich die Führungsschienen senkrecht zu den Führungsflächen 12a, 13a erstrecken und die Führungsschienen an der Unterseite der Grundplatte 11 angeordnet sind. Die oberen Enden der Führungselemente 12, 13 sind entsprechend geformt, um in diese Führungsschienen einzugreifen. Ein Feststellen der beiden Führungselemente 12, 13 an vordefinierten Positionen auf der Grundplatte könnte bei einem manuellen Verstellen der Führungselemente 12, 13 mittels Schrauben oder Hebelspannern erfolgen.

Die Grundplatte 11 umfasst ferner bevorzugt Linienmarkierungen 15a, die als Hilfsmittel zur Positionierung und Ausrichtung der Führungselemente 12, 13 beim Befestigen der Führungselemente 12, 13 an der Grundplatte 11 dienen und bevorzugt im Bereich beider Längsseiten der Grundplatte 11 angeordnet sind. Die Grundplatte 11 umfasst ferner bevorzugt an einem Ende der Linienmarkierungen 15a Breitenmaßangaben 15b als weiteres Hilfsmittel bei der Montage der Führungselemente 12, 13 an der Grundplatte 11. Die Breitenmaßangaben 15b sind dabei so platziert und angeordnet, dass beim teilweisen Überdecken der jeweiligen Linienmarkierung mit einem Randbereich des kürzeren Schenkels des Breitwinkels des jeweiligen Führungselements 12, 13 ein entsprechender vordefinierter Abstand zwischen den Führungsflächen 12a, 12b der Führungselemente 12, 13 vorliegt. Der vordefinierte Abstand der beiden Führungselemente 12, 13 ist dabei bevorzugt im Fall von Werkstücken für eine Holzfassade im Bereich von 0,5 mm bis 3 mm und weiter bevorzugt im Bereich von 1 mm bis 1,5 mm größer als die vordefinierte Breite der Werkstücke 160, 170, 180, 190. Der vordefinierte Abstand der beiden Führungselemente 12, 13 ist dabei bevorzugt im Fall von Werkstücken für eine Dachlattenkonstruktion im Bereich von 0,5 mm bis 5 mm und weiter bevorzugt im Bereich von 1 mm bis 3 mm größer und noch weiter bevorzugt im Bereich von 1,5 mm bis 2,5 mm größer als die vordefinierte Breite der Werkstücke 160, 170, 180, 190.

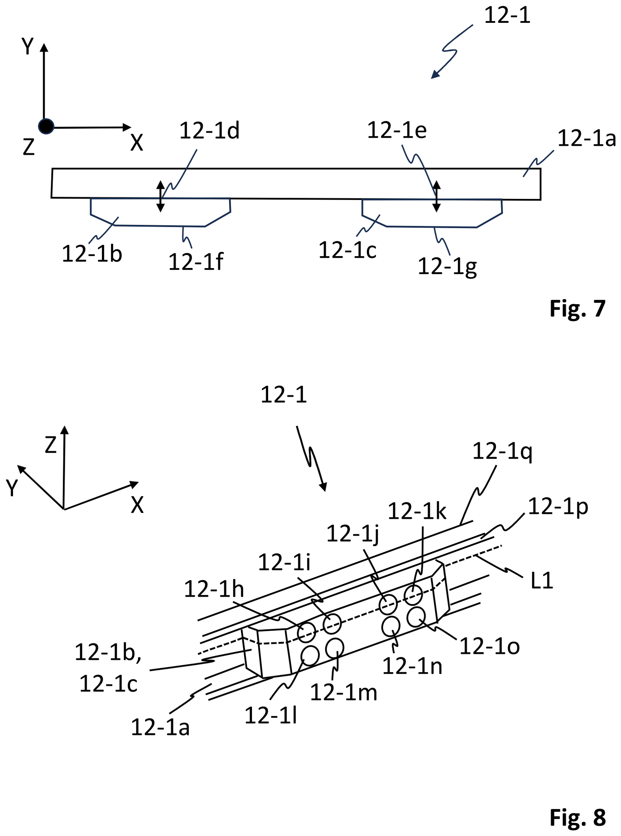

Die Fig. 7 zeigt eine bevorzugte Ausführungsform eines Führungselements 12-1 für die erste Anlegeeinrichtung 10. Hierbei ist eine Anlegefläche des Führungselements 12-1, die zur Anlage an die Längsseiten 161, 171, 171a, 181, 181a, 191 des jeweiligen Werkstücks 160, 170, 180, 190 gelangt, in der Querrichtung Y federn gelagert, wobei die federn gelagerte Anlegefläche des Führungselements 12-1 einteilig, zweiteilig oder auch mehr als zweiteilig sein kann. Das Führungselement 12-1 umfasst bevorzugt ein Leiste 12-1a, ein erstes Federelement 12-1b und ein von dem ersten Federelement 12-1b beabstandetes zweites Federelement 12-1c. Falls nur ein Federelement verwendet wird, dann wird dieses Federelement bevorzugt entlang der Leiste 12-1a gesehen bevorzugt mittig bzw. zentral angeordnet. Die Federelemente 12-1b, 12-1c sind in der Y-Richtung federnd an der Leiste 12-1a angeordnet, wobei die Federung durch Pfeile 12-1d, 12-1e angedeutet ist. Eine jeweilige Anlegefläche 12-1f, 12-1g des jeweiligen Federelementes 12-1b, 12-1c ist bevorzugt an in der X-Richtung liegenden Enden in der Querrichtung Y abgeschrägt, so dass die Werkstücke 160, 170, 180, 190 leichter in Anlage mit einer solchen ersten Anlegeeinrichtung gebracht werden können. Die Leiste 12-1a bevorzugt in Form eines U-Profils und die Federelemente 12-1b, 12-1c bestehen bevorzugt aus Stahl oder Aluminium. Die Verwendung solcher Führungselemente 12-1 kann eine sichere präzise Ausrichtung und Positionierung der Werkstücke 160, 170, 180, 190 selbst dann gewährleisten, wenn eine tatsächliche Breite der Werkstücke 160, 170, 180, 190 beispielsweise um eine bekannte Toleranz T von +/- 5 mm oder um eine bekannte Toleranz von +/- 2 mm um eine vordefinierte Breite VB der Werkstücke 160, 170, 180, 190 schwankt. Dazu wird der vordefinierte Abstand VA zwischen der Anlegefläche 12-1f, 12-g und einer nicht gefederten Anlegefläche des gegenüberliegenden Führungselements bevorzugt nach der folgenden Formel bestimmt:$VA = VB - T / 2 .$

Der jeweilige Federweg der Federelemente 12-1b, 12-1c hat dabei bevorzugt eine Länge von T.

Falls beide Führungselemente mit einer gefederten Anlegefläche ausgestattet sind, wird der vordefinierte Abstand VA zwischen der Anlegefläche 12-1f, 12-g und einer gefederten Anlegefläche des gegenüberliegenden Führungselements bevorzugt ebenfalls nach der folgenden Formel bestimmt:$VA = VB - T / 2 .$

Der jeweilige Federweg der Federelemente 12-1b, 12-1c hat dabei bevorzugt eine Länge von T/2.

Dies bedeutet, dass selbst bei Werkstücken, bei denen die tatsächliche Breite der vordefinierten Breite entspricht, die Federelemente 12-1b, 12-1c zur Leiste 12-1a gedrückt werden und in jedem Fall auch bei den schmalsten Werkstücken innerhalb der Toleranz das jeweilige Werkstück 160, 170, 180, 190 an beiden Längsseiten mit den gegenüberliegenden Führungselementen für eine präzise Positionierung und Ausrichtung in Kontakt ist.

Die **Fig. 8** zeigt einen Ausschnitt des Führungselement 12-1 mit einem der Federelemente 12-1b, 12-1c und der Leiste 12-1a in einer dreidimensionalen Darstellung mit einer gestrichelt eingezeichneten Linie L1, mit der eine Querschnittsebene das Federelement 12-1b, 12-1c und die Leiste 12-1a schneidet. Das Federelement 12-1b, 12-1c hat im Bereich der Anlegefläche 12-1f, 12-1g mindestens zwei in der Längsrichtung X versetzte Bohrungen 12-1h, 12-1k und weiter bevorzugt vier in der Längsrichtung X versetzte Bohrungen 12-1h, 12-1i, 12-1j, 12-1k und noch weiter bevorzugt vier weitere in der Höhenrichtung Z versetzte Bohrungen 12-1l, 12-1m, 12-1n, 12-1o. In der **Fig. 8** ist ferner eine obere zu den Federelementen 12-1b, 12-1c weisende Kante der Leiste 12-1a mit dem Bezugszeichen 12-1p und eine von den Federelementen 12-1b, 12-1c wegweisende Kante der Leiste 12-1a mit dem Bezugszeichen 12-1q versehen.

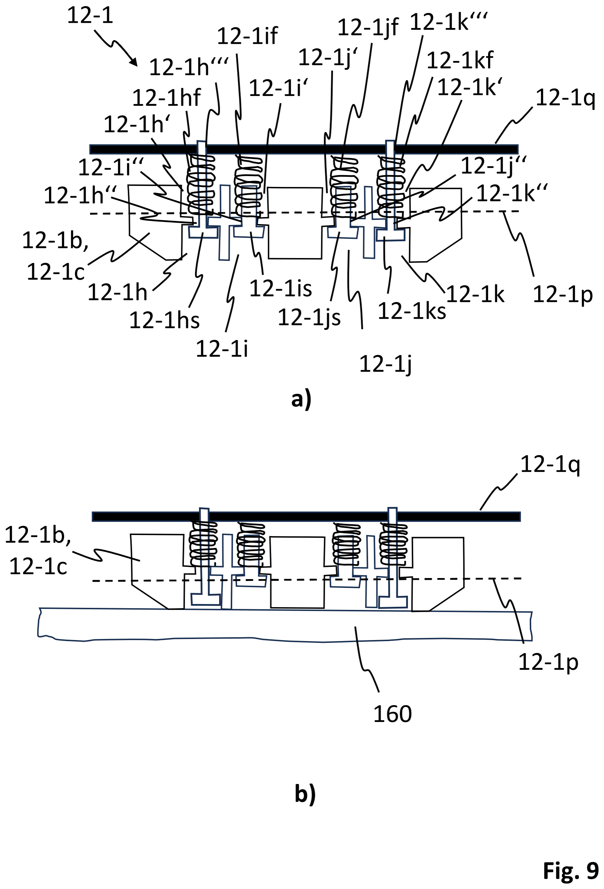

Die **Fig. 9** zeigt in zwei Teildarstellungen a) (ohne Werkstück in Anlage) und b) (mit Werkstück 160 in Anlage) den inneren Aufbau der Leiste 12-1a und eines der Federelemente 12-1b, 12-1c gemäß der in der **Fig. 8** mit der gestrichelten Linie L1 gekennzeichneten Querschnittsebene. Den Bohrungen 12-1h, 12-1i, 12-1j, 12-1k liegen jeweils Bohrungen 12-1h', 12-1i', 12-1j', 12-1k' gegenüber, die durch Bohrungen 12-1h", 12-1i", 12-1j", 12-1k" mit kleinerem Durchmesser, so dass Gewindestangen von Schrauben 12-1hs, 12-1is, 12-1js, 12-jks hindurchpassen, verbunden sind. In die Bohrungen 12-1h', 12-1i', 12-1j', 12-1k' sind Federn 12-1hf, 12-1if, 12-1jf, 12-1kf eingesetzt. Die äußeren Schrauben 12-1hs, 12-1ks sind bevorzugt in Gewindebohrungen 12-1h‴, 12-1k‴ der Kante 12-1q der Leiste 12-1a eingeschraubt. Dabei wird die Länge der Federn 12-1hf, 12-1if, 12-1jf, 12-1kf bevorzugt so gewählt, dass die Federn 12-1hf, 12-1if, 12-1jf, 12-1kf auch ohne Anlage eines Werkstücks an der Anlegefläche 12-1f, 12-1g leicht vorgespannt sind. Die inneren Schrauben 12-1is, 12-1js sind bevorzugt in Gewinden 12-1i", 12-1j‴ der Bohrungen 12-1i, 12-1j eingeschraubt. Durch diese Anordnung wird eine Federung der Federelemente 12-1b, 12-1c gewährleistet. In der **Fig. 9 b)** ist erkennbar, wie durch Anlage des Werkstücks 160 das Federelement 12-1b, 12-1b in Richtung der Kante 12-1q gedrückt wurde, so dass die Federn 12-1hf, 12-1if, 12-1jf, 12-1kf deutlich gestaucht sind.

Die **Fig. 10** zeigt eine weitere bevorzugte Ausführungsform eines Führungselements 12-2 für die erste Anlegeeinrichtung 10. Hierbei umfassen Federelemente 12-1b', 12-1c' im Gegensatz zu den Federelementen 12-1b, 12-1c jeweils ein Rolle 12-1r, 12-1s, so dass die Federelemente 12-1b', 12-1c' an den Längsseiten 161, 171, 171a, 181, 181a, 191 der Werkstücke 160, 170, 180, 190 abrollen können, wenn die Federelemente 12-1b', 12-1c' in Anlage zu den Längsseiten 161, 171, 171a, 181, 181a, 191 gebracht werden und die erste Anlegeeinrichtung in der Längsrichtung X entlang der Werkstücke 160, 170, 180, 190 bewegt wird. Die Rotationsbewegung der Rollen 12-1r, 12-1s ist durch Pfeile 12-1t, 12-1u angedeutet.

Die **Fig. 11** zeigt einen Ausschnitt des Führungselement 12-2 mit einem der Federelemente 12-1b', 12-1c' und der Leiste 12-1a' in einer dreidimensionalen Darstellung. Hierbei ist gut erkennbar, dass die jeweilige Rolle 12-1r, 12-1s in einer Aussparung 12-1v des jeweiligen Federelements 12-1b', 12-1c' rotierbar angeordnet ist. Im Gegensatz zu den Federelementen 12-1b, 12-1c haben die Federelemente 12-1b', 12-1c' im Bereich der jeweiligen Anlegefläche jeweils nur vier Bohrungen 12-1h, 12-1i, 12-1j, 12-1k (je zwei seitlich von der Rolle 12-1r, 12-1s angeordnet) mit dahinter liegend jeweils angeordneten Federn, deren Anordnung wie bei der **Fig. 9 a)** beschrieben ausgeführt ist. Alternativ ist zu beiden Seite der Rolle 12-1r, 12-1s jeweils nur eine Feder in einer entsprechend zentral in der Höhenrichtung Z angeordneten Bohrung angeordnet. Bevorzugt hat die Leiste 12-1a' in der hinteren Kante bzw. Ebene 12-1q jeweils im Bereich der Federelemente 12-1b', 12-1c' eine Öffnung, durch die die jeweilige Rolle 12-1r, 12-1s hindurchtreten kann, wenn das jeweilige Federelemente 12-1b', 12-1c' durch Anlage an ein Werkstück entsprechend weit in die Leiste 12-1a' hineingedrückt wird.

Die **Fig. 12** und **Fig. 13** zeigen jeweils eine dreidimensionale Ansicht der zweiten Anlegeeinrichtung 20 des Handhabungsaggregats 1, 1a sowie der mehrteiligen Struktur 150 und der Grundstruktur 100, wobei der Unterschied zwischen den beiden Ansichten darin besteht, dass die zweite Ansicht gegenüber der ersten Ansicht um 90° um die jeweilige Längsachse 2, 2b des Handhabungsaggregats 1, 1a gedreht ist. Bei den beiden Darstellungen des Handhabungsaggregats 1, 1a wurden viele Komponenten des Handhabungsaggregats 1, 1a im Bereich des zweiten endseitigen Abschnitts 40-2, 40-22 der jeweiligen Tragstruktur 40, 40-0 weggelassen, damit die Bestandteile der zweiten Anlegeeinrichtung 20 besser ersichtlich sind. Der Anlegeabschnitt 21 umfasst bevorzugt mindestens zwei gegenüber der zentralen Längsachse 2, 2b seitlich entlang der Längsachse 19 versetzte Teilabschnitte 21a, 21b. Diese Teilabschnitte 21a, 21b definieren zusammen mit dem dazwischenliegenden Flächenbereich den Anlegebereich 24 der zweiten Anlegeeinrichtung 20. Die Teilabschnitte 21a, 21b sind vorgesehen, um mindestens zwei Bereiche 176a, 176b der Oberseite 175 des zweiten Werkstücks 170 entlang dessen Längsachse 178, die parallel zur Führungsachse 19 und zur Längsrichtung X ist, zu kontaktieren. Die Teilabschnitte 21a, 21b sind wiederum bevorzugt in mindestens zwei seitlich entlang einer Querachse 179 des zweiten Werkstücks 170, die senkrecht zur Führungsachse 19 und zur Längsachse 178 und parallel zur Querrichtung Y verläuft, versetzte Teilabschnitte 21c, 21d, 21e unterteilt. Die Teilabschnitte 21c, 21d, 21e sind somit vorgesehen, um mindestens zwei Bereiche 176c, 176d, 176e der Oberseite 175 des zweiten Werkstücks 170 in dessen Querausdehnungsrichtung zu kontaktieren.

Die **Fig. 14** zeigt eine dreidimensionale Ansicht des Handhabungsaggregats 1 mit zum Teil weggelassenen Bestandteilen (insbesondere der sechste Haltekörper 47) im Bereich des zweiten endseitigen Abschnitts 40-2 der Tragstruktur 40 zur besseren Sichtbarkeit der Anordnung der zweiten Anlegeeinrichtung 20 und dessen Anordnung in Bezug auf die erste Anlegeeinrichtung 10 und die Ausgabemündung 62 der Befestigungseinrichtung 60. Es lässt sich bei dieser Darstellung gut erkennen, wie die zweite Anlegeeinrichtung 20 in die Grundplatte 11 der ersten Anlegeeinrichtung 10 im Bereich der zentralen Aussparung 16 hineinragt.

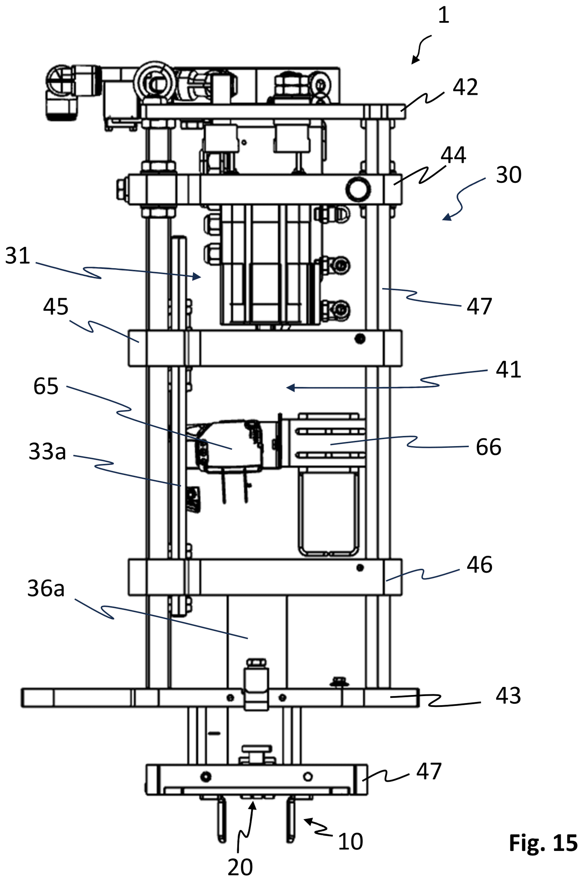

Die **Fig. 15** zeigt in einer Seitenansicht das Handhabungsaggregat 1, wobei Komponenten, die zur Befestigungseinrichtung 60 und zum Magazin 62 gehören, zur besseren Sichtbarkeit anderer Bestandteile des Handhabungsaggregats 1 weggelassen wurden. In der Ansicht der **Fig. 15** ist insbesondere der vordefinierte in der Höhenrichtung einstellbare Hohlraum 41 innerhalb der Tragstruktur 40 für die nicht dargestellte Befestigungseinrichtung 60 gut erkennbar. Das Handhabungsaggregat 1 umfasst ferner bevorzugt einen Sensor 65 und einen Halter 66 für den Sensor 65, wobei der Halter 66 an der Tragstruktur 40 angeordnet bzw. befestigt ist. Der Sensor 65 wird eingesetzt, um zu messen, ob sich eines der Werkstücke 160, 170, 180, 190 wie vorgesehen unter dem Handhabungsaggregat 1 im Bereich der ersten Anlegeeinrichtung 10 und der zweiten Anlegeeinrichtung 20 befindet. Falls sich kein Werkstück wie vorgesehen dort befindet, wird bevorzugt eine Fehlermeldung von einer übergeordneten Steuerungseinrichtung ausgegeben und die weitere Bewegung des Handhabungsaggregats gestoppt, so dass ein Bediener die Ursache des Fehlers feststellen und möglichst beheben kann.

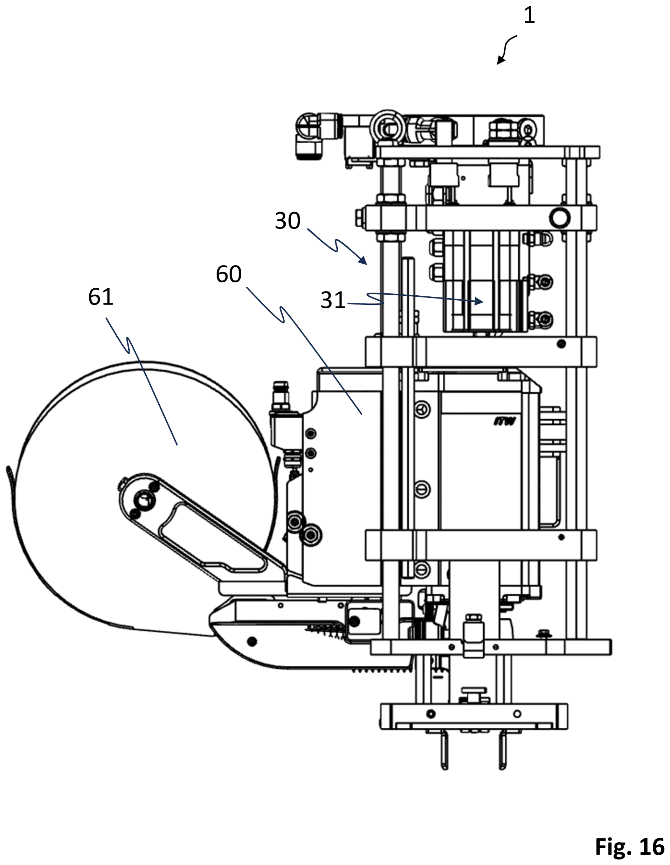

Die **Fig. 16** zeigt die gleiche Seitenansicht der Handhabungsaggregat 1 wie bei **Fig. 15** mit dem Unterschied, dass alle Komponenten des Handhabungsaggregats 1 inklusiver der Befestigungseinrichtung 60 und des Magazins 61 für die Befestigungsmittel dargestellt sind.

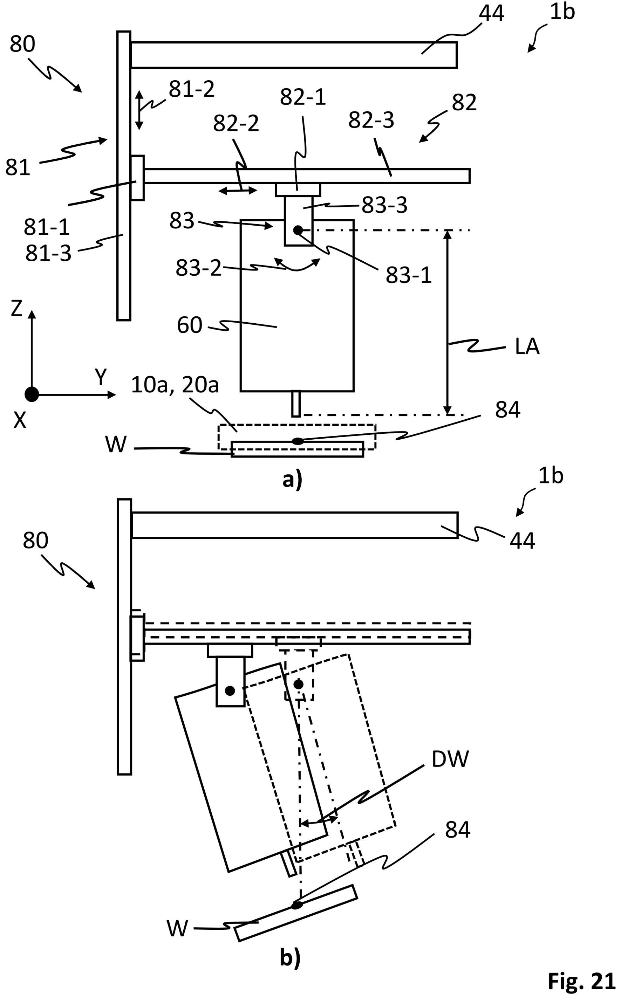

Die **Fig. 17** zeigt in einer Seitenansicht ein Ausschnitt eines Handhabungsaggregats 1b in einer dritten Ausführungsform zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses. Von dem Handhabungsaggregat 1b ist nur der Bereich des zweiten endseitigen Abschnitts 40-2, 40-22 der Tragstruktur 40, 40-0 gezeigt. Die übrige Ausgestaltung des Handhabungsaggregats 1b ist ähnlich zu jener der Handhabungsaggregate 1, 1a, wobei die Verstelleinrichtung 30 und dessen Komponenten für den vordefinierten Kurzhub nicht vorhanden sind. Die Position einer ersten Anlegeeinrichtung 10a und einer zweiten Anlegeeinrichtung 20a zueinander in der Höhenrichtung Z kann also nicht verändert werden. Stattdessen umfasst das Handhabungsaggregat 1b bevorzugt eine automatisiert angetriebene Schwenk- und Translationseinrichtung (siehe **Fig. 21****),** an der Bearbeitungseinrichtung 60 angeordnet ist und mit der die Bearbeitungseinrichtung 60 sowohl um die Längsrichtung X verschwenkt als auch in der Querrichtung Y und der Höhenrichtung Z verstellt werden kann, um einem Verschwenken der ersten Anlegeeinrichtung 10a und der zweiten Anlegeeinrichtung 20a folgen zu können, so dass sich beispielsweise die Austrittsmündung 62 der Befestigungseinrichtung in Relation zur ersten Anlegeeinrichtung 10a und der zweiten Anlegeeinrichtung 20a nicht ändert.

Die Tragstruktur 40 umfasst einen sechsten Haltekörper 47a ähnlich zu dem sechsten Haltekörper 47 des Handhabungsaggregats 1, wobei der sechste Haltekörper 47a in einem Randbereich eine Bohrung 54 zur Aufnahme für eines Haltemittels 55 beispielsweise in Form einer Schraube umfasst. An dem sechsten Haltekörper 47a ist bevorzugt lösbar eine zweigeteilte Grundplatte 11-1 angeordnet. Eine erste Teilplatte 11-1a der Grundplatte 11 ist lösbar in einer unteren Aussparung des sechsten Haltekörpers 47a befestigt. Dazu werden Madenschrauben bzw. Gewindestifte in bevorzugt vier Gewindebohrungen des sechsten Haltekörpers 47a eingeschraubt, wobei in **Fig. 16** zwei Gewindebohrungen 53a, 53b dargestellt sind. Die erste Teilplatte 11-1a hat an einer Längsseite parallel zur Längsrichtung X eine durchgehende Bohrung 12-2 zur Aufnahme einer Schwenkachse 12-5. Eine zweite Teilplatte 11-1b der Grundplatte hat ebenfalls an einer Längsseite parallel zur Längsrichtung X eine durchgehende Bohrung zur Aufnahme der Schwenkachse 12-5, so dass die zweite Teilplatte 11-1b schwenkbar an der ersten Teilplatte 11-1a angeordnet ist. Die erste Anlegeeinrichtung 10a zum Ausrichten und Positionieren der Werkstücke 160, 170, 180, 190 an dessen Längsseiten und die zweite Anlegeeinrichtung 20a zum Ausrichten und Positionieren der Werkstücke 160, 170, 180, 190 an dessen Oberseiten sind an einer Unterseite der zweiten Teilplatte 11-1b angeordnet.

Ein jeweilig erforderlicher Schwenkwinkel wird mittels eines Schwenkhalters 12-3 eingestellt, wobei der Schwenkhalter 12-3 zum einen an der zweiten Teilplatte 11-1b mittels eines Haltemittels 12-7 und an dem sechsten Halterkörper 47a mittels des Haltemittels 55 angeordnet ist. Der Schwenkhalter 12-3 umfasst bevorzugt eine längliche Aussparung 12-4, durch die das Haltemittel 55 durchgeführt und an dem sechsten Haltekörper 47a befestigt wird. Alternativ zu dem Schwenkhalter 12-3, der bevorzugt manuell eingestellt wird, kann eine angetriebene Stelleinrichtung wie beispielsweise ein angetriebener Hubzylinder verwendet werden, der mit einem Ende an dem sechsten Haltekörper 47a und mit einem entgegengesetzten Ende an der zweiten Teilplatte 11-1b befestigt ist. In einer weiteren bevorzugten alternativen Variante kann anstelle des Schwenkhalters 12-3 eine Feder mit einer vordefinierten Federkonstante verwendet werden, so dass sich auch dadurch eine Neigung der Führungsplatte 12-1 automatisch aufgrund der Gewichtskraft der zweiten Teilplatte 11-1b an eine vordefinierte Neigung der Oberseite der Werkstücke 160, 170, 180, 190 gegenüber einer Ebene, die durch die Längsrichtung X und die Querrichtung Y aufgespannt wird, anpassen kann.

Die erste Anlegeeinrichtung 10a umfasst ein Führungselement 12-3 mit einer Führungsfläche 12a, dass ähnlich zu den Führungselementen 12, 13 der ersten Anlegeeinrichtung 10 gestaltet und an der zweiten Teilplatte 11-1b befestigt ist. Die erste Anlegeeinrichtung 10a umfasst ferner ein von dem Führungselement 12-3 beabstandetes Führungselement 13-1 mit einer Führungsfläche 13a, dass im Querschnitt beispielsweise rautenförmig geformt ist, wobei optional ein Rollkörper 13a in die Führungsfläche 13a integriert ist, so dass das Führungselement 13-1 an der jeweiligen Längsseite des jeweiligen Werkstücks 160, 170, 180, 190 abrollen kann. Die Führungsfläche 12a ist bevorzugt senkrecht zur Unterseite der zweiten Teilplatte 11-1b orientiert. Die Führungsfläche 13a ist bevorzugt nicht senkrecht sondern geneigt zur Unterseite der zweiten Teilplatte 11-1b orientiert, so dass die erste Anlegeeinrichtung 10 auch Werkstücke führen und positionieren kann, die Längsseiten haben, die nicht parallel zueinander orientiert sind. Die zweite Anlegeeinrichtung 20a umfasst einen Anlegeabschnitt 21-1 mit bevorzugt mindestens zwei Teilabschnitten 21-1a, 21-1b, die an dem jeweiligen Werkstück in zwei Teilbereichen an der Oberseite zur Anlage kommen, wobei die zwei Teilabschnitt 21-1a, 21-1b bevorzugt in der Querrichtung Y voneinander beabstandet sind.

Die **Fig. 18** zeigt in einem Querschnitt das Handhabungsaggregat 1b im Bereich des sechsten Haltekörpers 47a bei einer in der **Fig. 17** eingezeichneten Querschnittsebene QE. Der sechste Haltekörper 47a hat zum einen eine zentrale Aussparung 47a-1, so dass dort beispielsweise Befestigungsmittel der Befestigungseinrichtung 60 den sechsten Haltekörper 47a passieren können, an einer Längsseite eine seitliche bevorzugt rechteckförmige Aussparung 56 und die durchgehende Bohrung 54, die von einer Seitenfläche des sechsten Haltekörpers 47a bis zu der seitlichen Aussparung 56 reicht. Durch diese Aussparung 56 ist der Schwenkhalter 12-3 geführt und mittels des Haltemittels 55 an einer Seite der Aussparung 56 an dem sechsten Haltekörper 47a befestigt. Das Haltemittel 55 besteht beispielsweise aus einer länglichen Schraube oder einem länglichen Sicherungsstift mit einem Kopf 55-1, der an der Seitenfläche des sechsten Haltekörpers 47a zur Anlage kommt, und einem zylindrischen Körper 55-2 mit einem Gewinde, der in der Bohrung 54 angeordnet ist, und einer Mutter 55-2, die im Bereich der Aussparung 56 auf das in die seitliche Aussparung 56 hinausragende Gewinde aufgeschraubt ist. Die Mutter 55-3 kann beispielsweise über einen Mauloder Ringschlüssel gelöst und angezogen werden, so dass der Schwenkhalter 12-3 verstellt werden kann.

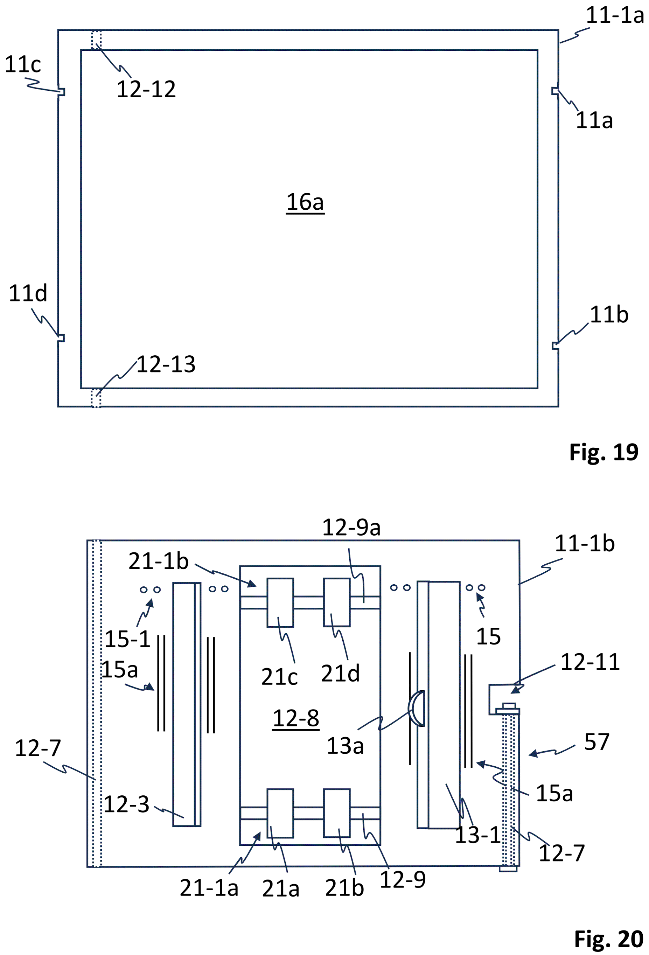

Die **Fig. 19** zeigt in einer Draufsicht die erste Teilplatte 11-1a mit einer zentralen Aussparung 16a, so dass dort beispielsweise Befestigungsmittel der Befestigungseinrichtung 60 die erste Teilplatte 11-1a passieren können und so dass die zweite Teilplatte 11-1b dort schwenkbar gelagert aufgenommen werden kann. Die erste Teilplatte 11-1a hat an zwei gegenüberliegenden Seitenflächen beispielsweise je zwei seitliche Kerben 11a, 11b, 11c, 11d, in die beispielsweise Madenschrauben oder Gewindestifte zur Befestigung der ersten Teilpatte 11-1a an dem sechsten Haltekörper 47a eingreifen. Die erste Teilplatte 11-1a hat ferner zwei durchgehende Bohrungen 12-12, 12-13, die von je einer weiteren Seitenfläche der Grundplatte 11-1 bis zu der zentralen Aussparung 16a reichen.

Die **Fig. 20** zeigt in einer Draufsicht die zweite Teilplatte 11-1b ebenfalls mit einer zentralen Aussparung, so dass dort beispielsweise Befestigungsmittel der Befestigungseinrichtung 60 die zweite Teilplatte 11-1b passieren können. Die zwei Teilabschnitte 21-1a, 21-1b des Anlegeabschnitts 21-1 der zweiten Anlegeeinrichtung 20a umfassen jeweils zwei Anlegeelemente 21a, 21b bzw. 21c, 21d, die bevorzugt als Rollkörper realisiert sein. Die Anlegeelemente 21a, 21b bzw. 21c, 21d sind bevorzugt jeweils gemeinsam auf jeweils einer Drehachse angeordnet, die jeweils in der zentralen Aussparung 12-8 bevorzugt an gegenüberliegenden Endbereichen der zentralen Aussparung 12-8 angeordnet sind. Alternativ können die Anlegeelemente 21a, 21b bzw. 21c, 21d der zweiten Anlegeeinrichtung 20a auch seitlich neben der Aussparung 12-8 angeordnet sein. An einer Längsseite im Bereich des Führungselements 13-1 hat die zweite Teilplatte 11-1b eine seitliche Aussparung 12-11, um dort den Schwenkhalter 12-3 mittels eines Haltemittels 57 analog wie bei dem sechsten Haltekörper 47a an der zweiten Teilplatte 11-1b zu befestigen. Die zweite Teilplatte 11-1 umfasst wie bei der Grundplatte 11 ferner eine Lochrasterung 15-1 und Linienmarkierungen 15b für ein einfaches Versetzen der Führungselemente 12-3, 13-1.

Die **Fig. 21** zeigt beispielhaft eine bevorzugt automatisiert angetriebene Schwenk- und Translationseinrichtung 80 für die Bearbeitungseinrichtung 60. Die Schwenk- und Translationseinrichtung 80 ist beispielsweise an einer Seitenfläche des zweiten Haltekörpers 44 des Handhabungsaggregats 1b angeordnet, wie dies ausschnittsweise in **Fig. 21 a)** dargestellt ist. Die Schwenkund Translationseinrichtung 80 umfasst bevorzugt eine erste Translationseinrichtung 81, die eine Translation eines Schlittens 81-1 in der Höhenrichtung Z ermöglicht, wie dies durch einen Pfeil 81-2 angedeutet ist. Eine lineare Führung 81-3 der ersten Translationseinrichtung 81 ist bevorzugt an der Seitenfläche des zweiten Haltekörpers 44 befestigt. Die Schwenk- und Translationseinrichtung 80 umfasst ferner bevorzugt eine zweite Translationseinrichtung 82, die eine Translation eines Schlittens 82-1 in der Querrichtung Y ermöglicht, wie dies durch einen Pfeil 82-2 angedeutet ist. Eine lineare Führung 82-3 der zweiten Translationseinrichtung 82 ist bevorzugt an dem Schlitten 81-1 der ersten Translationseinrichtung 81 befestigt. Die Schwenk- und Translationseinrichtung 80 umfasst ferner bevorzugt eine Rotationseinrichtung 83, die eine Rotation der Bearbeitungseinrichtung 60 um eine Rotationsachse 83-1 parallel zu der Längsrichtung X ermöglicht, wie dies durch einen Pfeil 83-2 angedeutet ist. Ein Haltekörper 83-3 mit der Rotationsachse 83-1 ist bevorzugt an dem Schlitten 82-1 der zweiten Translationseinrichtung 82 befestigt. Die Bearbeitungseinrichtung 60 ist in der **Fig. 21 a)** in einer Nullposition und in der **Fig. 21 b)** in einer verschwenkten Position bei zwei verschiedenen Translationspositionen der ersten Translationseinrichtung 81 und der zweiten Translationseinrichtung 82 dargestellt.

Die Bearbeitungseinrichtung 60 ist bei der Anordnung innerhalb des Handhabungsaggregats 1b derart positioniert worden, dass bei der Positionierung des Handhabungsaggregats 1b oberhalb eines Werkstücks W (eines der Werkstücke 160, 170, 180, 190) und beim Anlegen der ersten Anlegeeinrichtung 10a und der zweiten Anlegeeinrichtung 20a, die in **Fig. 21** nur mittels eines gestrichelt gezeichneten Rechtecks vereinfacht dargestellt sind, eine vordefinierte Bearbeitungsstelle 84 des Werkstücks W mit der Bearbeitungseinrichtung 60 bearbeitet werden kann, was bevorzugt das Eintreiben eines Befestigungsmittels an der vordefinierten Bearbeitungsstelle 84 ist. Soll an der vordefinierten Bearbeitungsstelle 84 beispielsweise das Befestigungsmittel nicht vertikal sondern schräg in das Werkstück W eingetrieben werden sollen, weil die Oberseite des Werkstücks W schräg orientiert ist, wie dies in **Fig. 21 b)** dargestellt ist, so wird die Bearbeitungseinrichtung 60 entsprechend mit der Schwenk- und Translationseinrichtung 80 innerhalb des Handhabungsaggregats 1b umpositioniert, damit die Bearbeitungseinrichtung 60 das Werkstück W an der vordefinierten Bearbeitungsstelle 84 bearbeiten kann.

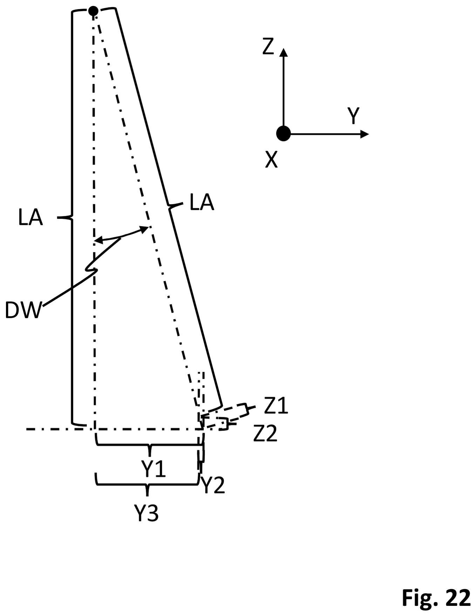

Die **Fig. 22** zeigt grafisch einen Zusammenhang des von der Rotationsrichtung 83 bezweckten Drehwinkels 85 und der von der ersten Translationseinrichtung 81 und der zweiten Translationseinrichtung 82 durchzuführenden linearen Ausgleichsbewegungslängen Y3 in der Querrichtung Y mittels der zweiten Translationseinrichtung 82 und Z2 in der Höhenrichtung Z mittels der ersten Translationseinrichtung 81. Eine Längenabmessung LA der Bearbeitungseinrichtung 60 in der Höhenrichtung Z spielt bei diesem Zusammenhang ebenfalls eine Rolle. Die beiden Ausgleichsbewegungslängen Y3 und Z2 berechnen sich wie folgt: $Y 3 = Y 1 - Y 2 = L \times tan \left(W\right) - \left(L\times tan\left(W\right)/sin\left(W\right)-L\right) \times sin \left(W\right)$ $Z 2 = \left(L\times tan\left(W\right)/sin\left(W\right)-L\right) \times cos \left(W\right)$

Bei einer beispielhaften Längenabmessung LA von L = 20 cm und einem beispielhaften Drehwinkel DW von W = 15° ergibt sich für Y3 ein Wert von 5,18 cm und für Z2 ein Wert von 0,68 cm.

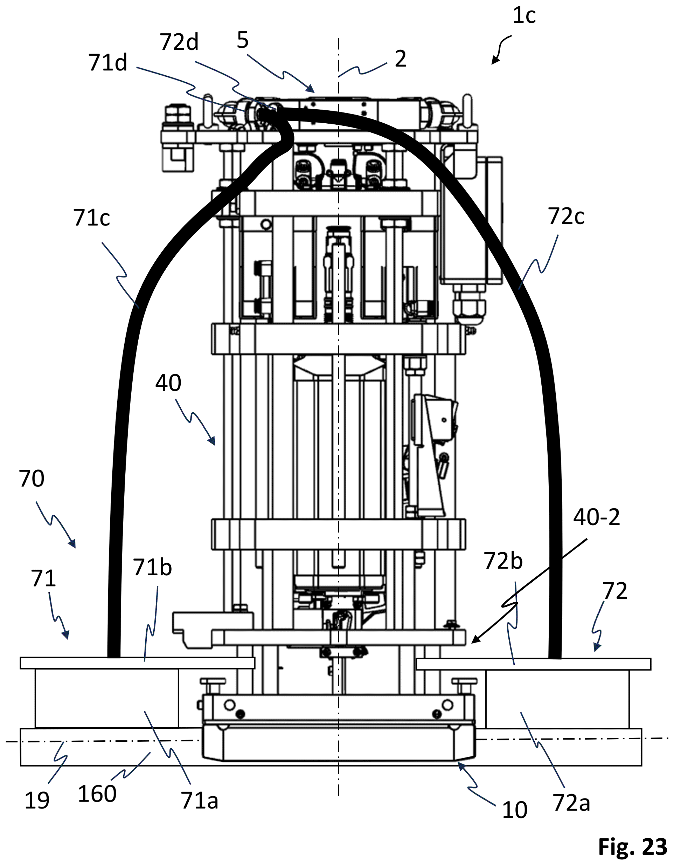

Die **Fig. 23** zeigt in einer Seitenansicht ein weiteres Handhabungsaggregat 1c in einer vierten Ausführungsform zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses. Das Handhabungsaggregat 1c erstreckt sich wie das Handhabungsaggregat 1 entlang der Längsachse 2, die sowohl die Kupplungseinrichtung 5 als auch die erste Anlegeeinrichtung 10 und die zweite Anlegeeinrichtung 20, die in **Fig. 23** nicht sichtbar ist, bevorzugt zentral schneidet. Das Handhabungsaggregat 1b umfasst neben den Komponenten des Handhabungsaggregats 1 ferner im Bereich des zweiter endseitigen Abschnitts 40-2 der Tragstruktur 40 eine Halteeinrichtung 70 zum Halten des jeweiligen Werkstücks 160, 170, 180, 190. Die Halteeinrichtung 70 ist eingerichtet, das jeweilige Werkstück 160, 170, 180, 190 von einer Lagereinrichtung für die Werkstücke 160, 170, 180, 190 zur Grundstruktur 100 zu transportieren. Eine Steuerungseinrichtung des Handhabungsaggregat 1c oder eine externe Steuerungseinrichtung ist eingerichtet, das jeweilige Werkstück 160, 170, 180, 190 von der Halteeinrichtung 70 freizugeben, bevor eine Ausrichtung und Positionierung des jeweiligen Werkstücks 160, 170, 180, 190 mittels der ersten Anlegeeinrichtung 10 und der zweiten Anlegeeinrichtung 20 startet. Die Halteeinrichtung 70 ist bevorzugt im Bereich der Längssachse 19 der ersten Anlegeeinrichtung 10 angeordnet. Die Haltereinrichtung 70 umfasst dazu bevorzugt einen ersten Halteabschnitt 71 und einen zweiten Halteabschnitt 72, wobei der erste Halteabschnitt 71 und der zweite Halteabschnitt 72 an entgegengesetzten Enden der ersten Anlegeeinrichtung 10 angeordnet sind. In einer bevorzugten Ausführungsform umfassen die Halteabschnitte 71, 72 je einen Saugnapf 71a, 72a und je eine Halterung 71a, 72a, mit der der jeweilige Saugnapf 71a, 72a an der Tragstruktur 40 befestigt ist. Die Halteabschnitte 71, 72 umfassen ferner je eine Ansaugleitung 71c, 72c zwischen dem jeweiligen Saugnapf 71a, 72a und einem oder zwei Ansaugstutzen 71d, 72d bevorzugt im Bereich des ersten endseitigen Abschnitts 42 der Tragstruktur 40. Anstelle der Saugnäpfe 71b, 72b können beispielsweise auch Klemmeinrichtungen zum Greifen des jeweiligen Werkstück 160, 170, 180, 190 und anstelle der Ansaugleitungen 71c, 72c können beispielsweise auch Steuerleitungen für die Klemmeinrichtungen verwendet werden. In einer weiteren bevorzugten Ausführungsform sind die Halteabschnitte 71,72 um die Führungsachse 19 schwenkbar gelagert, so dass auch Werkstücke mit einer Neigung der Oberseite gegenüber der durch die Längsrichtung X und die Querrrichtung Y aufgespannten Ebene oder auch Werkstücke mit einem rechteckigen Querschnitt, die aber wie in **Fig. 27** gezeigt auf der Grundstruktur 100 geneigt vorpositioniert werden sollen, und dazu in der Lagereinrichtung aufgegriffen bzw. angesaugt, transportiert und in der vordefinierten Position und Orientierung auf der Grundstruktur 100 abgelegt werden können.

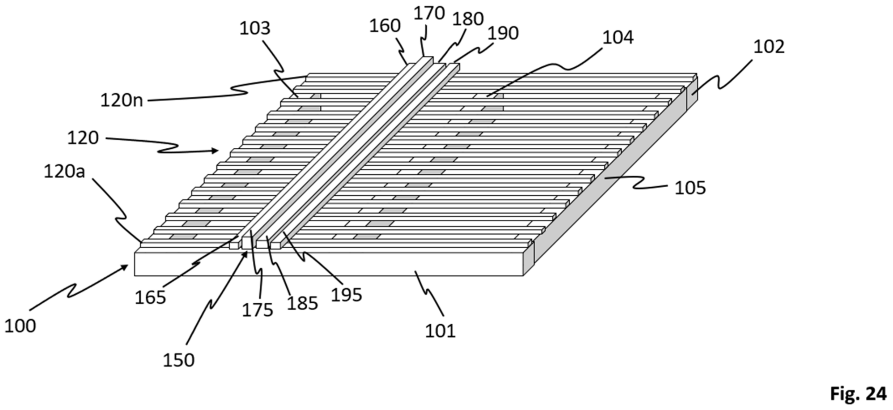

Die **Fig. 24** zeigt eine dreidimensionale Ansicht der Grundstruktur 100 und der bereits teilweise gefertigten mehrteiligen Struktur 150 in einer beispielshaften Ausführung. Die Grundstruktur 100 ist bevorzugt ein Holzrahmenelement. Das Holzrahmenelement umfasst beispielsweise einen Untergurt 101 an einer Seite der Grundstruktur 100 und einen Obergurt 102 an einer gegenüberliegenden Seite der Grundstruktur 100. Das Holzrahmenelement umfasst ferner Pfosten bzw. Stiele 103, 104, 105, über die der Untergurt 101 und der Obergurt 102 miteinander verbunden sind. Optional können zwischen dem Untergurt 101, dem Obergurt 102 und den Pfosten bzw. Stielen 103, 104, 105 noch Querstreben angeordnet sein. Der Zwischenraum zwischen dem Untergurt 101, dem Obergurt 102 und den Pfosten bzw. Stielen 103, 104, 105 wird üblicherweise mit einem Isolationsmaterial ausgefüllt. Das Holzrahmenelement 100 umfasst ferner bevorzugt auf der Unterseite und der Oberseite Platten (aus Gründen der Übersichtlichkeit in **Fig. 24** nicht dargestellt), die auf dem Untergurt 101, dem Obergurt 102 und den Pfosten bzw. Stielen 103, 104, 105 befestigt sind. Falls das Holzrahmenelement 100 als Dachelement verwendet werden soll, dann wird an der Unterseite des Holzrahmenelements 100, die später als Innenseite des Dachelements dienen soll, eine Folie auf den betreffenden Platten als Dampfbremse oder Dampfsperre befestigt. Das Holzrahmenelement 100 umfasst ferner optional eine sogenannte Unterspannbahn, die auf den Platten jene Seite des Holzrahmenelements 100 befestigt ist, die später als Außenseite dienen soll. Die Unterspannbahn umfasst beispielsweise ein Vlies mit einer mikroskopischen oder monolithischen Funktionsmembrane oder ein sogenanntes Spinnvlies oder ein Vlies kombiniert mit einer Beschichtung. Das Holzrahmenelement 100 umfasst ferner eine Konterlattung 120, die auf den Platten befestigt ist, und deren Latten 120a, ..., 120n beispielsweise parallel zu dem Untergurt 101 und dem Obergurt 102 verlaufen. Auf der Konterlattung 120 werden die Werkstücke 160, 170, 180, 190 der mehrteiligen Struktur 150 befestigt, wobei die mehrteilige Struktur 150 entweder als zweite Lattung fungiert, auf der später Dachziegeln aufgelegt bzw. eingehängt werden, oder als Holzfassade fungiert, wie es in **Fig. 24** dargestellt ist. Zur Ausrichtung und Positionierung der Werkstücke 160, 170, 180, 190 wird dafür eines der Handhabungsaggregate 1, 1a, 1b, 1c eingesetzt. Bevorzugt wird das jeweilige Handhabungsaggregat 1, 1a, 1b, 1c auch zur Befestigung der Werkstücke 160, 170, 180, 190 auf der Konterlattung 120 eingesetzt. In der **Fig. 24** sind Oberseiten 165, 175, 185, 195 der Werkstücke 160, 170, 180, 190, an der die zweite Anlegeeinrichtung 20, 20a, 20b jeweils in Anlage kommt, gekennzeichnet. Die in der **Fig. 24** sichtbare mehrteilige Struktur 150 mit den unterschiedlich dicken Werkstücken 160, 170, 180, 190 stellt eine sogenannte Skyline-Schalung dar.

Die **Fig. 25** zeigt in einer Seitenansicht einen unteren Abschnitt des Handhabungsaggregats 1d sowie die Grundstruktur 100 und die bereits teilweise gefertigte mehrteilige Struktur 150. Die Grundstruktur 100 umfasst bei diesem Ausführungsbeispiel eine untere Ebene, die u.a. den Untergurt 101 und den Obergurt 102 umfasst, und eine obere Ebene, die durch Platten 106, 107 gebildet wird. Die Werkstücke 160, 170, 180, 190 für die mehrteilige Struktur 150 haben im Querschnitt eine Rautenform. Für die Fertigung der mehrteiligen Struktur 150 basierend auf dieser Form der Werkstücke 160, 170, 180, 190 eignet sich das Handhabungsaggregat 1d mit der daran angeordneten ersten Anlegeeinrichtung 10a und der daran angeordneten zweiten Anlegeeinrichtung 20a.

Die **Fig. 26** zeigt in einer Seitenansicht einen unteren Ausschnitt des Handhabungsaggregat 1e mit einer umgestalteten ersten Anlegeeinrichtung und einer umgestalteten zweiten Anlegeeinrichtung sowie die Grundstruktur 100 und die bereits teilweise gefertigte mehrteilige Struktur 150. Die Grundstruktur 100 ist identisch mit der Grundstruktur von **Fig. 25** gestaltet. Die Werkstücke 160, 170, 180, 190 für die mehrteilige Struktur 150 haben im Querschnitt eine Form, bei die Oberseite nicht parallel zur Unterseite sondern geneigt ist. Ferner sind beide Längsseiten nicht senkrecht zur Unterseite sondern ebenfalls geneigt zur Unterseite orientiert. Ferner hat die höhere Längsseite im unteren Bereich eine Aussparung, die der Form des Werkstücks im Bereich der gegenüberliegenden Längsseite entspricht, so dass die Werkstücke 160, 170, 180, 190 in Form einer Stülpschalung aneinandergefügt werden können. Führungselemente der ersten Anlegeeinrichtung haben im Gegensatz zu der ersten Anlegeeinrichtung nach **Fig. 25** zum einen einen größeren Abstand zueinander und zum anderen ragt eines der Führungselemente weniger weit von der zweiten Teilplatte 11-1b als bei der ersten Anlageeinrichtung nach **Fig. 25** ab, um die Grundstruktur 100 bei der Fertigung der mehrteiligen Struktur 150 nicht zu beschädigenden und um einen Kontakt zwischen der zweiten Anlegeeinrichtung und den schrägen Oberseiten der Werkstücke 160, 170, 180, 190 herstellen zu können.

**Fig. 27** zeigt in einer Seitenansicht einen unteren Abschnitt des Handhabungsaggregat 1f mit einer nochmals umgestalteten ersten Anlegeeinrichtung 10b und einer nochmals umgestalteten zweiten Anlegeeinrichtung 20b sowie die Grundstruktur 100 und die bereits teilweise gefertigte mehrteilige Struktur 150. Die Grundstruktur 100 umfasst eine untere Ebene, die u.a. den Untergurt 101 und den Obergurt 102 umfasst, eine untere mittlere Ebene, die durch Platten 106, 107 gebildet wird, eine obere mittlere Ebene, die durch die Konterlattung 120 gebildet wird, und eine obere Ebene, die durch eine Traglattung 130, die bevorzugt senkrecht zu der Konterlattung 120 verläuft. Die Werkstücke 160, 170, 180, 190 haben im Querschnitt eine Rechteckform und werden für die mehrteilige Struktur 150 ebenfalls in einer Stülpschalung überlappend aber geneigt übereinander positioniert. Dazu wird zunächst eine Latte 140 auf der Grundstruktur ausgerichtet, positioniert und an der Grundstruktur 100 bevorzugt an einem seitlichen Ende befestigt. Auf dieser Latte 140 wird das erste Werkstück 160 so positioniert, dass das erste Werkstück 160 die Latte 140 im Bereich einer ersten Längsseite des ersten Werkstücks 160 überlappt. Die zweite der ersten Längsseite gegenüberliegende Längsseite des ersten Werkstücks 160 kommt dabei auf der Grundstruktur 100 zur Anlage. Auf dem ersten Werkstück 160 wird nachfolgend das zweite Werkstück 170 so positioniert, dass das zweite Werkstück 170 im Bereich einer ersten Längsseite des zweiten Werkstücks 170 das erste Werkstück 160 im Bereich der zweiten Längsseite des ersten Werkstücks 160 überlappt. Die zweite der ersten Längsseite gegenüberliegende Längsseite des zweiten Werkstücks 160 kommt dabei wiederum auf der Grundstruktur 100 zur Anlage. In der gleichen Art und Weise werden die weiteren Werkstücke 180, 190 ausgerichtet, positioniert und an der Grundstruktur 100 befestigt. Die erste Anlegeeinrichtung 10b und die zweite Anlegeeinrichtung 20b unterscheiden sich von der ersten Anlegeeinrichtung 10a und der zweiten Anlegeeinrichtung 20b dadurch, dass zum einen auf einen Schwenkmechanismus und eine Zweiteilung der Grundplatte, an der die erste Anlegeeinrichtung 10b angeordnet ist, verzichtet wird. Stattdessen kommt bevorzugt der Verstellmechanismus 30 zum Einsatz, so dass eine Position der zweiten Anlegeeinrichtung 20b im Bezug zur ersten Anlegeeinrichtung 10b wie oben beschrieben verstellt werden kann. Die erste Anlegeeinrichtung 10b umfasst zwei entlang der Längsachse 2 unterschiedlich weit nach unten abstehende Führungselemente 122, 132, deren Führungsflächen zudem bevorzugt parallel zu den geneigten Längsseiten der Werkstücke 160, 170, 180, 190 sind, wenn die Werkstücke 160, 170, 180, 190 auf der Grundstruktur 100 vorpositioniert sind. Die zweite Anlegeeinrichtung 20b umfasst anstelle mehrerer Teilabschnitte des Anlegeabschnitts eine sogenannte bauchige Rolle, deren Abrollfläche sich automatisch an die Neigung der Oberfläche der Werkstücke 160, 170, 180, 190 anpassen kann.

Die **Fig. 28** zeigt eine dreidimensionale Ansicht einer Fertigungsanlage 200 in einer ersten bevorzugten Ausführungsform zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses. Die Fertigungsanlage 200 ist beispielsweise eine CNC-gesteuerte Bearbeitungsmaschine. Die mehrteilige Struktur 150 ist dabei bevorzugt eine mehrteiligen Fassadenstruktur aus Holzelementen und/oder Holzwerkstoffelementen.

Die Fertigungsanlage 200 umfasst bevorzugt als Hauptsysteme eine Transporteinrichtung 210, eine auf der Transporteinrichtung 210 verfahrbare Bewegungseinheit 220 in Form eines Portalroboters, einen Auflagetisch 230 für die Grundstruktur 100 und eine Steuerungseinrichtung 240 zur Steuerung der Fertigungsanlage 200. Die Fertigungsanlage 200 umfasst ferner bevorzugt ein Lagersystem 250 für Handhabungsaggregate 1, 1b, 1c und für weitere Handhabungs- und/oder Bearbeitungsaggregate 251, 252 zur Handhabung und/oder Bearbeitung der Grundstruktur 100 oder der Werkstücke 160, 170, 180, 190 der mehrteiligen Struktur 150. Die Fertigungsanlage 200 umfasst ferner bevorzugt eine Lagereinrichtung 260 für die Werkstücke 160, 170, 180, 190 zur Fertigung der mehrteiligen Struktur 150. Die Fertigungsanlage 200 umfasst ferner bevorzugt eine Bedienungseinrichtung 270, die mit der Steuerungseinrichtung 240 zum Austausch von Daten und Bedienbefehlen verbunden ist, und an der ein Bediener Einstellungen für die Fertigungsanlage 200 vornehmen kann und Statusinformationen über die Fertigungsanlage 200 ablesen kann.

Die Bewegungseinheit 220 ist entlang des Auflagetisches 230 mittels einer nicht dargestellten Antriebsvorrichtung horizontal verfahrbar auf der Transportvorrichtung 210 angeordnet. Die Transportvorrichtung 210 ist bevorzugt ein Schienensystem, das eine erste Schiene 211 und eine zweite Schiene 212 umfasst, die parallel zueinander orientiert sind. Die Schienen 211, 212 sind bevorzugt jeweils seitlich an gegenüberliegenden Seiten des Auflagetisches 230 angeordnet. Je nach Größe der Grundstruktur 100 kann die Fertigungsanlage 200 auch zwei oder mehr hintereinander angeordnete Auflagetische umfassen, entlang derer die Bewegungseinheit 220 verfahrbar ist. Die Schienen 211, 212 haben bevorzugt eine solche Länge, dass die Bewegungseinheit 220 bis oberhalb des Lagersystems 250 und der Lagereinrichtung 260 verfahren werden kann, um bevorzugt automatisiert, mindestens ein gelagertes Handhabungsaggregat 251, 252 aus dem Lagersystems 250 aufzunehmen und/oder ein an der Bewegungseinheit 220 angeordnetes Handhabungsaggregat wie das Handhabungsaggregat 1, 1b, 1c oder ein weiteres Handhabungsaggregat 222 in dem Lagersystems 250 abzulegen und/oder mindestens eines der gelagerten Werkstücke 160, 170, 170 aus der Lagereinrichtung 260 aufzunehmen. Die weiteren Handhabungsaggregate 222, 251, 252 sind beispielsweise Bearbeitungsaggregrate zum Bohren, Sägen, Markieren, Verleimen, Reinigen oder Formatieren oder Bearbeitungsaggregate mit einem Radsystem oder einem Gleitschuh im Bereich des zweiten endseitigen Abschnitts der jeweiligen Tragstruktur zum Befestigen von Platten dem Holzrahmenelement 100.

Die Bewegungseinheit 220 umfasst einen ersten Vertikalträger 223 und einen zweiten in **Fig. 28** nicht sichtbaren Vertikalträger, die beide auf der Transporteinrichtung 210 mit unteren Enden beweglich gelagert sind. Die Bewegungseinheit 220 umfasst ferner einen auf den oberen Enden der Vertikalträger 223 angeordneten und befestigten Horizontalträger 224 und einen Aggregateträger 225 für die Handhabungsaggregate 1, 1b, 1c, 221, der an dem Horizontalträger 224 entlang verfahrbar angeordnet ist, um die für die Fertigung der mehrteiligen Struktur 150 notwendigen Bearbeitungspositionen auf der Grundstruktur 100 anfahren zu können. Der Aggregateträger 225 umfasst bevorzugt mindestens eine Antriebsspindel für jene Handhabungsaggregate, die eine solche Antriebsspindel benötigen, wie z.B. Bohraggregate oder Sägeaggregate. Der Aggregateträger 225 umfasst ferner bevorzugt einen Drehantrieb, um die Handhabungsaggregate 1, 1b, 1c, 221 um mindestens 90° um eine vertikale Richtung bevorzugt automatisiert drehen oder schwenken zu können. Somit lassen sich die Werkstücke 160, 170, 180, 190 mit ihrer Längsausdehnung sowohl in einer X-Richtung als auch einer Y-Richtung (siehe Koordinatensystem in **Fig. 21****)** als auch gemischt in mindestens einem Teilbereich in der X-Richtung und mindestens einem weiteren Teilbereich in der Y-Richtung auf der Grundstruktur 100 auflegen, ausrichten, positionieren und befestigen. Beispielsweise können bei einem Holzrahmenwandelement 100 die Werkstücke 160, 170, 180, 190 von einem unteren Ende des Holzrahmenwandelements bis zur Fensterhöhe senkrecht und weitere Werkstücke ab der Fensterhöhe bis zum oberen Ende des Holzrahmenwandelements waagerecht angeordnet und befestigt werden oder die Werkstücke 160, 170, 180, 190 werden zwischen den Fenstern senkrecht und weitere Werkstücke werden oberhalb und unterhalb der Fenster waagerecht angeordnet und befestigt.

Der Aggregateträger 225 ist bevorzugt an der Bewegungseinheit 220 als Positioniervorrichtung der Fertigungsanlage 200 mittels entsprechender Antriebsvorrichtungen horizontal verfahrbar und vertikal verfahrbar angeordnet.

Jene Handhabungsaggregate 251, 252, die nicht auf dem Aggregateträger 225 untergebracht werden können, können in dem Lagersystem 250 geparkt werden, das bevorzugt an einer Stirnseite des Auflagetisches 230 angeordnet ist. Das Lagersystem 250 umfasst bevorzugt einen ersten auf der Stellfläche verankerten Vertikalträger 253 und einen zweiten auf der Stellfläche verankerten Vertikalträger 254. Das Lagersystem 250 umfasst ferner einen Horizontalträger 255, der auf den oberen Enden der beiden Vertikalträgern 253, 254 angeordnet und befestigt ist. Das Lagersystem 250 umfasst ferner mindestens eine an dem Horizontalträger 255 angeordnete Halterung 256, 257, 258 für eines der Handhabungsaggregate 251, 252.

Die Bedienungseinrichtung 270 ist beispielsweise ein berührungsempfindlicher Bildschirm oder ein Computer mit Tastatur und/oder Maus als Eingabeeinrichtung. Über eine erste Steuerleitung 271 findet ein Informationsaustausch zwischen der Steuerungseinrichtung 240 und der Bedienungseinrichtung 270 statt. Über eine zweite Steuerleitung 272 findet ein Informationsaustausch zwischen der Steuerungseinrichtung 240 und dem Aggregateträger 225 statt, um den Aggregateträger 225 selbst und insbesondere die Handhabungsaggregate 1, 1b, 1c, 222 anzusteuern. Über eine dritte Steuerleitung 273 findet ein Informationsaustausch zwischen der Steuerungseinrichtung 240 und der Bewegungseinheit 220 stattfinden, um die Bewegungseinheit 220 an eine vordefinierte Position entlang der Transporteinrichtung 210 zu verfahren und bevorzugt auch das Erreichen der vordefinierten Position zurückzumelden. Über eine vierte Steuerleitung 274 findet bevorzugt ein Informationsaustausch mit einer übergeordneten Produktionssteuerung aus, die sich beispielsweise in einer Cloud 275 befinden kann. Die Cloud 275 kann beispielsweise ein zentraler Server eines Produktionsstandortes sein. Die Cloud 275 stellt bevorzugt Produktionsdaten der Fertigungsanlage 200 zur Verfügung, mit der die Fertigungsanlage 200 zum einen die mehrteilige Struktur 150 und bevorzugt zuvor auch Teile der Grundstruktur 100 wie beispielsweise die Konterlattung 120 automatisiert oder vollautomatisiert herstellen kann.

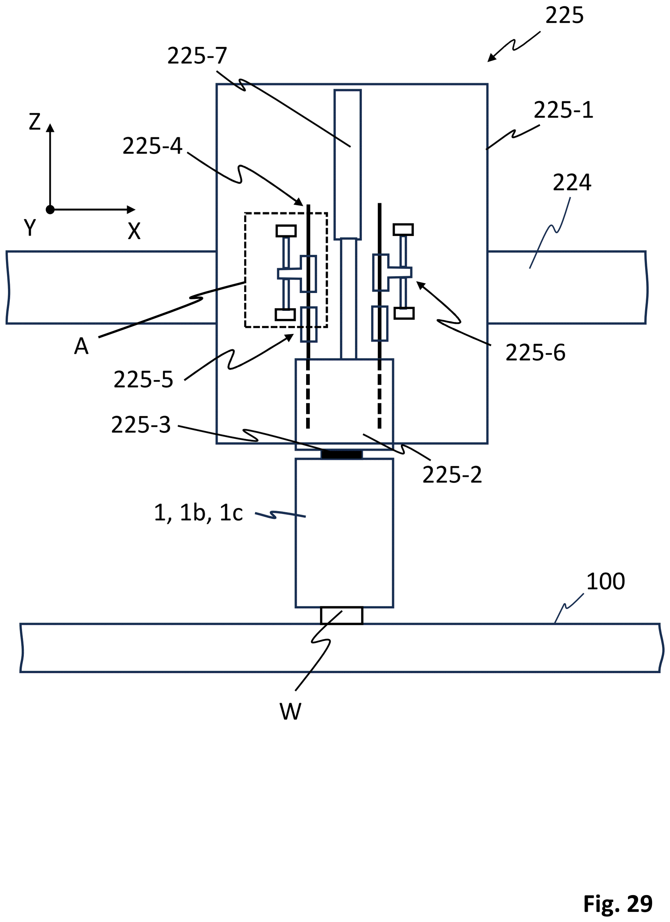

Die **Fig. 29** zeigt schematisch in einer Seitenansicht einen Ausschnitt der Fertigungsanlage 200 mit dem Horizontalträger 224, dem Aggregateträger 225, der Grundstruktur 100 und einem ersten auf der Grundstruktur vorpositioniertem Werkstück W, dass mit dem an dem Aggregateträger 225 angeordneten Handhabungsaggregat 1, 1b, 1c ausgerichtet und positioniert und bevorzugt auch an der Grundstruktur 100 befestigt wird. Der Aggregateträger 225 umfasst bevorzugt einen Horizontalschlitten 225-1, mit dem der Aggregateträger 225 entlang des Horizontalträgers 224 in der Längsrichtung X verfahren werden kann. Der Aggregateträger 225 umfasst ferner bevorzugt einen Vertikalschlitten 225-2, an dem das Handhabungsaggregat 1, 1b, 1c über eine Kopplungseinrichtung 225-3 angekoppelt ist, und mit dem das Handhabungsaggregat 1, 1b, 1c in der Höhenrichtung Z verfahren werden kann. An dem Vertikalschlitten 225-2 ist bevorzugt ein Schienensystem 225-4 dem Horizontalschlitten 225-1 zugewandt angeordnet, wobei das Schienensystem 225-4 bevorzugt zwei parallel in der Höhenrichtung Z mit einem vordefinierten Abstand verlaufende Schienen umfasst. Das Schienensystem 225-4 wird mittels eines Schienenführungssystems 225-5 geführt, wobei das Schienenführungssystem 225-5 an dem Horizontalschlitten 225-1 angeordnet ist und bevorzugt zwei Schienenführungen umfasst, die mit dem vordefinierten Abstand dem Vertikalschlitten 225-2 zugewandt an dem Horizontalschlitten 225-1 befestigt sind.

Der Aggregateträger 225 umfasst ferner bevorzugt eine Klemmeinrichtung in Form einer gefederten Schienenklemmung 225-6, mit der der Vertikalschlitten 225-2 und damit das Handhabungsaggegat 1, 1b, 1c in einer vordefinierten Höhenposition schwimmend verklemmt werden kann. Somit kann sich das Handhabungsaggregat 1, 1b, 1c bei einem Verfahren in der Längsrichtung X und/oder der Querrichtung Y über die Grundstruktur 100 nur innerhalb eines Federwegs der gefederten Schienenklemmung 225-6 bewegen. Die gefederte Schienenklemmung 225-6 wirkt entweder auf beide Schienen, wie in der **Fig. 29** gezeigt, oder auch zur Vereinfachung der Konstruktion nur auf eine der beiden Schienen.

Der Aggregateträger 225 umfasst ferner eine Antriebseinrichtung 225-7 zur Höhenverstellung des Vertikalschlittens 225-2. Die Antriebseinrichtung 225-7 ist bevorzugt ein Pneumatikzylinder, der drucklos geschaltet wird, solange die gefederte Schienenklemmung 225-6 aktiv ist. Als Antriebseinrichtung 225-7 kann alternativ jede andere bekannte Linearantrieb wie beispielsweise ein elektrischer Linearmotor verwendet werden. Somit wird bei einem Verfahren des Handhabungsaggregat 1, 1b, 1c in der Längsrichtung X und/oder der Querrichtung Y über die Grundstruktur 100 nur mittels der Federkraft ein Druck auf das jeweilige Werkstück W und die Grundstruktur 100 zum Vermeiden von Beschädigungen ausgeübt. Der Pneumatikzylinder 225-7 wird bevorzugt als doppelwirkender Zylinder mit einem Unterstützungsdruck betrieben, so dass eine auf das jeweilige Werkstück W bzw. die Grundstruktur 100 wirkende Gesamtgewichtskraft bedingt durch den Vertikalschlitten 225-2 und das daran angeordnete Handhabungsaggregat 1, 1b, 1c zur Vermeidung von Beschädigungen an dem Werkstück W und der Grundstruktur 100 vermindert wird.

In einer alternativen nicht gezeigten Ausführungsform umfasst der Aggregateträger 225 anstelle des einen Pneumatikzylinders 225-7 und der Schienenklemmung 225-6 am Ort des Pneumatikzylinders 225-7 eine Reihenschaltung von mindestens zwei und bevorzugt von drei Pneumatikzylindern mit drei unterschiedlichen Hublängen. Ein Pneumatikzylinder mit einer größten Hublänge H1 wird dabei für eine Vorpositionierung des Handhabungsaggregats 1, 1b, 1c in Bezug auf die Grundstruktur 100 über größere Strecken und als Klemmeinrichtung für eine Zylinderklemmung analog zu der oben genannten Schienenklemmung eingesetzt. Ein Pneumatikzylinder mit einer mittleren Hublänge H2 und ein weiterer Pneumatikyzlinder mit einer kleinsten Hublänge H3 werden bevorzugt für Zwischenpositionierungen über kürzere Strecken des Handhabungsaggregats 1, 1b, 1c im Laufe der Bearbeitung der Grundstruktur 100 eingesetzt.

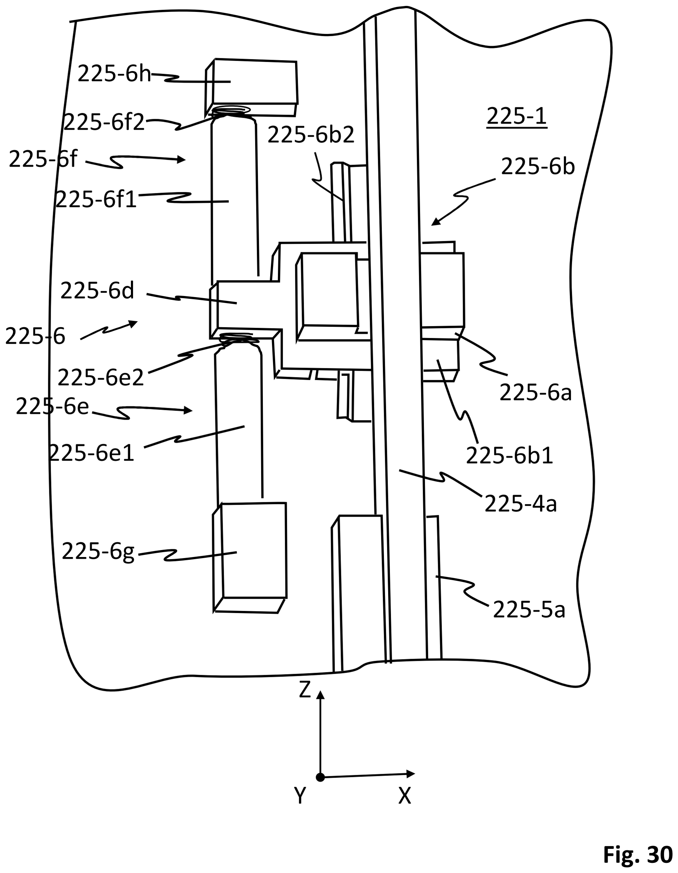

Die **Fig. 30** zeigt in einer dreidimensionalen Ansicht einen in der **Fig. 29** gekennzeichneten Ausschnitt A des Horizontalschlittens 225-1, einer Schiene 225-4a des Schienensystems 225-4 und der Schienenführung 225-5a sowie eine Klemmeinrichtung in Form einer gefederten Schienenklemmung 225-6, welches auf die Schiene 225-4a einwirkt. Die gefederte Schienenklemmung 225-6 umfasst eine verstellbare Klemmeinheit 225-6a beispielsweise in Form eines Klemmschuhs mit einer Grundstellung, bei der der Klemmschuh 225-6a nicht an der Schiene 225-4a festgelegt ist und mit einer Arbeitsstellung, bei der der Klemmschuh 225-6a an der Schiene 225-4a festgelegt ist. Die gefederte Schienenklemmung 225-6 umfasst ferner bevorzugt eine lineare Führungseinrichtung 225-6b mit einem Schlitten 225-6b1 und einer Schiene 225-6b2. Die Klemmeinheit 225-6a ist bevorzugt auf dem Schlitten 225-6b1 angeordnet. Die an dem Horizontalschlitten 225-1 angeordnete Schiene 225-6b2 ist mit dem Schlitten 225-6b1 in Eingriff ist. Der Schlitten 225-6b1 und die Schiene 225-6b2 erlauben es, dass der Vertikalschlitten 225-2 und damit das Handhabungsaggregat 1, 1b, 1c auch in der Arbeitsstellung des Klemmschuhs 225-6a entlang des Federwegs der gefederten Schienenklemmung 225-6 präzise geführt wird. Die gefederte Schienenklemmung 225-6 umfasst ferner ein Federungsmittelteil 225-6d, welches entweder einteilig mit dem Schlitten 225-6b1 ist oder als separates Teil seitlich in der Längsrichtung X an dem Schlitten 225-6b1 angeordnet und befestigt ist.

Die gefederte Schienenklemmung 225-6 umfasst ferner eine erste Federeinheit 225-6e, die unterhalb des Federungsmittelteils 25-6d entgegen der Z-Richtung angeordnet ist, und eine zweite Federeinheit 225-6f, die oberhalb des Federungsmittelteils 25-6d in der Z-Richtung angeordnet ist. Die gefederte Schienenklemmung 225-6 umfasst ferner ein erstes Federungsendteil 225-6g, welches unterhalb der ersten Federeinheit 225-6e entgegen der Z-Richtung angeordnet ist, und ein zweites Federungsendteil 225-6h, welches oberhalb der zweiten Federeinheit 225-6f in der Z-Richtung angeordnet ist. Die beiden Federungsendteile 225-6g, 225-6h begrenzen einen jeweiligen Federweg der jeweiligen Federeinheit 225-6e, 225-6f nach unten bzw. oben. Die jeweilige Federeinheit 225-6e, 225-6f umfasst bevorzugt eine Hülse 225-6e1, 225-6f1 und eine Feder 225-6e2, 225-6f2, die in der jeweiligen Hülse 225-6e1, 225-6f1 bis auf ein oberes Endstück der Feder 225-6e3, 225-6f3 angeordnet ist. Die jeweilige Feder 225-6e2, 225-6f2 ist mit einem Ende an dem Federungsmittelteil 225-6d befestigt und mit dem entgegengesetzten Ende an dem jeweiligen Federungsendteil 225-6g, 225-6h befestigt. Die Hülsen 225-6e1, 225- 6f1 ermöglichen zum einen eine Führung der Federn 225-6e2, 225-6f2, wenn die Federn 225-6e2, 225-6f2 gedehnt oder gestaucht werden, und schützen vor einer Verschmutzung der Federn 225-6e3, 225-6f3.

In einer Mittelstellung der Schienenklemmung 225-6 ragt die jeweilige Feder 225-6e2, 225-6f2 bevorzugt zwischen 3 bis 20 mm und weiter bevorzugt zwischen 4 mm und 6 mm oder zwischen 8 mm und 12 mm aus der jeweiligen Hülse 225-6e1, 225-6f1 heraus. Diese Überlänge der jeweiligen Feder 225-6e2, 225-6f2 gegenüber der jeweiligen Hülse 225-6e1, 225-6f1 in der Mittelstellung definiert den maximalen Verstellweg, den die gefederte Schienenklemmung sowohl in der Höhenrichtung Z als auch entgegen der Höhenrichtung Z für eine sogenannte schwimmende Lagerung des Handhabungsaggregats 1, 1b, 1c ermöglicht.

Die **Fig. 31** zeigt in einer Draufsicht eine Fertigungsanlage 200a in einer weiteren bevorzugten Ausführungsform zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses. Die Fertigungsanlage 200a umfasst bevorzugt als Hauptsysteme eine Transporteinrichtung 210a, eine auf der Transporteinrichtung 210a verfahrbare Bewegungseinheit 220a in Form eines Knickarmroboters, den Auflagetisch 230 für die Grundstruktur 100 und eine Steuerungseinrichtung 240a zur Steuerung der Fertigungsanlage 200a.

Die Bewegungseinheit 220a ist entlang des Auflagetisches 230 mittels einer nicht dargestellten Antriebsvorrichtung horizontal verfahrbar auf der Transportvorrichtung 210a angeordnet. Die Transportvorrichtung 210a ist bevorzugt ein Schienensystem, das die erste Schiene 211 umfasst. Das Schienensystem kann alternativ auch die erste Schiene 211 und eine weitere Schiene umfassen, die parallel zueinander orientiert sind. Die erste Schiene 211 ist bevorzugt seitlich des Auflagetisches 230 angeordnet. Je nach Größe der Grundstruktur 100 kann die Fertigungsanlage 200a auch zwei oder mehr hintereinander angeordnete Auflagetische umfassen, entlang derer die Bewegungseinheit 220a verfahrbar ist. Das Handhabungsaggregat 1a ist an einem abragenden Ende eines Knickarms 226 des Knickarmroboters 220a bevorzugt auswechselbar angeordnet, so dass das Handhabungsaggregat 1a in Bezug auf die Grundstruktur 100 positioniert werden kann.

Die Fertigungsanlage 200a umfasst ferner bevorzugt eine bewegbare Lagereinrichtung 260a für die Werkstücke 160, 170, 180 zur Fertigung der mehrteiligen Struktur 150 und eine weitere Transporteinrichtung 280, auf der die Lagereinrichtung 260a bewegbar gelagert ist. Die Lagereinrichtung 260a kann entweder von einem Bediener bewegt werden oder die Lagereinrichtung 260a umfasst bevorzugt eine Antriebseinrichtung zur automatisierten Bewegung der Lagereinrichtung 260a. Die weitere Transporteinrichtung 280 ist beispielsweise ein Schienensystem, welches beispielsweise eine erste Schiene 281 und eine zweite Schiene 282, die parallel zu der ersten Schiene 281 verläuft, umfasst. Die weitere Transporteinrichtung 280 ist bevorzugt neben der Transporteinrichtung 210a und dem Auflagetisch 230 angeordnet, so dass die Lagereinrichtung 260a einer Verlagerung der Bewegungseinheit 220a entlang dem Auflagetisch 230 bzw. entlang der Grundstruktur 100 folgen kann. Damit kann die Lagereinrichtung 260a während der Fertigung der mehrteiligen Struktur 150 jeweils benachbart neben der Bewegungseinheit 220a angeordnet sein, so dass die Bewegungseinheit 220a die Werkstücke 160, 170, 180 von der Lagereinrichtung 260a zu einer vordefinierten Position auf der Grundstruktur 100 auf möglichst kurzem Wege transportieren kann.

Die Fertigungsanlage 200a umfasst ferner bevorzugt ein in der **Fig. 31** nicht dargestellten Lagersystem, in dem nicht benötigte Handhabungsaggregate geparkt werden können. Das Lagersystem kann beispielsweise an einem Ende der Transporteinrichtung 210a angeordnet sein. In dem Lagersystem kann bevorzugt ein Markierungsaggregat gelagert sein, mit der die Bewegungseinheit 220a parallel zueinander angeordnete Markierungslinien 125 mit einem vordefinierten Abstand auf der Grundstruktur 100 und insbesondere auf der Konterlattung 120 aufbringen kann. Diese Markierungslinien 125 dienen dem Bediener der Fertigungsanlage 200a als Orientierungshilfe zur Positionierung der Werkstücke 160, 170, 180, 190 auf der Grundstruktur 100, falls die Fertigung der mehrteiligen Struktur 150 halbautomatisch mit Unterstützung des Bedieners erfolgt.

Die Fertigungsanlage 200a umfasst ferner bevorzugt die Bedienungseinrichtung 270, die mit der Steuerungseinrichtung 240a zum Austausch von Daten und Bedienbefehlen verbunden ist, und an der der Bediener Einstellungen für die Fertigungsanlage 200a vornehmen kann und Statusinformationen über die Fertigungsanlage 200a ablesen kann. Über die erste Steuerleitung 271 findet ein Informationsaustausch zwischen der Steuerungseinrichtung 240 und der Bedienungseinrichtung 270 statt. Über die zweite Steuerleitung 272 findet ein Informationsaustausch zwischen der Steuerungseinrichtung 240a und der Bewegungseinheit 220a und der Handhabungsaggregat 1a statt, um das Handhabungsaggregat 1a für die Ausrichtung und Positionierung der Werkstücke 160, 170, 180, 190 auf der Grundstruktur 100 anzusteuern, um die Bewegungseinheit 220a an eine vordefinierte Position entlang der Transporteinrichtung 210a zu verfahren und um den Knickarm 226 für eine vordefinierte Handhabung wie die Positionierung und Ausrichtung des Handhabungsaggregats 1a oder den Transport eines der Werkstücke 160, 170, 180, 190 anzusteuern.

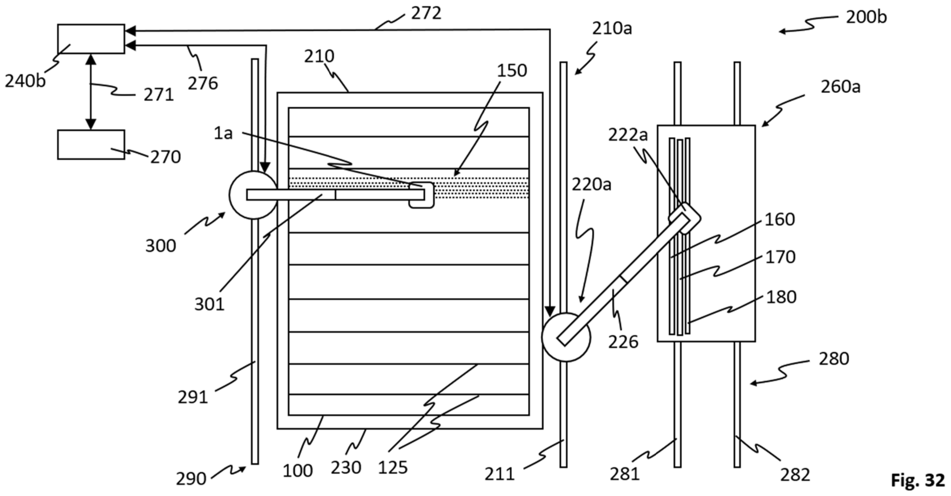

Die **Fig. 32** zeigt in einer Draufsicht eine Fertigungsanlage 200b in einer weiteren bevorzugten Ausführungsform zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses. Die Fertigungsanlage 200b umfasst im Vergleich zur Fertigungsanlage 200a eine weitere Transporteinrichtung 290 und eine auf der weiteren Transporteinrichtung 290 verfahrbare weitere Bewegungseinheit 300 in Form eines weiteren Knickarmroboters. Ferner umfasst die Fertigungsanlage 200b eine Steuereinrichtung 240b.

Die Bewegungseinheit 220a umfasst im Vergleich zur **Fig. 31** am freien Ende des Knickarms 226 anstelle des Handhabungsaggregat 1a ein Handhabungsaggregat 222a in Form einer Greifvorrichtung, um die Werkstücke 160, 170, 180 von der Lagereinrichtung 260a zu der Grundstruktur 100 zu transportieren.

Die weitere Transportrichtung 290 erstreckt sich entlang des Auflagetisches 230 bzw. entlang der Grundstruktur 100 bevorzugt auf einer gegenüberliegenden Seite des Auflagetisches 230 im Vergleich zu der Transporteinrichtung 210a, so dass sich beide Bewegungseinheiten 220a und 300 beim Handhaben der Werkstücke 160, 170, 180, 190 nicht gegenseitig behindern. Die weitere Transporteinrichtung 290 umfasst beispielsweise eine Schiene 291, auf der die Bewegungseinheit 300 bevorzugt mit einer Antriebseinheit bewegbar ist. Die Bewegungseinheit 300 ist bevorzugt ein weiteren Knickarmroboter, der einen Knickarm 301 umfasst. Am freien Ende des Knickarms 301 ist das Handhabungsaggregat 1a angeordnet.

Über die erste Steuerleitung 271 findet ein Informationsaustausch zwischen der Steuerungseinrichtung 240b und der Bedienungseinrichtung 270 statt. Über die zweite Steuerleitung 272 findet ein Informationsaustausch zwischen der Steuerungseinrichtung 240b und der Bewegungseinheit 220a und dem Handhabungsaggregat 222 statt, um das Handhabungsaggregat 222a für ein Greifen und Loslassen der Werkstücke 160, 170, 180, 190 anzusteuern, um die Bewegungseinheit 220a an eine vordefinierte Position entlang der Transporteinrichtung 210a zu verfahren und um den Knickarm 226 für eine vordefinierte Handhabung wie die Positionierung und Ausrichtung des Handhabungsaggregats 222a oder den Transport eines der Werkstücke 160, 170, 180, 190 anzusteuern. Über eine weitere Steuerleitung 276 findet ein Informationsaustausch zwischen der Steuerungseinrichtung 240b und der Bewegungseinheit 300 und der Handhabungsaggregat 1a statt, um das Handhabungsaggregat 1a für ein Ausrichten und Positionieren und bevorzugt auch Befestigen der Werkstücke 160, 170, 180, 190 an der Grundstruktur 100 anzusteuern, um die Bewegungseinheit 300 an eine vordefinierte Position entlang der Transporteinrichtung 290 zu verfahren und um den Knickarm 301 für eine vordefinierte Handhabung wie die Positionierung und Ausrichtung des Handhabungsaggregats 1a anzusteuern.

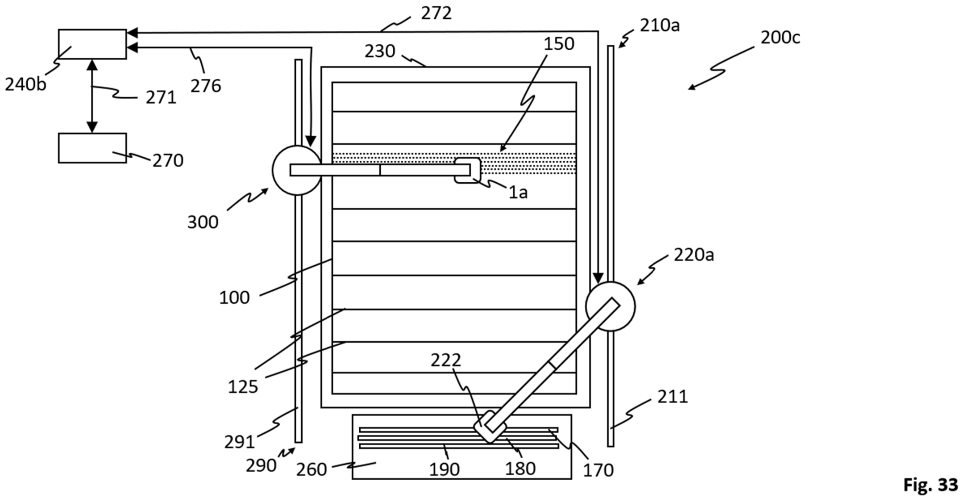

Die **Fig. 33** zeigt in einer Draufsicht eine Fertigungsanlage 200c in einer weiteren bevorzugten Ausführungsform zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses. Die Fertigungsanlage 200c umfasst im Vergleich zur Fertigungsanlage 200b anstelle der bewegbaren Lagereinrichtung 260a die stationäre Lagereinrichtung 260 von **Fig. 28** an der Stirnseite des Auflagetisches 230. Ansonsten umfasst die Fertigungsanlage 200c die gleichen Komponenten und Funktionen wie die Fertigungsanlage 200b.

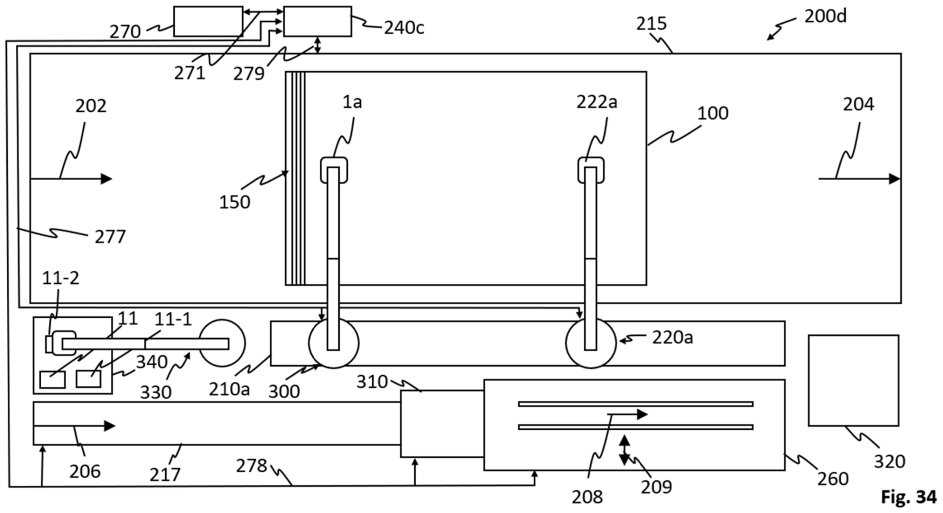

Die **Fig. 34** zeigt in einer Draufsicht eine Fertigungsanlage 200d in einer weiteren bevorzugten Ausführungsform zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses. Die Fertigungsanlage 200d umfasst eine Transporteinrichtung 215 zum Zuführen der Grundstruktur 100 zu der Fertigungsanlage 200d in einer Transportrichtung 202 und zum Abtransportieren der Grundstruktur 100 mit der mehrteiligen Struktur 150 in einer Transportrichtung 204. Alternativ umfasst die Fertigungsanlage 200d eine Transporteinrichtung zum Zuführen der Grundstruktur 100 zu der Fertigungsanlage 200d und eine weitere Transporteinrichtung zum Abtransportieren der Grundstruktur 100 mit der mehrteiligen Struktur 150. Die Fertigungsanlage 200d umfasst ferner eine Transporteinrichtung 217 zum Zuführen der Werkstücke 160, 170, 180, 190 zu der Fertigungsanlage 200d in einer Transportrichtung 206.

Die Fertigungsanlage 200d umfasst ferner eine Zerspanungseinrichtung 310 zur Längendimensionierung der Werkstücke 160, 170, 180, 190 beispielsweise am Ende der Transporteinrichtung 217. Die Zerspanungseinrichtung 310 ist beispielsweise eine Kappsäge. Die Fertigungsanlage 200d umfasst ferner bevorzugt eine Abfalleinrichtung 320 für an der Zerspanungseinrichtung 310 anfallende Abfallstücke.

Die Fertigungsanlage 200d umfasst ferner die stationäre Lagereinrichtung 260 an einer Ausgabeseite der Zerspanungseinrichtung 310 für die Werkstücke 160, 170, 180, 190. Die Lagereinrichtung 260 umfasst eine erste Fördereinrichtung (angedeutet durch einen Pfeil 208) mit einer Förderrichtung parallel zu der Transportrichtung 206 und bevorzugt eine zweite Fördereinrichtung (angedeutet durch einen Pfeil 209) mit zwei Förderrichtungen senkrecht zu der Transportrichtung 206.

Die Fertigungsanlage 200d umfasst ferner eine Transporteinrichtung 210a und zwei Bewegungseinheiten 220a, 300 in Form von Knickarmrobotern, die bewegbar auf der Transporteinrichtung 210a angeordnet sind. Die Bewegungseinheit 220a umfasst am freien eines Knickarms das Handhabungsaggregat 222a zum Greifen der Werkstücke 160, 170, 180, 190, zum Transportieren der Werkstücke 160, 170, 180, 190 von der Lagereinrichtung 260 zu der Grundstruktur 100 und bevorzugt zum Einführen der Werkstücke 160, 170, 180, 190 in die erste Anlegeeinrichtung 10, 10a und die zweite Anlegeeinrichtung 20, 20a. Die Bewegungseinheit 300 umfasst am freien eines Knickarms das Handhabungsaggregat 1a mit der ersten Anlegeeinrichtung 10, 10a, 10b und der zweiten Anlegeeinrichtung 20, 20, 20ba zum Ausrichten und Positionieren und bevorzugt auch Befestigen der Werkstücke 160, 170, 180, 190 an der Grundstruktur 100.

Die Fertigungsanlage 200d umfasst ferner eine Handhabungseinrichtung 330 zum Handhaben von Grundplatten 11, 11-1, 11-2 mit je einer ersten Anlegeeinrichtung 10,10a 10b einer zweiten Anlegeeinrichtung 20, 20a, 20b und eine Lagereinrichtung 340 für die Grundplatten 11, 11-1, 11-2. Die Handhabungseinrichtung 330 ist bevorzugt ein weiterer Knickarmroboter der eingerichtet ist, eine der Grundplatten 11, 11-1, 11-2 zwischen der Lagereinrichtung 340 und dem Handhabungsaggregat 1a der Bewegungseinheit 300 zu transportieren und automatisiert bei dem Handhabungsaggregat 1a der Bewegungseinheit 300 einzuwechseln bzw. auszuwechseln.

Die Fertigungsanlage 200d umfasst ferner eine Steuerungseinrichtung 240c, die Bedienungseinrichtung 260, die erste Steuerleitung 271 und Steuerleitungen 277, 278, 279. Über die erste Steuerleitung 271 findet ein Informationsaustausch zwischen der Steuerungseinrichtung 240c und der Bedienungseinrichtung 270 statt. Über die Steuerleitung 277 findet ein Informationsaustausch zwischen der Steuerungseinrichtung 240c und der Bewegungseinheit 220a und dem Handhabungsaggregat 222 statt, um das Handhabungsaggregat 222a für ein Greifen und Loslassen der Werkstücke 160, 170, 180, 190 anzusteuern, um die Bewegungseinheit 220a an eine vordefinierte Position entlang der Transporteinrichtung 210a zu verfahren und den Transport eines der Werkstücke 160, 170, 180, 190 von der Lagereinrichtung 260 zu der Grundstruktur 100 anzusteuern. Über die Steuerleitung 277 findet ferner ein Informationsaustausch zwischen der Steuerungseinrichtung 240c und der Bewegungseinheit 300 und dem Handhabungsaggregat 1a statt, um das Handhabungsaggregat aa für ein Ausrichten und Positionieren der Werkstücke 160, 170, 180, 190 und bevorzugt auch ein Befestigen der Werkstücke 160, 170, 180, 190 an der Grundstruktur 100 anzusteuern und um die Bewegungseinheit 300 an eine vordefinierte Position entlang der Transporteinrichtung 210a zu verfahren. Über die Steuerleitung 278 findet ein Informationsaustausch zwischen der Steuerungseinrichtung 240b, der Transporteinrichtung 217, der Zerspanungseinrichtung 310 und der Lagereinrichtung 260 statt, um die Werkstücke 160, 170, 180, 190 nach Zeitplan und gemäß der erforderlichen Längendimensionierung für die Fertigung der mehrteiligen Struktur 150 bereitzustellen. Über die Steuerleitung 279 findet ein Informationsaustausch zwischen der Steuerungseinrichtung 240b und der Transporteinrichtung 215 statt, um die Grundstruktur 100 nach Zeitplan bereitzustellen und nach Fertigstellung der mehrteiligen Struktur 150 an der Grundstruktur 100 abzutransportieren.

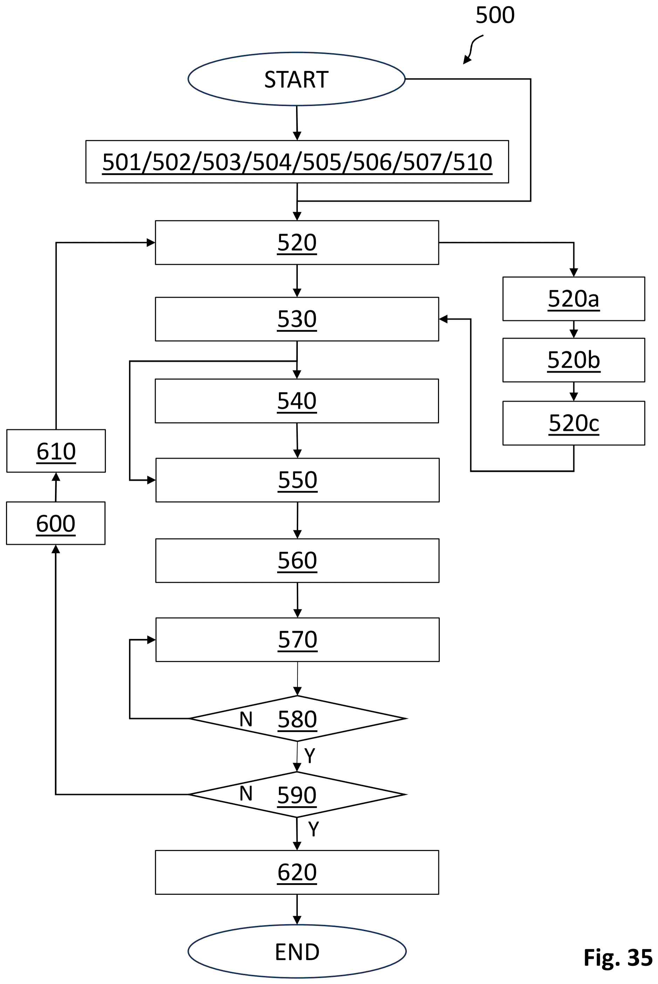

Die Fig. 35 zeigt ein Ablaufdiagramm eines Verfahrens 500 zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses. Bei dem Verfahren 500 kann bevorzugt eines der Handhabungsaggregate 1, 1a, 1b, 1c bzw. eine der Fertigungsanlagen 200, 200a, 200b, 200c, 200d zum Einsatz kommen. Ferner können bei dem Verfahren 500 die erste Anlegeeinrichtung 10, 10a, 10b und die zweite Anlegeeinrichtung 20, 20a, 20b als Einzelkomponenten ohne die gesamte Komplexität der oben beschriebenen Handhabungsaggregate 1, 1a, 1b, 1c zum Einsatz kommen. Die erste Anlegeeinrichtung 10, 10a, 10b und die zweite Anlegeeinrichtung 20, 20a, 20b können in diesem Fall beispielsweise jeweils nebeneinander direkt an dem Aggregateträger 225 der Bewegungseinheit 220 oder direkt an einem Knickarm 226, 301 der jeweiligen Bewegungseinheit 220a, 300 angeordnet sein.

Das Verfahren 500 umfasst zu Beginn bevorzugt einen oder mehrere optionale Schritte 501, 502, 503, *504, 505, 506,* 510, wobei im Falle mehrerer optionaler Schritte die Schritte entweder nacheinander oder soweit möglich auch parallel ausgeführt werden. Es wird bei dem Verfahren 500 davon ausgegangen, dass sich die zweite Anlegeeinrichtung 20, 20a, 20b in Bezug auf die erste Anlegeeinrichtung 10, 10a, 10b in der oben beschriebenen Grundposition befindet. Ansonsten müsste beispielsweise die zweite Anlegeeinrichtung 20, 20a, 20b in der Höhenrichtung Z mittels der Verstelleinrichtung 30 für das Erreichen der Grundposition verstellt werden.

In einem ersten optionalen Schritt 501 erfolgt ein Zuführen der Grundstruktur 100 beispielsweise mittels der Transporteinrichtung 215 zu der Fertigungsanlage 200d. Alternativ kann die Grundstruktur 100 zuvor mit der jeweiligen Fertigungsanlage 200, 200a, 200b, 200c errichtet worden sein und damit bereits zur Bearbeitung mit der Fertigungsanlage 200, 200a, 200b, 200c vorhanden sein.

In einem zweiten optionalen Schritt 502 nach dem Schritt 501 erfolgt ein Positionieren und Fixieren der Grundstruktur 100 beispielsweise auf einem Auflagetisch der Fertigungsanlage 200d.

In einem dritten optionalen Schritt 503 erfolgt ein Zuführen von den Werkstücken 160, 170, 180, 190 oder von noch nicht dimensionierten Werkstücken zu der Fertigungsanlage 200d beispielsweise mittels der Transporteinrichtung 217.

In einem vierten optionalen Schritt 504 erfolgt ein Zerteilen bzw. Zersägen der in Schritt 503 zugeführten noch nicht dimensionierten Werkstücke auf die jeweils vordefinierte Längenabmessung beispielsweise mittels der Zerspanungseinrichtung 310.

In einem fünften optionalen Schritt 505 bevorzugt nach dem Schritt 503 erfolgt ein Zwischenlagern der Werkstücke 160, 170, 180, 190 beispielsweise in der Lagereinrichtung 260.

In einem weiteren optionalen Schritt 506 erfolgt ein Entsorgen von Abfallstücken, die beim Zerteilen der zugeführten noch nicht dimensionierten Werkstücke angefallen sind.

In einem weiteren optionalen Schritt 507 erfolgt ein Aufbringen von Markierungslinien 125 (siehe Fig. 31) auf die Grundstruktur 100. Insbesondere bei einem vollautomatisierten Verfahren kann auf den Schritt 507 verzichtet werden.

In einem weiteren optionalen Schritt 510 erfolgt ein Anpassen der ersten Anlegeeinrichtung 10, 10a, 10b in der Querrichtung Y (siehe **Fig. 4** oder **Fig. 5****),** in dem die Führungselemente 12, 13 mit einem vordefinierten Abstand passend zur vordefinierten Breite der Werkstücke 160, 170, 180 190 beabstandet werden. Dies kann durch ein manuelles Umsetzen mindestens eines der Führungselemente 12, 13 erfolgen. Alternativ kann die erste Anlegeeinrichtung 10, 10a, 10b eine Antriebseinrichtung zum Einstellen des vordefinierten Abstands umfassen. In einer weiteren Alternative kann die bereits im Handhabungsaggregat vorhandene erste Anlegeeinrichtung 10, 10a, 10b gegen eine bereits passend für die Werkstücke 160, 170, 180, 190 vorkonfektionierte weitere erste Anlegeeinrichtung 10, 10a, 10b manuell oder automatisiert ausgetauscht werden. Der Schritt 510 kann ausgelassen, wenn die bereits vorhandene erste Anlegeeinrichtung 10, 10a, 10b für die Fertigung der nächsten mehrteiligen Struktur 150 wiederverwendet werden kann.

In einem weiteren Schritt 520 erfolgt ein Vorpositionieren der ersten Anlegeeinrichtung 10, 10a, 10b und der zweiten Anlegeeinrichtung 20, 20a, 20b bzw. des Handhabungsaggregats 1, 1a, 1b, 1c in Bezug auf die Grundstruktur 100 bevor das erste Werkstück 160 oder das zweite Werkstück 170, falls das erste Werkstück 160 als Nullreferenz von Hand positioniert, ausgerichtet und befestigt wurde, der ersten Anlegeeinrichtung 10, 10a, 10b und der zweiten Anlegeeinrichtung 20, 20a, 20b bzw. dem Handhabungsaggregats 1, 1a, 1b, 1c zugeführt wird. Der Schritt 520 wird bevorzugt in mehreren Teilschritten durchgeführt.

In einem ersten bevorzugten Teilschritt 520a wird das Handhabungsaggregat an die Grundstruktur bevorzugt senkrecht von oben angenähert (siehe auch **Fig. 36 a).** Dazu wird beispielsweise bei dem Aggregateträger 225 der Pneumatikzylinder 225-7 drucklos geschaltet, so das Handhabungsaggregat 1, 1a, 1b, 1c sich in Folge der Erdanziehungskraft soweit zu der Grundstruktur 100 abgesenkt, bis die erste Anlegeeinrichtung 10, 10a, 10b die Grundstruktur 100 berührt (siehe auch **Fig. 36 b).** Dieser Kontakt zwischen der ersten Anlegeeinrichtung 10, 10a, 10b und der Oberseite der Grundstruktur 100 wird bevorzugt für ein Einmessen bzw. Kalibrieren der Fertigungsanlage 200, 200a, 200b, 200c, 200d in Z-Richtung genutzt.

In einer zweiten bevorzugten Teilschritt 520b, der beispielsweise durch den Ablauf eines Timers, der so programmiert ist, dass nach Ablauf einer vordefinierten Zeitdauer davon ausgegangen wird, dass das Handhabungsaggregats 1, 1a, 1b, 1c auf der Grundstruktur 100 aufgesetzt hat, getriggert wird, wird die Klemmeinrichtung wie beispielsweise die gefederte Klemmeinrichtung 225-6 aktiviert, so dass der Vertikalschlitten 225-2 mit dem Schienensystem 225-4 in der Höhenrichtung Z verklemmt wird. Alternativ kann durch einen Abstandssensor feststellt werden, ob sich der Abstand zwischen dem Handhabungsaggregat 1, 1a, 1b, 1c und der Grundstruktur 100 nicht mehr ändert und somit von einem Kontakt des Handhabungsaggregat 1, 1a, 1b, 1c mit der Grundstruktur 100 ausgegangen werden darf.

In einem dritten bevorzugten Teilschritt 520c wird das Handhabungsaggregat bzw. die erste Anlegeeinrichtung 10, 10a, 10b soweit von der Grundstruktur 100 angehoben, bis die erste Anlegeeinrichtung 10, 10a, 10b einen vordefinierten Abstand von der Grundstruktur 100 im Bereich von 1 mm bis 10 mm, weiter bevorzugt von 1 mm bis 5 mm und noch weiter bevorzugt von 1 mm bis 3 mm eingenommen hat (siehe auch **Fig. 36 c).** Dazu wird beispielsweise auf den Pneumatikzylinder 225-7 wieder ein entsprechender Druck gegeben.

In einer alternativen bevorzugten Ausführungsform werden die Schritte 520a, 520b und 520c nur für das erste Werkstück durchgeführt und bei den weiteren Werkstücken wird gleich die Position von Schritt 520c unter Aktivierung der Klemmeinrichtung eingenommen, weil das Einmessen bzw. Kalibrieren nach dem ersten Werkstück ausreicht.

In einem weiteren Schritt 530 wird das erste Werkstück 160 der ersten Anlegeeinrichtung 10, 10a, 10b und der zweiten Anlegeeinrichtung 20, 20a, 20b zugeführt (siehe auch **Fig. 36 d).** Dies kann durch einen Bediener manuell oder mittels einer Bewegungseinheit automatisch durchgeführt werden. Dabei wird das erste Werkstück 160 zwischen die beiden Führungselemente 12, 13 der ersten Anlegeeinrichtung 10, 10a, 20a eingeführt, falls beide Führungselemente 12, 13 an der Grundplatte 11 angeordnet sind.

Falls die erste Anlegeeinrichtung 10, 10a, 10b dabei mit zumindest einem Führungselement 12-1 gemäß **Fig. 7** bis **Fig. 11** ausgestattet ist, dann kommt es in einem weiteren optionalen Schritt 540 zu einer Verstellung der ersten Anlegeeinrichtung 10, 10a, 10b. Falls das zweite Werkstück 170 auf Kontakt zum ersten Werkstück 160 positioniert und ausgerichtet werden soll, ist die erste Anlegeeinrichtung 10, 10a, 10b bevorzugt nur mit einem der Führungselement 12, 13 ausgestattet ist.

In einem weiteren Schritt 550 wird die zweite Anlegeeinrichtung 20, 20a, 20b bzw. das Handhabungsaggregat wieder soweit abgesenkt, bis die zweite Anlegeeinrichtung 20, 20a, 20b die Oberseite des jeweiligen Werkstücks 160, 170, 180, 190 berührt (siehe auch **Fig. 36 e).** Dazu wird beispielsweise bei dem Aggregateträger 225 der Pneumatikzylinder 225-7 wieder drucklos geschaltet.

In einem weiteren Schritt 560 wird die Relativposition zwischen der ersten Anlegeeinrichtung 10, 10a, 10b und der zweiten Anlegeeinrichtung 20, 20a, 20b in der Höhenrichtung Z mittels der Verstelleinrichtung 30 für das Erreichen einer Arbeitsstellung verstellt. Dazu wird die zweite Anlegeeinrichtung 20, 20a, 20b bevorzugt zusammen mit der Bearbeitungseinrichtung 60 mittels der Verstelleinrichtung 30 in der Höhenrichtung Z nach außen aus dem Handhabungsaggregat 1, 1a, 1b, 1c verfahren, so dass die zweite Anlegeeinrichtung 20, 20a, 20b die Oberseite 165 des ersten Werkstücks 160 berührt und durch Druck auf die Oberseite 165 des ersten Werkstücks 160 das Handhabungsaggregat 1, 1a, 1b, 1c mit der ersten Anlegeeinrichtung 10, 10a, 10b angehoben wird. Dadurch bleibt der für die notwendige vordefinierte Eintreibtiefe wichtige Abstand von der Ausgabemündung 62 der Befestigungseinrichtung 60 zu der Anlageebene 22 der zweiten Anlegeeinrichtung, die die Oberseite 165 des erstenn Werkstücks 160 berührt, stets identisch. Dabei erfolgt das Positionieren der ersten Anlegeeinrichtung 10, 10a, 10b und der zweiten Anlegeeinrichtung 20, 20a, 20b in die Arbeitsstellung derart, dass die erste Anlegeeinrichtung 10, 10a, 10b das erste Werkstück 160 zumindest an einer Längsseite 161, 161a, des ersten Werkstücks 160 insbesondere mit einem Längenmaß senkrecht zur Oberseite 165 des ersten Werkstücks 160 im Bereich von 5 bis 15 mm, bevorzugt von 7 bis 13 mm und weiter bevorzugt von 9 bis 11 mm benachbart zur Oberseite des ersten Werkstücks 160 kontaktiert.

In einem weiteren Schritt 570 wird damit begonnen an dem ersten Werkstück 160 mit der ersten Anlegeeinrichtung 10, 10a, 10b und der zweiten Anlegeeinrichtung 20, 20a, 20b auf einem vordefinierten Bewegungspfad eine vordefinierte Weglänge von beispielsweise 50 cm entlangzufahren. Dabei wird das erste Werkstück 160 sowohl in X-Richtung und der Y-Richtung mittels der ersten Anlegeeinrichtung 10, 10a, 10b und in der Z-Richtung mittels der zweiten Anlegeeinrichtung 20, 20a, 20b ausgerichtet und positioniert. Die Positionierung des ersten Werkstücks und auch der weiteren Werkstücke 170, 180, 190 erfolgt dabei bevorzugt gemäß einem Datensatz. Dies hat den Vorteil, dass bei einer möglichen Positionierung der Werkstücke 160, 170, 180, 190 auf Stoß und einer stetigen Abweichung der tatsächlichen Werkstückbreite kleiner als die vordefinierten Werkstückbreite auch die vorgesehene Anzahl an Werkstücken für die mehrteilige Struktur 150 ausreicht. Ansonsten könnte es passieren, dass Werkstücke fehlen und somit nachgeliefert werden müssen, um die vordefinierte Breite der mehrteiligen Struktur 150 in der Querrichtung Y zu erreichen.

Falls das erste Werkstück 160 an einigen Stellen in der Höhenrichtung Z verbogen ist, so kann mittels der schwimmenden Lagerung des Vertikalschlittens 225-2 infolge der gefederten Schienenklemmung 225-6 ein Druck auf die Oberseite 165 des ersten Werkstücks 160 ausgeübt werden, so dass dadurch das erste Werkstück 160 an dem betreffenden Längsabschnitt auf die Grundstruktur 100 aufgedrückt wird. Dabei wird beispielsweise der Unterstützungsdruck des Pneumatikzylinders 225-7 so gewählt, dass die Gewichtskraft des Aggregateträgers 225 und des Handhabungsaggregats 1, 1b, 1c noch ausreicht, um das Werkstück 160 plan an die Grundstruktur 100 anzudrücken. Während des Schritts 570 wird bevorzugt an einer ersten vordefinierten das erste Werkstück 160 mittels der Bearbeitungseinrichtung 60 bevorzugt auf der Grundstruktur 100 befestigt, in dem ein Befestigungsmittel der Bearbeitungseinrichtung 60 in das erste Werkstück 160 und die darunter liegende Grundstruktur 100 eingetrieben wird. Bei Werkstücken mit einer vordefinierten Breite zwischen 40 mm und 100 mm wird das Befestigungsmittel bevorzugt mittig eingetrieben. Bei Werkstücken mit einer vordefinierten Breite von mehr als 100 mm werden bevorzugt zwei Befestigungsmittel nebeneinander mit einem Abstand von bevorzugt mindestens 50 mm in das Werkstück eingetrieben. Für das zweite Befestigungsmittel wird bevorzugt ein zweites Handhabungsaggregat mit einem weiteren Befestigungseinrichtung eingesetzt, weil die erste Anlageeinrichtung und das Handhabungsaggregat in der Regel nur für eine Positionierung des ersten Befestigungsmittels ausgelegt ist. Alternativ könnte das Handhabungsaggregat zwei Befestigungsaggregat nebeneinander mit einem entsprechenden Abstand umfassen, so dass auf ein zweites Handhabungsaggregat verzichtet werden kann.

Nachfolgend wird in einem weiteren Schritt 580 überprüft, ob das Ende des ersten Werkstücks 160 bereits erreicht ist. Falls dem nicht so ist, dann werden die Schritte 560 und 570 wiederholt. Falls dem so ist, dann wird das Verfahren 500 mit einem Schritt 590 fortgesetzt.

Nachfolgend wird in dem weiteren Schritt 590 überprüft, ob alle Werkstücke der zu fertigenden mehrteiligen Struktur 150 bereits ausgerichtet, positioniert und auf der Grundstruktur 100 befestigt wurden. Falls dem nicht so ist, dann wird ein Schritt 600 durchgeführt, bei dem die Klemmeinrichtung deaktiviert wird. Ferner wird ein Schritt 610 durchgeführt, bei dem das Handhabungsaggregat von dem Werkstück abgehoben und die zweite Anlegeeinrichtung in Bezug auf die erste Anlegeeinrichtung wieder in die Grundposition mittels beispielsweise der Verstelleinrichtung 30 verstellt wird. Nach dem Schritt 610 wird das Verfahren 500 mit dem Schritt 520 fortgesetzt.

Falls keine Werkstücke mehr positioniert und ausgerichtet und bevorzugt befestigt werden müssen, wird das Verfahren 500 mit dem Schritt 620 fortgesetzt.

In dem weiteren Schritt 620 wird die Grundstruktur 100 mit der daran gefertigten mehrteiligen Struktur 150 beispielsweise mittels der Transporteinrichtung 215 in ein Lager abtransportiert oder zu einer weiteren Fertigungsanlage transportiert, wo weitere Bearbeitungsschritte an der Grundstruktur 100 oder der mehrteiligen Struktur 150 vorgenommen werden.

Bei dem Verfahren 500 erfolgt die Positionierung des jeweiligen Werkstücks 160, 170, 180, 190 auf der Grundstruktur 100 bevorzugt für die Zwecke der Fertigung der mehrteilige Struktur 150 in Form einer Nut-Feder-Schalung oder Stülp-Schalung oder Stoß-Schalung oder Lücken-Schalung oder Rhombusleistenschalung oder Trapezprofilschalung oder Skyline-Schalung. Wo es sinnvoll ist, kann von der in den Figuren gezeigten und hier beschriebenen Schrittfolge bei dem Verfahren 500 abgewichen werden oder es können auch zwei oder mehr Schritte gleichzeitig durchgeführt werden.

Die vordefinierten Befestigungsstellen und die vordefinierten Bewegungspfade werden dabei bevorzugt von einem CAD-Layout bzw. dem oben genannten Datensatz für die gewünschte Fassadenstruktur vorgegeben.

Die **Fig. 36** zeigt jeweils in einer Seitenansicht einen Ausschnitt des Handhabungsaggregats 1, 1a im Bereich des zweiten endseitigen Abschnitt 43 der Tragstruktur 40 sowie die mehrteilige Struktur 150 und die Grundstruktur 100 zu sechs verschiedenen Zeitpunkten bei einem bevorzugten Verfahren zum Positionieren bzw. Ausrichten eines Werkstücks 160, 170, 180, 190 auf einer Grundstruktur 100, insbesondere zum Befestigen einer mehrteiligen Struktur 150 aus Holzelementen und/oder Holzwerkstoffelementen auf der Grundstruktur 100 in Form eines Holzrahmenelements für eine Wand oder einen Boden bzw. eine Decke oder ein Dach eines Fertighauses und weiter insbesondere zum Fertigen einer Holzfassade auf einem Holzrahmenwandelement ein Fertighaus.

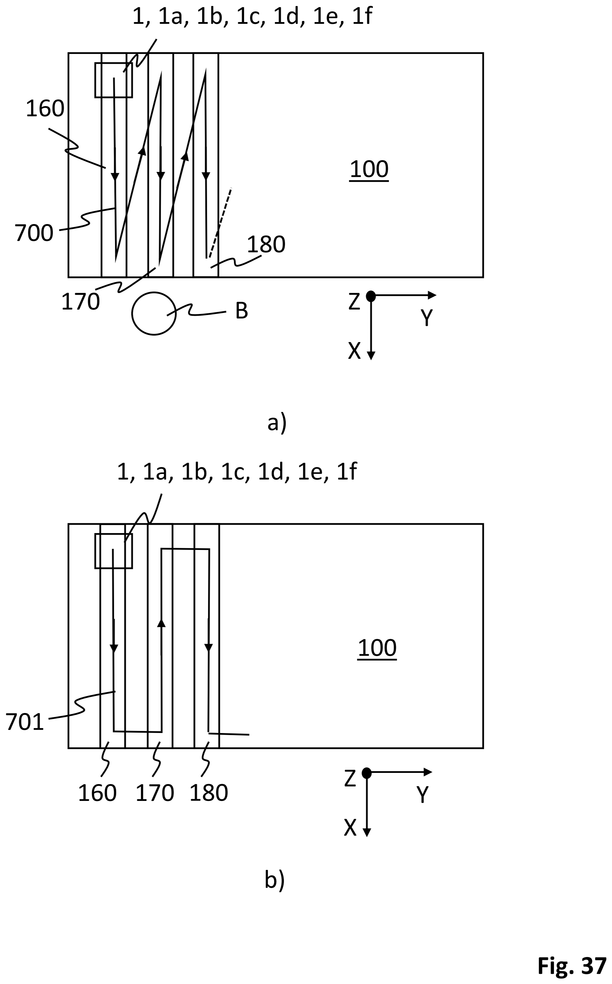

Zu einem ersten Zeitpunkt (siehe **Fig. 36 a)** ist das erste Werkstück 160 bereits auf der Grundstruktur 100 ausgerichtet, positioniert und befestigt worden. Dies kann zum einen manuell von einem Bediener ausgeführt werden (siehe auch **Fig. 37 a),** in dem sich der Bediener beispielsweise anhand der Markierungslinien 125 orientiert, die zuvor auf die Grundstruktur 100 manuell oder automatisiert aufgezeichnet wurden. Das Handhabungsaggregats 1, 1a ist gezeigt, wie es sich der Grundstruktur 100 und insbesondere einer vordefinierten Position für das zweite Werkstück 170 angedeutet durch einen Richtungspfeil P1 annähert. Die zweite Anlegeeinrichtung 20 befindet sich in der oben beschriebenen Grundposition, bei der sich der Anlegeabschnitt 21 (siehe **Fig. 12****)** mit einer Länge zwischen 1 mm und 5 mm und weiter bevorzugt zwischen 2 und 4 mm aus der Unterseite des sechsten Haltekörpers 47 herausragt. Zum Annähern des Handhabungsaggregats 1, 1a an die Grundstruktur 100 wird die jeweilige Bewegungseinheit 220a, 300 bzw. die Bewegungseinheit 220 in Kombination mit dem Horizontalschlitten 225-1 und dem Vertikalschlitten 225-2 des Aggregateträgers 225 eingesetzt.

Zu einem zweiten Zeitpunkt (siehe **Fig. 36 b)** wurde das Handhabungsaggregat 1, 1a der Grundstruktur 100 bis auf Kontakt zur Grundstruktur 100 angenähert, in dem jeweils ein unterstes Ende der Führungselemente 12, 13 der ersten Anlegeeinrichtung die Oberseite der Grundstruktur 100 berühren. Diese Position befindet sich bevorzugt dort, wo ein Endabschnitt des zweiten Werkstücks 170 auf der Grundstruktur 100 zum Liegen kommen und befestigt werden soll.

Zu einem dritten Zeitpunkt (siehe **Fig. 36 c)** hat das Handhabungsaggregat 1, 1a eine finale Position zur Vorpositionierung des zweiten Werkstücks 170 bzw. Heranführung des zweiten Werkstücks 170 an das Handhabungsaggregats 1, 1a eingenommen. Dazu wurde das Handhabungsaggregat 1, 1a bei aktivierter Klemmeinrichtung beispielsweise mittels des Vertikalschlittens 225-2 von der Kontaktstellung gemäß Fig. 36 b) in Pfeilrichtung P2 um eine Länge im oben angegebenen Bereich von 1 mm bis 10 mm, weiter bevorzugt von 1 mm bis 5 mm und noch weiter bevorzugt von 1 mm bis 3 mm angehoben.

Zu einem vierten Zeitpunkt (siehe **Fig. 36 d)** wird das zweite Werkstück 170 zwischen den Führungselementen 12, 13 der ersten Anlegeeinrichtung 10 in das Handhabungsaggregat 1, 1a manuell oder automatisiert eingeführt und damit vorläufig ausgerichtet und vorpositioniert. Das Handhabungsaggregat 1, 1a selbst hat vom dritten Zeitpunkt zum vierten Zeitpunkt keine Veränderung erfahren.

Zu einem fünften Zeitpunkt (siehe Fig. 36 e) wurde das Handhabungsaggregat 1, 1a beispielsweise mittels des Vertikalschlittens 225-2 in Pfeilrichtung P3 wieder abgesenkt, bis der Anlegeabschnitt 21 der zweiten Anlegeeinrichtung 20 die Oberseite 175 des zweiten Werkstücks 170 kontaktiert hat.

Zu einem sechsten Zeitpunkt (siehe **Fig. 36 d)** wird das Handhabungsaggregats 1, 1a entlang des zweiten Werkstücks 170 geführt, um das zweite Werkstück 170 final auf der Grundstruktur 100 zu positionieren und auszurichten und um das zweite Werkstück 170 bevorzugt an mehreren Befestigungspunkten auf der Grundstruktur 100 zu befestigen. Dazu wurde zunächst der Anlegeabschnitt 21 der zweiten Anlegeeinrichtung 20 mittels der Verstelleinrichtung 30 gegen die Oberseite 175 des zweiten Werkstücks 170 in Pfeilrichtung P4 gedrückt, so dass sich das Handhabungsaggregat 1, 1a mit dessen übrigen Komponenten in Pfeilrichtung P5 angehoben hat, so dass die Führungselemente 12, 13 das zweite Werkstück 170 an einem oberen Abschnitt der jeweiligen Längsseiten 171, 171a des zweiten Werkstücks bevorzugt mit einem Längenmaß senkrecht zur Oberseite 175 als in der Höhenrichtung Z im Bereich von 5 bis 15 mm, bevorzugt von 7 bis 13 mm und weiter bevorzugt von 9 bis 11 mm kontaktieren.

Die **Fig. 37** zeigt jeweils einen auf die Oberseite der Grundstruktur 100 projizierten bevorzugten Verfahrweg 700, 701 des Handhabungsaggregats 1, 1a, 1b 1c, 1d, 1e, 1f um die Werkstücke 160, 170, 180 auf der Grundstruktur 100 auszurichten und zu positionieren und bevorzugt zu befestigen. Gemäß **Fig. 37 a)** steht bei einem halbautomatischen Verfahren bzw. Prozess ein Bediener B bevorzugt seitlich an einer Längsseite der Grundstruktur 100. Das Handhabungsaggregat 1, 1a, 1b 1c, 1d, 1e, 1f wird bevorzugt jeweils auf der Oberseite der Grundstruktur 100 im Bereich der gegenüberliegenden Längsseite der Grundstruktur 100 zum Empfang des jeweiligen Werkstücks 160, 170, 180 vorpositioniert.

In diesen beiden Grundposition des Bedieners B und des vorpositionierten Handhabungsaggegats 1, 1a, 1b 1c, 1d, 1e, 1f greift der Bediener bevorzugt von einem Lagerplatz oder einer Transporteinrichtung das jeweilige Werkstück 160, 170, 180 und führt es an die erste Anlegeeinrichtung 10, 10a, 10b heran (bevorzugt bei nur einem existierenden Führungselement 12, 13) bzw. führt es in die erste Anlegeeinrichtung 10, 10a, 10b ein (bevorzugt bei zwei existierenden Führungselementen 12, 13). Anschließend fährt das Handhabungsaggregat 1, 1a, 1b 1c, 1d, 1e, 1f beispielsweise in der Längsrichtung X an dem ersten Werkstück 160 entlang und richtet es dabei aus und positioniert es auf der Grundstruktur 100 und befestigt das Werkstück 160 bevorzugt in vordefinierten Abständen auf der Grundstruktur 100. Wenn das letzte Befestigungsmittel des ersten Werkstücks 160 eingetrieben wurde, wird die Klemmeinrichtung deaktiviert und das 1, 1a, 1b 1c, 1d, 1e, 1f nach oben von der Grundstruktur 100 abgehoben und fährt bevorzugt auf kürzestem diagonalen Weg zum vordefinierten Ort, wo die Vorpositionierung für das zweite Werkstück 170 erfolgen soll. Anschließend laufen die weiteren Schritte für das zweite Werkstück 170 und das dritte Werkstück 180 ab.

Die **Fig. 37 b)** zeigt den bevorzugten Verfahrweg 701 des Handhabungsaggregats 1, 1a, 1b 1c, 1d, 1e, 1f bei einem vollautomatischen Verfahren zur Ausrichtung, Positionierung und bevorzugt Befestigung der Werkstücke 160, 170, 180 auf der Grundstuktur 100. Im Unterschied zum Verfahrweg 700 bei der **Fig. 37 a)** verfährt das Handhabungsaggregat 1, 1a, 1b 1c, 1d, 1e, 1f nach dem Eintreiben des letzten Befestigungsmittels für das erste Werkstück 160 nach dem Abheben von der Grundstruktur 100 in der Querrichtung Y zum vordefinierten Ort, wo die Vorpositionierung für das zweite Werkstück 170 erfolgen soll. Dieser vordefinierte Ort wechselt für das jeweils nachfolgende Werkstück von einer Längsseite der Grundstruktur 100 zur anderen Längsseite der Grundstruktur 100. Die Werkstücke 160, 170, 180 werden folglich jeweils in entgegengesetzter Richtung zum vorigen Werkstück ausgerichtet, positioniert und auf der Grundstruktur 100 befestigt.

Neben den in den nachfolgenden Patentansprüchen beanspruchten Ausführungsformen der Handhabungsaggregate 1, 1a, 1b, 1c, 1d, 1e, 1f gibt es die folgenden bevorzugten Ausführungsformen für die Handhabungsaggregate 1, 1a, 1b, 1c, 1d, 1e, 1f:
Die Handhabungsaggregate 1, 1a, 1c, 1f umfassen bevorzugt eine Antriebseinrichtung 31 für die Verstelleinrichtung 30.

Bei den Handhabungsaggregaten 1, 1a, 1c, 1f umfasst die Tragstruktur 40 bevorzugt einen dritten Haltekörper 44, wobei der dritte Haltekörper 44 entlang mindestens einer der Stangen 50a, 50b, 50c, 50d verschiebbar ist und an der mindestens einen der Stangem 50a, 50b, 50c, 50d in einer vordefinierten Höhenposition verklemmbar ist, und wobei die vordefinierte Höhenposition durch die Längsausdehnung der Bearbeitungseinrichtung 60 in der Höhenrichtung Z bestimmt ist.

Bei den Handhabungsaggregaten 1, 1a, 1b, 1c, 1d, 1e, 1f umfasst die erste Anlegeeinrichtung 10 bevorzugt eine Grundplatte 11, 11-1, wobei an der Grundplatte 11, 11-1 das mindestens eine Führungselement 12, 13 bevorzugt lösbar angeordnet ist, und wobei die Grundplatte 11, 11-1 eine bevorzugt zentrale Aussparung 16, 16a für einen Einwirkungsbereich 62 der Bearbeitungseinrichtung 60 mit dem Werkstück 160, 170, 180, 190 umfasst.

Bei den Handhabungsaggregaten 1b, 1d, 1e umfasst die Grundplatte 11-1 bevorzugt eine erste Teilplatte 11-1a und eine zweite Teilplatte 11-1b, wobei die erste Teilplatte 11-1a insbesondere auswechselbar an dem sechsten Haltekörper 47a angeordnet ist, wobei die zweite Teilplatte 11-1b schwenkbar an der ersten Teilplatte 11-1b angeordnet ist, und wobei das mindestens eine Führungselement 12-3, 13-1 und der Anlegeabschnitt 21-1 an der zweiten Teilplatte 11-1b angeordnet sind.

Bei dem Handhabungsaggregat 1b umfasst die Grundplatte 11-1 ferner bevorzugt einen manuell einstellbaren Schwenkhalter 12-3 oder eine angetriebene Stelleinrichtung zur Verschwenkung der zweiten Teilplatte 11-1b.

Bei dem Handhabungsaggregat 1b ist der Schwenkhalter 12-3 oder die angetriebene Stelleinrichtung bevorzugt eingerichtet, zwischen der zweiten Teilplatte 11-1b und der ersten Teilplatte 11-1a oder zwischen der zweiten Teilplatte 11-1b und dem sechsten Haltekörper 47a zu wirken, um einen vordefinierten Winkel zwischen der zweiten Teilplatte 11-1b und der ersten Teilplatte 11-1a einzustellen.

Bei dem Handhabungsaggregat 1b umfasst die erste Teilplatte 11-1a bevorzugt eine zentrale Aussparung 16a zur Aufnahme der zweiten Teilplatte 11-1b, wobei die zweite Teilplatte 11-1b bevorzugt eine zentrale Aussparung 12-8 für den Einwirkungsbereich der Bearbeitungseinrichtung 60 mit dem Werkstück 160, 170, 180, 190 umfasst.

Das Handhabungsaggregat 1b umfasst ferner eine bevorzugt automatisiert angetriebene Schwenk- und Translationseinrichtung 80, wobei die Bearbeitungseinrichtung 60 an der Schwenk- und Translationseinrichtung 80 angeordnet ist, wobei die Schwenkund Translationseinrichtung 80 derart eingerichtet ist, dass ein Schwenkwinkel der Schwenk- und Translationseinrichtung 80 einem Schwenkwinkel der zweiten Teilplatte 11-1b folgt und dass ein Verstellweg der Schwenk- und Translationseinrichtung 80 einer Verlagerung eines Mittelpunkts der zweiten Teilplatte 11-1b durch das Schwenken der zweiten Teilplatte 11-1b folgt.

Bei den Handhabungsaggregaten 1, 1a, 1b, 1c, 1d, 1e, 1f ist die erste Anlegeeinrichtung 10, 10a, 10b bevorzugt an eine Neigung der Längsseite 161, 171, 181, 191 des Werkstücks 160, 10, 180, 190 angepasst, so dass die Führungsfläche 12a, 13b des mindestens einen Führungselements 12, 122, 13, 132 parallel zur Neigung der Längsseite 161, 171, 181, 191 des Werkstücks 160, 10, 180, 190 orientiert ist und wobei das mindestens eine Führungselement 12, 122, 13, 133 bevorzugt mindestens einen Rollkörper 12-10 umfasst.

Bei den Handhabungsaggregaten 1, 1a, 1b, 1c, 1d, 1e, 1f umfasst die erste Anlegeeinrichtung 10, 10a, 10b bevorzugt das mindestens eine Führungselement 12-1 mit der Führungsfläche 12a und ein weiteres Führungselement mit einer weiteren Führungsfläche 13a, wobei die Führungsfläche 12a und die weitere Führungsfläche 13a derart angeordnet sind, um an gegenüberliegenden Längsseiten 161, 171, 181 des Werkstücks 160, 170, 180, 190 in Anlage zu kommen, und wobei die Führungsfläche 12a und/oder die weitere Führungsfläche 13a in der Querrichtung Y federnd gelagert ist bzw. sind.

Bei den Handhabungsaggregaten 1, 1a, 1b, 1c, 1d, 1e, 1f ist bzw. sind die federnd gelagerte Führungsfläche 12a und/oder die weitere federnd gelagerte Führungsfläche 13a in der Längsrichtung X bevorzugt zweigeteilt.

Das Handhabungsaggregat 1c umfasst ferner bevorzugt eine Halteeinrichtung 70 für das jeweilige Werkstück 160, 170, 180, 190.

Bei dem Handhabungsaggregat 1c ist die Halteeinrichtung 70 bevorzugt überlappend mit einer zentralen Längsachse 19 der ersten Anlegeeinrichtung 10 an dem Handhabungsaggregat 1c angeordnet.

Bei dem Handhabungsaggregat 1c umfasst die Haltereinrichtung 70 bevorzugt einen ersten Halteabschnitt 71 und einen zweiten Halteabschnitt 72, wobei der erste Halteabschnitt 71 und der zweite Halteabschnitt 72 jeweils benachbart zu entgegengesetzten Enden und entlang der zentralen Längsachse 19 der ersten Anlegeeinrichtung 10 an dem Handhabungsaggregat 1c angeordnet sind.

Neben der in den nachfolgenden Patentansprüchen beanspruchten Ausführungsform der Fertigungsanlage 200 gibt es die folgenden bevorzugten Ausführungsformen für die Fertigungsanlage 200:
Bei der Fertigungsanlage 200 ist die Bewegungseinheit 220 bevorzugt als Portal mit einem Horizontalträger 224 ausgestaltet, wobei das Portal einen Aggregateträger 225 umfasst, wobei der Aggregateträger 225 eingerichtet ist, entlang des Horizontalträgers 224 zu verfahren, wobei der Aggregateträger 225 einen Horizontalschlitten 225-1, einen Vertikalschlitten 225-2, eine Kopplungseinrichtung 225-3 und eine Klemmeinrichtung 225-6 umfasst, wobei an dem Vertikalschlitten 225-2 das Handhabungsaggregat 1, 1a, 1b, 1c, 1d, 1e, 1f über die Kopplungseinrichtung 225-3 lösbar angeordnet ist, und wobei die Klemmeinrichtung 225-6 eingerichtet ist, den Vertikalschlitten 225-2 in einer vordefinierten Höhe der Höhenrichtung Z zu klemmen.

Bei der Fertigungsanlage 200 ist die Klemmeinrichtung 225-6 bevorzugt als gefederte Schienenklemmung ausgelegt und umfasst eine Klemmeinheit 225-6a, eine erste Feder 225-6e2, eine zweite Feder 225-6f2, einen ersten Anschlag 225-6g für die erste Feder 225-6e2 und einen zweiten Anschlag 225-6h für die zweite Feder 225-6f2, wobei die erste Feder 225-6e2 und die zweite Feder 225-6f2 in der Höhenrichtung Z übereinander angeordnet sind, wobei die Klemmeinheit 225-6a zwischen der ersten Feder 225-6e2 und der zweiten Feder 225-6f2 an einem Ende der ersten Feder 225-6e2 und an einem Ende der zweiten Feder 225-6f2 angeordnet ist, wobei der erste Anschlag 225-6g am gegenüberliegenden Ende der ersten Feder 225-6e2 angeordnet ist und wobei der zweite Anschlag 225-6h am gegenüberliegenden Ende zweiten Feder 225-6f2 angeordnet ist.

Bei der Fertigungsanlage 200 umfasst die Klemmeinrichtung 225-6 ferner bevorzugt eine lineare Führungseinrichtung 225-6b mit einem Schlitten 225-6b1 und einer Schiene 225-6b2, wobei der Schlitten 225-6b1 an der Klemmeinheit 225-6a angeordnet ist, wobei die Schiene 225-6b2 an dem Horizontalschlitten 225-1 angeordnet ist, und wobei die Führungseinrichtung 225-6b eingerichtet ist, den Vertikalschlitten 225-2 im geklemmten Zustand zu führen.

Die Fertigungsanlagen 200a, 200b umfassen ferner bevorzugt eine Lagereinrichtung 260, 260a für das Werkstück 160, 170, 180, 190, und wobei die Bewegungseinheit 220, 220a, 300 eingerichtet ist, das Werkstück 160, 170, 180, 190 von der Lagereinrichtung 260, 260a zu der Grundstruktur 100 zu transportieren.

Die Fertigungsanlagen 200a, 200b umfassen ferner bevorzugt eine Lagereinrichtung 260, 260a für das Werkstück 160, 170, 180, 190 und eine weitere Bewegungseinheit 220a zum Fördern des Werkstücks 160, 170, 180, 190 von der Lagereinrichtung 260, 260a zu der Grundstruktur 100 und zur Übergabe des Werkstücks 160, 170, 180, 190 an die Bewegungseinheit 300 oder zum Ablegen des Werkstücks 160, 170, 180, 190 auf der Grundstruktur 100.

Bei den Fertigungsanlagen 200a, 200b sind die Bewegungseinheit 220a, 300 und die Lagereinrichtung 260a bevorzugt entlang der Grundstruktur 100 bewegbar gestaltet, so dass die Lagereinrichtung 260a einer Bewegung der Bewegungseinheit 220a, 300 entlang der Grundstruktur 100 folgen kann.

Die Fertigungsanlage 200d umfasst ferner bevorzugt eine Transporteinrichtung 215 zum Zuführen der Grundstruktur 100 zu der Fertigungsanlage 200d und/oder zum Abtransportieren der Grundstruktur 100 mit der mehrteiligen Struktur 150 und/oder eine weitere Transporteinrichtung 217 zum Zuführen der Werkstücke 160, 170, 180, 190 zu der Fertigungsanlage 200d.

Bei der Fertigungsanlage 200d umfasst die Lagereinrichtung 260 bevorzugt eine erste Fördereinrichtung 208 für das Werkstück 160, 170, 180, 190 parallel zur Transportrichtung 206 der weiteren Transporteinrichtung 217 und bevorzugt eine zweite Fördereinrichtung 209 für das Werkstück 160, 170, 180, 190 senkrecht zur Transportrichtung 206 der weiteren Transporteinrichtung 217.

Die Fertigungsanlage 200d umfasst ferner bevorzugt eine Zerspanungseinrichtung 310 insbesondere eine Kappsäge zur Längendimensionierung des Werkstücks 160, 170, 180, 190 und bevorzugt eine Abfalleinrichtung 320 für Abfallstücke der Zerspanungseinrichtung 310.

Die Fertigungsanlage 200d umfasst ferner bevorzugt eine Handhabungseinrichtung 330 zum Handhaben von Grundplatten 11, 11-2 mit je einer ersten Anlegeeinrichtung 10 für das Handhabungsaggregat 1, 1a, 1b, 1c und/oder weiteren Grundplatten 11-1 mit je einer ersten Anlegeeinrichtung 10a und einer zweiten Anlegeeinrichtung 20a für das Handhabungsaggregat 1, 1a, 1b, 1c und eine Lagereinrichtung 340 für die Grundplatten 11, 11-1, 11-2 und wobei die Handhabungseinrichtung 330 eingerichtet ist, eine der Grundplatten 11, 11-1, 11-2 oder der weiteren Grundplatten 11-1 zwischen der Lagereinrichtung 340 und der Bewegungseinheit 300 zu transportieren und automatisiert bei der Bewegungseinheit 300 einzuwechseln bzw. auszuwechseln.

Neben der in den nachfolgenden Patentansprüchen beanspruchten Ausführungsformen des Verfahrens 500 gibt es die folgenden bevorzugten Ausführungsformen für das Verfahren 500:
Das Verfahren 500 umfasst ferner bevorzugt den Schritt Andrücken 570 des Werkstücks 160, 170, 180, 190 an die Grundstruktur 100 zumindest zeitweise über Druck auf die Oberseite 165, 175, 185 des Werkstücks 160, 170, 180, 190 mittels der zweiten Anlegeeinrichtung 20.

Das Verfahren 500 umfasst ferner bevorzugt den Schritt Befestigen 570 des Werkstücks 160, 170, 180 an mindestens zwei Befestigungsstellen an der Grundstruktur 100.

Bei dem Verfahren 500 umfasst das Vorpositionieren 520 der ersten Anlegeeinrichtung 10, 10a in die Grundposition bevorzugt folgende Unterschritte:
- Annähern 520a der ersten Anlegeeinrichtung 10, 10a an die Grundstruktur 100 und Kontaktieren der Grundstruktur 100 durch die erste Anlegeeinrichtung 10, 10a,
- Einschalten bzw. Aktivieren 520b einer Klemmeinrichtung 225-6, so dass eine Bewegung der ersten Anlegeeinrichtung 10, 10a in der Höhenrichtung Z durch einen Verstellweg der Klemmeinrichtung 225-6 begrenzt ist, und
- Entfernen 520c der ersten Anlegeeinrichtung 10, 10a von der Grundstruktur 100 bis ein vordefinierter Abstand der ersten Anlegeeinrichtung 10, 10a zur Grundstruktur 100 von bevorzugt 1 mm bis 10 mm, weiter bevorzugt von 1 mm bis 5 mm und noch weiter bevorzugt von 1 mm bis 3 mm erreicht ist.

Bei dem Verfahren 500 erfolgt das Zuführen 530 des Werkstücks 160, 170, 180 in bzw. an die erste Anlegeeinrichtung 10, 10a und an in die zweite Anlegeeinrichtung 20, 20a bevorzugt durch eine weitere Bewegungseinheit 220a der Fertigungsanlage 200b, 200c oder durch einen Bediener B.

Das Verfahren 500 umfasst ferner mindestens einen weiteren der folgenden Schritte:
- Zuführen 501 der Grundstruktur 100 mittels einer Transporteinrichtung 215,
- Automatisiertes Positionieren und Fixieren 502 der Grundstruktur 100 auf einem Auflagetisch,
- Zuführen 503 des Werkstücks 160, 170, 180, 190 oder von noch nicht dimensionierten Werkstücken mittels einer Transporteinrichtung 217,
- Zerteilen bzw. Zersägen 504 der noch nicht dimensionierten Werkstücke auf eine vordefinierte Längenabmessung,
- Automatisiertes Zwischenlagern 505 des Werkstücks 160, 170, 180, 190 in einer Lagereinrichtung 260,
- Automatisiertes Aufbringen 507 von Markierungslinien 101 auf die Grundstruktur 100 vor dem Befestigen der mehrteiligen Struktur 150 an der Grundstruktur 100.

Das Verfahren 500 umfasst ferner bevorzugt den Schritt Abtransportieren 600 der Grundstruktur 100 mit der mehrteiligen Struktur 150 mittels der Transporteinrichtung 215 oder einer weiteren Transporteinrichtung.

Bei dem Verfahren 500 werden das Werkstück 160 und mindestens ein weiteres Werkstück 170, 180, 190 für die mehrteilige Struktur 150 bevorzugt ineinandergreifend oder überlappend oder mit Kontakt zueinander oder mit einem vordefinierten Abstand zueinander ausgerichtet und positioniert.

Bei dem Verfahren 500 ist die mehrteilige Struktur 150 bevorzugt eine Holzfassade in Form einer Nut-Feder-Schalung oder Stülp-Schalung oder Stoß-Schalung oder Lücken-Schalung oder Rhombusleistenschalung oder Trapezprofilschalung oder Skyline-Schalung.

### BEZUGSZEICHENLISTE

- A: Ausschnitt
- DW: Drehwinkel
- LA: Längenabmessung
- L1: Linie
- P1, P2, P3, P4, P5: Richtungspfeil
- QE: Querschnittsebene
- W: Werkstück
- X: Längsrichtung
- Y: Querrichtung
- Z: Höhenrichtung
- 1, 1a, 1b, 1c, 1d, 1e, 1f: Handhabungsaggregat
- 2: Längsachse
- 2a: erste Längsachse
- 2b: zweite Längsachse
- 5: Kopplungseinrichtung
- 7: Lattenschuheinrichtung
- 10, 10a, 10b: erste Anlegeeinrichtung
- 11, 11-1, 11-2: Grundplatte
- 11-1a, 11-1b: Teilplatte
- 11a, 11b, 11c, 11d: seitliche Kerben
- 11e, 11f: Bohrungen
- 12, 12-1, 12-2, 12-3, 12-4: erstes Führungselement
- 12-1a, 12-1a': Leiste
- 12-1b, 12-1b', 12-1c, 12-1c': Federelement
- 12-1d, 12-1e: Pfeil für Richtung der Federung
- 12-1f, 12-1g: Anlegefläche
- 12-1h, 12-1i, 12-1j, 12-1k: Bohrung
- 12-1h', 12-1i', 12-1j', 12-1k': Bohrung
- 12-1h", 12-1i", 12-1j", 12-1k": Bohrung
- 12-1h"', 12-1k"': Gewindebohrung
- 12-1hs, 12-1is, 12-1js, 12-1ks: Schraube
- 12-1hf, 12-1if, 12-1jf, 12-1kf: Feder
- 12-11, 12-1m, 12-1n, 12-1o: Bohrung
- 12-1p, 12-1q: Kante
- 12-1r, 12-1s: Rolle
- 12-1t, 12-1u: Pfeil für Rotationsbewegung
- 12-1v: Aussparung
- 12a, 13a: Führungsfläche
- 12b, 12b: Gegenfläche
- 12c, 13c: Lochraster
- 12-0: erste Teilplatte
- 12-1: zweite Teilplatte
- 12-2: Bohrung
- 12-3: Schwenkhalter
- 12-4: Aussparung
- 12-5: Schwenkachse
- 12-6: Bohrung
- 12-7: Haltemittel
- 12-8: zentrale Aussparung
- 12-9, 12-9a: Drehachsen
- 12-10: Rollkörper
- 12-11: seitliche Aussparung
- 12-12, 12-13: Bohrungen
- 13, 13-1, 13-2: zweites Führungselement
- 14: Längenabmessung
- 15, 15-1: Lochrasterung
- 15a, 15b: Linienmarkierungen
- 15b: Breitenmaßangaben
- 16, 16a: zentrale Aussparung der Grundplatte
- 17: seitliche Aussparung der Grundplatte
- 18, 18a: Endbereiche der Führungsflächen
- 19: Längsachse
- 20, 20a, 20b: zweite Anlegeeinrichtung
- 21, 21-1, 21-2: Anlegeabschnitt
- 21-1a, 21-1b: Teilabschnitt
- 21a, 21b, 21c, 21d, 21e: Anlegeelement
- 22: Anlegeebene
- 23: Raumbereich
- 24: Anlegebereich
- 30: Verstelleinrichtung
- 31: Antriebseinrichtung
- 36, 36a: Abstandselemente
- 37: erster Längsabschnitt
- 38: zweiter Längsabschnitt
- 39: stabförmiges Führungselement
- 40. 40-0: Tragstruktur
- 40-1, 40-11: erster endseitiger Abschnitt der Tragstruktur
- 40-2, 40-22: zweiter endseitiger Abschnitt der Tragstruktur
- 41: vordefinierter Hohlraum innerhalb der Tragstruktur
- 42: erster Haltekörper
- 43, 43-1: zweiter Haltekörper
- 44: dritter Haltekörper
- 44-1: Befestigungsmittel
- 45: vierter Haltekörper
- 46: fünfter Haltekörper
- 46-1: Aussparung
- 47, 47a: sechster Haltekörper
- 47-1, 47a-1: zentrale Aussparung
- 47-2: untere Aussparung
- 50a, 50b, 50c, 50d: Stangen der Tragstruktur
- 51a, 51b, 51c: Stangen der Verstelleinrichtung
- 52a, 52b: Stangen der Lattenschuheinrichtung
- 53a, 53b: Gewindebohrungen für Madenschrauben
- 54: Bohrung
- 55: Haltemittel
- 55-1: Kopf
- 55-2: zylindrischer Körper
- 55-3: Mutter
- 56: seitliche Aussparung
- 57: Haltemittel
- 60: Bearbeitungseinrichtung
- 61: Magazin für Befestigungsmittel
- 62: Ausgabemündung
- 65: Sensor
- 66: Halter
- 70: Halteeinrichtung
- 71: erster Halteabschnitt
- 71a: erster Saugnapf
- 71b: erste Halterung
- 71c: erste Ansaugleitung
- 71d: erster Ansaugstutzen
- 72: zweiter Halteabschnitt
- 72a: zweiter Saugnapf
- 72b: zweite Halterung
- 72c: zweite Ansaugleitung
- 72d: zweiter Ansaugstutzen
- 80: Schwenk- und Translationseinrichtung
- 81: Translationseinrichtung
- 81-1: Schlitten
- 81-2: Pfeil
- 81-3: lineare Führung
- 82: Translationseinrichtung
- 82-1: Schlitten
- 82-2: Pfeil
- 82-3: lineare Führung
- 83: Rotationseinrichtung
- 83-1: Rotationsachse
- 83-2: Pfeil
- 83-3: Haltekörper
- 84: Bearbeitungsstelle
- 100: Grundstruktur
- 101: Untergurt
- 102: Obergurt
- 103, 104, 105: Wandpfosten bzw. Stiele
- 107, 108: Platten
- 120: Konterlattung
- 120a, ..., 120n: Latten
- 125: Markierungslinien
- 130: Traglattung
- 140: Latte
- 150: mehrteilige Struktur
- 160, 170, 180, 190: Werkstück
- 161, 171, 171a, 181, 181a, 191: Längsseite des Werkstücks
- 165, 175, 185, 195: Oberseite des Werkstücks
- 167, 177, 187, 197: vordefinierte Dickenabmessung des Werkstücks
- 176a, 176b, 176c, 176d, 176e: Bereiche auf der Oberseite des zweiten Werkstücks
- 178: Längsachse
- 179: Querachse
- 180: vordefinierte maximale Dicke der Werkstücke
- 181, 182, 183, 184: Endseiten des Werkstücks
- 200, 200a, 200b, 200c, 200d: Fertigungsanlage
- 202, 204, 206: Transportrichtung
- 208,209: Fördereinrichtung
- 210, 210a: Transporteinrichtung
- 211, 212: Schiene
- 215, 217: Transporteinrichtung
- 220, 220a: Bewegungseinheit
- 222, 222a: weiteres Handhabungsaggregat
- 223: erster Vertikalträger
- 224: Horizontalträger
- 225: Aggregateträger
- 225-1: Horizontalschlitten
- 225-2: Vertikalschlitten
- 225-3: Kopplungseinrichtung
- 225-4: Schienensystem
- 225-4a: Schiene
- 225-5: Schienenführungssystem
- 225-5a: Schienenführung
- 225-6: gefederte Schienenklemmung
- 225-6a: Klemmeinheit bzw. Klemmschuh
- 225-6b: lineare Führungseinrichtung
- 225-6b1: Schlitten
- 225-6b2: Schiene
- 225-6d: Federungsmittelteil
- 225-6e, 225-6f: Federeinheit
- 225-6e1, 225-6f1: Hülse
- 225-6e2, 225-6f2: Feder
- 225-6g, 225-6h: Federungsendteil bzw. Anschlag
- 225-7: Antriebseinrichtung
- 226: Knickarm
- 230: Auflagetisch
- 240, 240a, 240, 240c: Steuerungseinrichtung
- 250: Lagersystem
- 251, 252: Handhabungsaggregat
- 253: erster Vertikalträger
- 254: zweiter Vertikalträger
- 255: Horizontalträger
- 256, 257, 258: Halterungen
- 260: stationäre Lagereinrichtung für Werkstücke
- 260a: bewegbare Lagereinrichtung für Werkstücke
- 270: Bedienungseinrichtung
- 271, 272, 273, 274: Steuerleitung
- 275: Cloud mit Produktionssteuerung
- 276, 277, 278, 279: Steuerleitung
- 280: Transporteinrichtung
- 281: erste Schiene
- 282: zweite Schiene
- 290: Transporteinrichtung
- 291: Schiene
- 300: Bewegungseinheit
- 301: Knickarm
- 310: Zerspanungseinrichtung
- 320: Abfalleinrichtung
- 330: Handhabungseinrichtung
- 340: Lagereinrichtung für vorkonfektionierte Grundplatten
- 500: Verfahren
- 501: Zuführen Grundstruktur
- 502: Positionieren und Fixieren Grundstruktur
- 503: Zuführen Werkstücke
- 504: Zerteilen/Zersägen/Dimensionieren Werkstücke
- 505: Zwischenlagern Werkstücke
- 506: Entsorgen Abfallstücke
- 507: Aufbringen von Markierungslinien auf Grundstruktur
- 510: Anpassen (Verstellen bzw. Austauschen) erste Anlegeeinrichtung
- 520: Vorpositionieren des Handhabungsaggregats
- 520a: Annähern der ersten Anlegeeinrichtung bzw. des Handhabungsaggregats an die Grundstruktur
- 520b: Einschalten einer Klemmeinrichtung
- 520c: Leichtes Anheben der ersten Anlegeeinrichtung bzw. des Handhabungsaggregats von Grundstruktur
- 530: Zuführen eines Werkstücks
- 540: Verstellen der ersten Anlegeeinrichtung durch gefederte Führung
- 550: Absenken Handhabungsaggregat
- 560: Verstellen der Relativposition zwischen der ersten Anlegeeinrichtung und der zweiten Anlegeeinrichtung zum Einnehmen einer Arbeitsstellung
- 570: Entlangfahren mit der ersten Anlegeeinrichtung und der zweiten Anlegeeinrichtung am Werkstück zur Positionierung und Ausrichtung des Werkstücks und bevorzugt zur Befestigung des Werkstücks
- 580: Überprüfung, ob Ende des Werkstücks erreicht ist
- 590: Überprüfung, ob mehrteilige Struktur komplett ist
- 600: Deaktivieren Klemmeinrichtung
- 610: Anheben Handhabungsaggregat und Verstellen der Relativposition zwischen der ersten Anlegeeinrichtung und der zweiten Anlegeeinrichtung zum Einnehmen einer Grundposition
- 620: Abtransportieren Grundstruktur
- 700, 701: Verfahrweg des Handhabungsaggregats

## Patentansprüche

1. Handhabungsaggregat (1, 1a, 1b, 1c, 1d, 1e, 1f) zum Positionieren bzw. Ausrichten eines Werkstücks (160, 170, 180, 190) auf einer Grundstruktur (100), insbesondere zum Befestigen einer mehrteiligen Struktur (150) aus Holzelementen und/oder Holzwerkstoffelementen auf einem Holzrahmenelement (100), umfassend:
- eine erste Anlegeeinrichtung (10), wobei die erste Anlegeeinrichtung (10) eingerichtet ist, zumindest an einer Längsseite (161, 171, 181) des Werkstücks (160, 170, 180, 190) in Anlage gebracht zu werden, um das Werkstück (160, 170, 180, 190) in einer Längsrichtung (X) auf der Grundstruktur (100) zu positionieren bzw. auszurichten, und/oder
- eine zweite Anlegeeinrichtung (20), wobei die zweite Anlegeeinrichtung (20) eingerichtet ist, an einer Oberseite (165, 175, 185) des Werkstücks (160, 170, 180, 190) in Anlage gebracht zu werden, um das Werkstück (160, 170, 180, 190) in einer Höhenrichtung (Z) auf der Grundstruktur (100) zu positionieren bzw. auszurichten,
**dadurch gekennzeichnet, dass** die erste Anlegeeinrichtung (10) in einer Querrichtung (Y) anpassbar an eine vordefinierte Breite des Werkstücks (160, 170, 180, 190) ausgestaltet ist und/oder die erste Anlegeeinrichtung (10) und/oder die zweite Anlegeeinrichtung (20) in der Höhenrichtung (Z) relativ zueinander verstellbar ausgestaltet ist bzw. sind.

2. Handhabungsaggregat (1, 1a, 1b, 1c, 1d, 1e, 1f) nach Anspruch 1, wobei die erste Anlegeeinrichtung (10) mindestens ein Führungselement (12, 13) mit einer Führungsfläche (12a, 13a) umfasst, um mit der mindestens einen Längsseite (161, 171, 181) des Werkstücks (160, 170, 180, 190) in Anlage zu kommen, wobei die zweite Anlegeeinrichtung (20) einen Anlegeabschnitt (21, 21-1) - insbesondere ausgestaltet als Rollkörper und/oder Gleitkörper - umfasst, um mit der Oberseite (165, 175, 185, 195) des zu Werkstücks (160, 170, 180, 190) in Anlage zu kommen, wobei der Anlegeabschnitt (21) eine im Wesentlichen parallel zur Oberseite (165, 175, 185, 195) des Werkstücks (160, 170, 180, 190) verlaufende Anlegeebene (22) definiert, wobei die Anlegeebene (22) bis auf das Führungselement (12, 13) eine erste Grenzfläche des Handhabungsaggregats (1, 1a, 1b) definiert, wobei eine der Führungsfläche (12a, 13a) gegenüberliegenden Gegenfläche des Führungselements (12, 13) eine zweite Grenzfläche des Handhabungsaggregats (1, 1a, 1b, 1d, 1e, 1f) definiert, wobei die erste Grenzfläche und die zweite Grenzfläche einen Raumbereich (23) begrenzen, in den ein bereits aus einem weiteren Werkstück (160, 170, 180, 190) gefertigter Teil der mehrteiligen Teilstruktur (150) beim Positionieren bzw. Positionieren des Werkstücks (170, 180, 190, 190) gelangen kann.

3. Handhabungsaggregat (1, 1a, 1c, 1f) nach einem der vorhergehenden Ansprüche, wobei das Handhabungsaggregat (1, 1a, 1b, 1f) ferner eine geführte Verstelleinrichtung (30) umfasst, die dazu eingerichtet ist, eine Relativposition der ersten Anlegeeinrichtung (10, 10b) und der zweiten Anlegeeinrichtung (20, 20b) zueinander in der Höhenrichtung einzustellen.

4. Handhabungsaggregat (1, 1a, 1c, 1f) nach Anspruch 3, wobei die Verstelleinrichtung (30) derart eingerichtet ist, eine erste Endlage und eine zweite Endlage einzunehmen, wobei bei der ersten Endlage die zweite Anlegeeinrichtung (20, 20b) gegenüber der ersten Anlegeeinrichtung (10, 10b) zu einem inneren Bereich der Vorrichtung (1, 1a, 1b) zurückversetzt ist, so dass bevorzugt die zweite Anlegeeinrichtung (20, 20b) in der Höhenrichtung angrenzend zu der Führungsfläche (12a, 13a) des mindestens einen Führungselements (12, 13, 122, 132) der ersten Anlegeeinrichtung (10, 10b) angeordnet ist und wobei bei der zweiten Endlage die zweite Anlegeeinrichtung (20, 20b) zu einem äußeren Bereich der des Handhabungsaggregats (1, 1a, 1b, 1f) nach außen verschoben ist, so dass bevorzugt die zweite Anlegeeinrichtung (20, 20b) in der Höhenrichtung neben der Führungsfläche (12a, 13a) des mindestens einen Führungselements (12, 13, 122, 132) der ersten Anlegeeinrichtung (10, 10b) angeordnet ist.

5. Handhabungsaggregat (1, 1a, 1c, 1f) nach Anspruch 4, wobei ein vordefinierter maximaler Hub der Verstelleinrichtung (30) zwischen der ersten Endlage und der zweiten Endlage durch eine maximale vordefinierte Dicke zu positionierender und auszurichtender Werkstücke (160, 170, 180, 190) in der Höhenrichtung abzüglich einer vordefinierten Länge von 5 mm bis 15 mm weiter bevorzugt von 8 mm bis 12 mm und noch weiter bevorzugt von 9,5 mm bis 10,5 mm bestimmt wird.

6. Handhabungsaggregat (1, 1a, 1b, 1c, 1d, 1e, 1f) nach einem der vorhergehenden Ansprüche, wobei das Handhabungsaggregat (1, 1a, 1b, 1d, 1e, 1f) ferner eine Tragstruktur (40) und eine Kopplungseinrichtung (5) bevorzugt an einem ersten Haltekörper (42) der Tragstruktur (40) zur Kopplung des Handhabungsaggregats (1, 1a, 1b, 1c, 1d, 1e, 1f) mit einer externen Bewegungseinheit (220, 220a, 300) umfasst, wobei die Kopplungseinrichtung (5) an einem ersten endseitigen Abschnitt (40-1) der Tragstruktur (40) angeordnet ist und die erste Anlegeeinrichtung (10, 10a, 10b) und die zweite Anlegeeinrichtung (20, 20a, 20b) an einem zweiten endseitigen Abschnitt (40-2) der Tragstruktur (40) angeordnet sind, und wobei die erste Anlegeeinrichtung (10, 10a, 10b) an einem zweiten Haltekörper (43) der Tragstruktur (40) angeordnet ist.

7. Handhabungsaggregat (1, 1a, 1c, 1d, 1e, 1f) nach Anspruch 6, wobei die Tragstruktur (40) mindestens eine Stange (50a, 50b, 50c, 50d) umfasst, welche sich insbesondere entlang einer Längsachse (2, 2b) des Handhabungsaggregats (1, 1a, 1b, 1d, 1e, 1f) erstreckt und bevorzugt an dem ersten Haltekörper (42) und dem zweiten Haltekörper (43-43-1) angeordnet ist, und wobei die Verstelleinrichtung (30) ausgestaltet ist, die zweite Anlegeeinrichtung (20) entlang der mindestens einen Stange (50a, 50b, 50c, 50d) zu führen und zu verstellen.

8. Handhabungsaggregat (1, 1a, 1c, 1f) nach Anspruch 7, wobei das Handhabungsaggregat (1, 1a, 1c) ferner eine auswechselbare Bearbeitungseinrichtung (60) zur Bearbeitung des Werkstücks (160, 170, 180, 190) umfasst, und wobei die Tragstruktur (40) einen vordefinierten bevorzugt in der Längsachse (2, 2b) des Handhabungsaggregats (1, 1a, 1c) verstellbaren Hohlraum (41) innerhalb der Vorrichtung (1, 1a, 1b, 1f) für eine Anpassung an eine Längsausdehnung der Bearbeitungseinrichtung (60) ausbildet, wobei die Bearbeitungseinrichtung (60) bevorzugt an der Verstelleinrichtung (30) angeordnet ist und wobei die Bearbeitungseinrichtung (60) bevorzugt eine Befestigungseinrichtung zum Befestigen des Werkstücks (160, 170, 180, 190) an der Grundstruktur (100) ist.

9. Handhabungsaggregat (1, 1a, 1c, 1f) nach Anspruch 8, wobei die Tragstruktur (40) einen vierten Haltekörper (45) umfasst, wobei die Antriebseinrichtung (31) zwischen dem dritten Haltekörper (44) und dem vierten Haltekörper (45) angeordnet ist, und wobei die Antriebseinrichtung (31) eingerichtet ist, durch eine Verschiebung des vierten Halteköpers (45) entlang der mindestens einen Stange (50a, 50b, 50c, 50d) die zweite Anlegeeinrichtung (20) und bevorzugt die Bearbeitungseinrichtung (60) in der Höhenrichtung (Z) zu verschieben.

10. Handhabungsaggregat (1, 1a, 1c, 1f) nach Anspruch 9, wobei die Tragstruktur (40) ferner einen fünften Haltekörper (46) und mindestens eine weitere Stange (51a, 51b, 51c) umfasst, wobei die mindestens eine weitere Stange (51a, 51b, 51c) an dem vierten Haltekörper (45) mit einem ersten vordefinierten Längsabschnitt (37) und an dem fünften Haltekörper (46) mit einem zweiten vordefinierten Längsabschnitt (38) verklemmbar ist, wobei die Verstelleinrichtung (30) ferner mindestens ein Abstandselement (36, 36a) zur Überbrückung des vordefinierten Hohlraums (41) umfasst, wobei das mindestens eine Abstandselement (36, 36a) mit einem oberen Ende an dem fünften Haltekörper (46) angeordnet ist, und wobei die zweite Anlegeeinrichtung (20) an einem unteren Ende des mindestens einen Abstandselements (36, 36a) angeordnet ist.

11. Handhabungsaggregat (1, 1a, 1b, 1c, 1f) nach einem der vorhergehenden Ansprüche 6 bis 10, wobei die Tragstruktur (40) ferner mindestens eine weitere Stange (52a, 52b) und einen sechsten Haltekörper (47, 47a) umfasst, wobei der sechste Haltekörper (47, 47a) mittels der mindestens einen weiteren Stange (52a, 52b) an dem zweiten Haltekörper (43) angeordnet ist, wobei die erste Anlegeeinrichtung (10) insbesondere auswechselbar an dem sechsten Haltekörper (47, 47a) angeordnet ist, wobei die erste Anlegeeinrichtung (10), der sechste Haltekörper (47, 47a) und die mindestens eine weitere Stange (52a, 52b) eine Lattenschuhbaugruppe bilden, und wobei die Lattenschuhbaugruppe auswechselbar an dem zweiten Haltekörper (43) angeordnet ist.

12. Fertigungsanlage (200, 200a, 200b, 200c, 200d) zum Positionieren bzw. Ausrichten eines Werkstücks (160, 170, 180, 190) auf einer Grundstruktur (100), insbesondere zum Befestigen einer mehrteiligen Struktur (150) aus Holzelementen und/oder Holzwerkstoffelementen auf einem Holzrahmenelement (100) umfassend ein Handhabungsaggregat (1, 1a, 1b, 1c, 1d, 1e, 1f) nach einem der vorhergehenden Ansprüche und eine Bewegungseinheit (220, 220a, 300), wobei die Bewegungseinheit (220, 220a, 300) entlang einer Längsrichtung der Grundstruktur (100) verfahrbar angeordnet ist und wobei das Handhabungsaggregat (1, 1a, 1b, 1c, 1d, 1e, 1f) an der Bewegungseinheit (220, 220a, 300) zum Positionieren und Bewegen des Handhabungsaggregats (1, 1a, 1b, 1c) in Bezug zur Grundstruktur (100) angeordnet ist.

13. Verfahren (500) zum Positionieren bzw. Ausrichten eines Werkstücks (160, 170, 180, 190) auf einer Grundstruktur (100), insbesondere zum Befestigen einer mehrteiligen Struktur (150) aus Holzelementen und/oder Holzwerkstoffelementen auf einem Holzrahmenelement (100), insbesondere mittels einem Handhabungsaggregat (1, 1a, 1b, 1c) nach einem der Ansprüche 1 bis 11 oder mittels einer Fertigungsanlage (200, 200a, 200b, 200c, 200d) nach Anspruch 12, umfassend die folgenden Schritte:
- Positionieren und Ausrichten (570) des Werkstücks (160, 170, 180, 190) auf der Grundstruktur (100) in einer Längsrichtung (X) durch Anlegen einer ersten Anlegeeinrichtung (10) zumindest an einer Längsseite (161, 171, 181) des Werkstücks (160, 170, 180, 190), und
- Positionieren und Ausrichten (570) des Werkstücks (160, 170, 180, 190) auf der Grundstruktur (100) in einer Höhenrichtung (Z) durch Anlegen einer zweiten Anlegeeinrichtung (20) an einer Oberseite (165, 175, 185) des Werkstücks (160, 170, 180, 190),
**dadurch gekennzeichnet, dass** das Verfahren (500) ferner die Schritte umfasst:
- Anpassen (510, 540) der ersten Anlegeeinrichtung (10) in einer Querrichtung (Y) an eine vordefinierte Breite des Werkstücks (160, 170, 180, 190), und/oder
- Verstellen (560, 610) der ersten Anlegeeinrichtung (10) und der zweiten Anlegeeinrichtung (20) relativ zueinander in der Höhenrichtung (Z).

14. Verfahren (500) nach Anspruch 13 ferner umfassend die Schritte:
- Vorpositionieren (520) der ersten Anlegeeinrichtung (10, 10a) in einer Grundposition zum Einführen bzw. Anlegen des Werkstücks (160, 170, 180) in bzw. an die erste Anlegeeinrichtung (10, 10a), und
- Zuführen (540) des Werkstücks (160, 170, 180) in bzw. an die erste Anlegeeinrichtung (10, 10a) und an in die zweite Anlegeeinrichtung (20, 20a),
wobei das Verstellen (560) der ersten Anlegeeinrichtung (10) und der zweiten Anlegeeinrichtung (20) relativ zueinander in der Höhenrichtung (Z) durch ein Verstellen der zweiten Anlegeeinrichtung (20, 20a) von einer Grundstellung, bei der die zweite Anlegeeinrichtung (20) keinen Kontakt zur Oberseite (165, 175, 185) des Werkstücks (160, 170, 180) hat, zu einer Arbeitsstellung, bei der die zweite Anlegeeinrichtung (20) Kontakt zur Oberseite (165, 175, 185) des Werkstücks (160, 170, 180) hat, erfolgt, und wobei das Positionieren und Ausrichten (570) des Werkstücks (160, 170, 180, 190) auf der Grundstruktur (100) in der Längsrichtung (X) und der Höhenrichtung (Z) durch ein Entlangbewegen der ersten Anlegeeinrichtung (10, 10a) und der zweiten Anlegeeinrichtung (20, 20a) am Werkstück (160, 170, 180, 190) in Längsrichtung des Werkstücks (160, 170, 180, 190) erfolgt.

15. Verfahren (500) nach Anspruch 14, wobei das Verstellen der zweiten Anlegeeinrichtung 20, 20a) von der Grundstellung zu der Arbeitsstellung durch ein Drücken der zweiten Anlegeeinrichtung (20, 20a) gegen die Oberseite des Werkstücks (160, 170, 180, 190) mittels einer Verstelleinrichtung (30) des Handhabungsaggregat (1, 1a, 1b, 1c) erfolgt und dadurch eine Anhebung der ersten Anlegeeinrichtung (10, 10a) gegenüber der Oberseite des Werkstücks (160, 170, 180, 190) bewirkt wird.

16. Verfahren (500) nach Anspruch 14 oder 15, wobei das Positionieren (560) der zweiten Anlegeeinrichtung (20, 20a) in die Arbeitsstellung synchron mit einer Positionierung einer Bearbeitungseinrichtung (60) zur Bearbeitung des Werkstücks (160, 170, 180, 190) in eine Arbeitsposition erfolgt.

17. Verfahren (500) nach einem der Ansprüche 14 bis 16, wobei das Positionieren (560) der ersten Anlegeeinrichtung (10, 10a) und der zweiten Anlegeeinrichtung (20, 20a) in die Arbeitsstellung derart erfolgt, dass die erste Anlegeeinrichtung (10, 10a) das Werkstück (160 170, 180, 190) zumindest an einer Längsseite (161, 161a, 171, 181, 191) des Werkstücks (160 170, 180, 190) in der Höhenrichtung (Z) im Bereich von 5 bis 15 mm, bevorzugt von 7 bis 13 mm und weiter bevorzugt von 9 bis 11 mm bevorzugt direkt benachbart zur Oberseite des Werkstücks (160 170, 180, 190) kontaktiert.
